# EUROPEAN PATENT APPLICATION

(11) **EP 4 797 811 A1**
(43) Date of publication of application: **26.08.2026**
(21) Application number: 24887775.5
(22) Date of filing: 25.10.2024
(51) Int. Cl.: H04W 52/02

(54) **COMMUNICATION METHOD AND APPARATUS**

(30) Priority: 10.11.2023 CN 202311502573
(71) Applicant: HUAWEI TECHNOLOGIES CO., LTD., Shenzhen 518129 (CN)
(72) Inventor: LIU, Nannan, Shenzhen, Guangdong 518129 (CN); CHANG, Junren, Shenzhen, Guangdong 518129 (CN); LI, Bingzhao, Shenzhen, Guangdong 518129 (CN); XIE, Xi, Shenzhen, Guangdong 518129 (CN)
(74) Representative: Grünecker Patent- und Rechtsanwälte PartG mbB
(86) International application number: PCT/CN2024/127414
(87) International publication number: WO 2025/098162

(57) **Abstract**

This application provides a communication method and apparatus, and relates to the field of communication technologies. The method includes: A first communication apparatus (for example, a terminal device) may obtain indication information, where the indication information indicates a first region set used to send first system information and/or a second region set in which the first system information is not sent. In this way, the first communication apparatus may clearly determine regions in which the first system information is sent, and regions in which the first system information is not sent. The first communication apparatus may not monitor the first system information in the regions in which the first system information is not sent, thereby reducing a quantity of invalid monitoring times of the first communication apparatus, and saving power.

## Description

### CROSS-REFERENCE TO RELATED APPLICATIONS

This application claims priority to Chinese Patent Application No. 202311502573.X, filed with the China National Intellectual Property Administration on November 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

System information (system information, SI) includes a master system information block (master information block, MIB) and several system information blocks (system information blocks, SIBs). The SIBs are classified into minimum system information (minimum SI, MSI) and other system information (other SI, OSI). The MSI includes a SIB1, and the SIB1 includes scheduling information of the OSI. After receiving the SIB1, a terminal device receives the OSI based on the scheduling information of the OSI in the SIB1. The terminal device keeps attempting to receive the OSI. This undoubtedly results in significant power consumption of the terminal device.

### SUMMARY

Embodiments of this application provide a communication method and apparatus, to save power of a device.

According to a first aspect, an embodiment of this application provides a communication method. The method may be performed by a first communication apparatus. The first communication apparatus may be, for example, a terminal device, or a software module or a hardware module (like a chip) in the terminal device. The method includes: obtaining (or receiving) indication information, where the indication information includes information about a first region set and/or information about a second region set, the first region set includes a region in which first system information is sent, and the second region set includes a region in which the first system information is not sent. Optionally, the first communication apparatus further determines the first region set and/or the second region set. That the first communication apparatus determines the first region set and/or the second region set may alternatively be described as: determining to send the first system information in the first region set and/or determining to skip sending the first system information in the second region set, or determining to monitor (or receive) the first system information in the first region set and/or determining to skip monitoring (or receiving) the first system information in the second region set.

It should be understood that both the first region set and the second region set may belong to a cell (for example, a first cell) of a second communication apparatus. Certainly, in addition to the region in which the first system information is sent and the region in which the first system information is not sent, the first cell may further include another region. This is not limited herein. The region in embodiments of this application may be a physical region obtained by dividing signal coverage of the second communication apparatus, or may be a region corresponding to a synchronization signal. For a cell, a region used to send the first system information may change with time, or may be fixed. This is not limited herein. The first system information may be, for example, OSI other than a SIB1, for example, a SIB2 or a SIB19.

In this embodiment of this application, the first communication apparatus may clearly determine regions in which the first system information is to be sent and/or regions in which the first system information is not sent. Therefore, the first communication apparatus may not need to monitor the first system information in the region in which the first system information is not sent, thereby reducing a quantity of invalid monitoring times of the first communication apparatus, and helping save power of the first communication apparatus.

In a possible implementation, the method further includes: receiving the first system information in the first region set; and/or skipping receiving the first system information in the second region set, or ignoring scheduling information of the first system information in the second region set.

In the foregoing implementation, the first communication apparatus may specifically monitor the first system information based on an indication of the indication information, thereby reducing a quantity of invalid monitoring times and saving energy. In addition, for a network side (for example, the second communication apparatus), the first system information may not need to be sent in all regions of a cell. This improves flexibility of sending the first system information, and also reduces a transmission load of a network.

In a possible implementation, before receiving the first system information in the first region set, the method further includes: determining that a first condition is satisfied, where the first condition includes at least one of the following: the first system information is not obtained in the first cell, and both the first region set and the second region set belong to the first cell; it is determined that system information changes; the first communication apparatus does not have a valid version of the first system information; the first communication apparatus needs the first system information; or the first communication apparatus enters the region in the first region set.

In the foregoing implementation, the first communication apparatus may receive the first system information when the first condition is satisfied. This can reduce a quantity of times of receiving the first system information and a probability of repeatedly receiving the first system information, and also helps save power of the first communication apparatus.

In a possible implementation, the first region set and the second region set correspond to a same SIB1 and/or SIB1bis. Certainly, a SIB1 corresponding to the first region set may alternatively be different from a SIB1 corresponding to the second region set.

In a possible implementation, the indication information is carried in one of the following information: a first SIB1; a first SIB1bis; a first MIB; or a first DCI.

In the foregoing implementation, the indication information may be carried in existing information, so that a quantity of times of information transmission in a network can be reduced, and transmission resource overheads of the first communication apparatus and the second communication apparatus can be reduced.

In a possible implementation, the first SIB1, the first SIB1bis, the first MIB, or the first DCI is associated with the first cell, and both the first region set and the second region set belong to the first cell. It may be understood that the indication information may be carried in the first SIB1, the first SIB1bis, the first MIB, or the first DCI corresponding to the first cell.

According to a second aspect, an embodiment of this application provides a communication method. The method may be performed by a first communication apparatus. The first communication apparatus may be, for example, a terminal device, or a software module or a hardware module (like a chip) in the terminal device. The method includes: obtaining (or receiving) indication information, where the indication information includes information about a first synchronization signal block SSB set and/or information about a second SSB set, the first SSB set includes an SSB associated with first system information, and the second SSB set includes an SSB that is not associated with the first system information. Optionally, the first communication apparatus further determines the first SSB set, and/or determines the second SSB set.

It should be understood that the SSB may be one or more of the following: a synchronization signal (synchronization signal, SS), a synchronization signal block (synchronization signal block, SSB), or a synchronization signal and PBCH block (synchronization signal and PBCH block, SS/PBCH block/SSB). The SSB in embodiments of this application may alternatively be replaced with a synchronization signal, a synchronization signal block (synchronization signal block, SSB), a synchronization signal and PBCH block (synchronization signal and PBCH block, SS/PBCH block/SSB), or the like. This is not limited herein. The SSB associated with the first system information may be understood as that a PDCCH monitoring occasion (or a monitoring occasion, or a monitoring opportunity) corresponding to the SSB is used to send the first system information. The SSB that is not associated with the first system information may be understood as that a PDCCH monitoring occasion corresponding to the SSB is not used to send the first system information.

In this embodiment of this application, the first communication apparatus may determine, based on the indication information, SSBs in which the first system information is correspondingly sent and SSBs in which the first system information is correspondingly not sent. The first communication apparatus may not monitor the first system information in the SSB in which the first system information is not sent, thereby reducing invalid monitoring of the first communication apparatus, and saving power.

In a possible implementation, the method further includes: receiving the first system information in the first SSB set; and/or skipping receiving the first system information in the second SSB set, or ignoring scheduling information of the first system information in the second SSB set.

In a possible implementation, before receiving the first system information in the first SSB set, the method further includes: determining that a first condition is satisfied, where the first condition includes at least one of the following: the first system information is not obtained in a first cell, and both the first SSB set and the second SSB set belong to the first cell; it is determined that system information changes; the first communication apparatus does not have a valid version of the first system information; the first communication apparatus needs the first system information; or the first communication apparatus enters a region corresponding to the first SSB set.

In a possible implementation, the first SSB set and the second SSB set correspond to a same SIB1 and/or SIB1bis. Certainly, a SIB1 corresponding to the first SSB set may alternatively be different from a SIB1 corresponding to the second SSB set.

In a possible implementation, the indication information is carried in one of the following information: a first SIB1; a first SIB1bis; a first MIB; or a first DCI.

In a possible implementation, the first SIB1, the first SIB1bis, the first MIB, or the first DCI is associated with the first cell, and both the first SSB set and the second SSB set belong to the first cell. It may be understood that the indication information may be carried in the first SIB1, the first SIB1bis, the first MIB, or the first DCI corresponding to the first cell.

According to a third aspect, an embodiment of this application provides a communication method. The method may be performed by a first communication apparatus. The first communication apparatus may be, for example, a terminal device, or a software module or a hardware module (like a chip) in the terminal device. The method includes: obtaining first data in a first region, where the first data includes a first SIB1 or a first SIB1bis; obtaining second data in a second region, where the second data includes a second SIB1 or a second SIB1bis; and if both the first region and the second region belong to a first region set or belong to a second region set, determining that the second data is retransmitted data; or if one of the first region and the second region belongs to a first region set, and the other of the first region and the second region belongs to a second region set, determining that the second data is newly transmitted data, where the first region set includes a region in which first system information is sent, and the second region set includes a region in which the first system information is not sent. If the first data includes the first SIB1, the second data includes the second SIB1; or the first data includes the first SIB1bis, and the second data includes the second SIB1bis.

It should be understood that both the first region set and the second region set may belong to a cell (for example, a first cell) of a second communication apparatus. Certainly, in addition to the region in which the first system information is sent and the region in which the first system information is not sent, the first cell may further include another region. This is not limited herein. Correspondingly, the first region and the second region also belong to one cell. The region in embodiments of this application may be a physical region obtained by dividing signal coverage of the second communication apparatus, or may be a region corresponding to a synchronization signal.

In this embodiment of this application, the first communication apparatus may determine, based on whether a region corresponding to the first data and a region corresponding to the second data belong to a same region set, whether the second data is newly transmitted or retransmitted. This can accurately determine whether the second data is newly transmitted or retransmitted, thereby increasing a success rate of decoding the second data by the first communication apparatus.

In a possible implementation, the first region set and the second region set correspond to different SIB1s or SIB1bis.

In the foregoing implementation, the second communication apparatus may send different SIB1s or SIB1bis in different regions of a cell, thereby improving flexibility of sending the SIB1 or the SIB1bis. In addition, because content of the SIB1s or the SIB1bis in different regions is different, the first communication apparatus may determine, based on the content of the SIB1 or the SIB1bis, whether to monitor the first system information. This helps save power of the first communication apparatus.

In a possible implementation, the method further includes: skipping receiving the first system information in the first region; and/or receiving the first system information in the second region. In this case, the first region belongs to the second region set, and the second region belongs to the first region set.

In the foregoing implementation, the first communication apparatus may determine, based on a region set to which the first region or the second region belongs, whether to monitor the first system information, thereby reducing a case in which the first system information is monitored invalidly.

In a possible implementation, receiving the first system information in the second region includes: if it is determined, based on the first SIB1 or the first SIB1bis, that the first system information changes, determining, based on the second data, to receive scheduling information of the first system information, and receive the first system information based on the scheduling information of the first system information; or if the first information is not received in the first region and the first information is received in the second region, receiving the first system information in the second region, where the first information indicates to send the first system information.

In the foregoing implementation, the first communication apparatus may selectively receive the first system information based on a specific case, thereby reducing a case in which the first system information is repeatedly received, and reducing a processing amount of the first communication apparatus.

In a possible implementation, the method further includes: obtaining indication information, where the indication information includes information about the first region set and/or information about the second region set.

In the foregoing implementation, how the first communication apparatus determines the first region set and/or the second region set is provided. In addition, the first region set and/or the second region set may alternatively be preconfigured or predefined for the first communication apparatus.

In a possible implementation, the indication information is carried in one of the following information: a third SIB1, a first SIB1bis, a first MIB, or a first DCI. The third SIB may be different from the first SIB1, or may be the same as the first SIB1. The third SIB1bis may be different from the first SIB1bis, or may be the same as the first SIB1bis.

In a possible implementation, the third SIB1, the third SIB1bis, the first MIB, or the first DCI is associated with the first cell, and both the first region set and the second region set belong to the first cell.

According to a fourth aspect, an embodiment of this application provides a communication method. The method may be performed by a first communication apparatus. The first communication apparatus may be, for example, a terminal device, or a software module or a hardware module (like a chip) in the terminal device. The method includes: obtaining first data for a first SSB, where the first data includes a first SIB1 (or SIB1bis); obtaining second data for a second SSB, where the second data includes a second SIB1 (or SIB1bis); and if both the first SSB and the second SSB are associated with a first SSB set or are associated with a second SSB set, determining that the second data is retransmitted data; or if one of the first SSB and the second SSB belongs to a first SSB set, and the other of the first SSB and the second SSB belongs to a second SSB set, determining that the second data is newly transmitted data, where the first SSB set includes an SSB associated with first system information, and the second SSB set includes an SSB that is not associated with the first system information.

It should be understood that, obtaining the first data for the first SSB may be understood as sending/receiving the first data on a PDCCH monitoring occasion corresponding to the first SSB. Obtaining the second data for the second SSB may be understood as sending/receiving the second data on the PDCCH monitoring occasion corresponding to the second SSB.

In a possible implementation, the first SSB set and the second SSB set correspond to different SIB1s or SIB1bis.

In a possible implementation, the method further includes: skipping receiving the first system information for the first SSB; and/or receiving the first system information for the second SSB. In this case, the first SSB belongs to the second SSB set, and the second SSB belongs to the first SSB set.

In a possible implementation, receiving the first system information for the second SSB includes: if it is determined, based on the first SIB1 or the first SIB1bis, that the first system information changes, determining, based on the second data, to receive scheduling information of the first system information, and receive the first system information based on the scheduling information of the first system information; or if the first information is not received for the first SSB and the first information is received for the second SSB, receiving the first system information for the second SSB, where the first information indicates to send the first system information.

In a possible implementation, the method further includes: obtaining indication information, where the indication information includes information about the first SSB set and/or information about the second SSB set.

In a possible implementation, the indication information is carried in one of the following information: a third SIB1, a first SIB1bis, a first MIB, or a first DCI. The third SIB may be different from the first SIB1, or may be the same as the first SIB1. The third SIB1bis may be different from the first SIB1bis, or may be the same as the first SIB1bis.

In a possible implementation, the third SIB1, the third SIB1bis, the first MIB, or the first DCI is associated with a first cell, and both the first SSB set and the second SSB set correspond to the first cell.

According to a fifth aspect, an embodiment of this application provides a communication method. The method may be performed by a second communication apparatus. The second communication apparatus may be, for example, a network device, a software module or a hardware module (for example, a chip) in the network device, or a component or apparatus that implements a part or all of functions of the network device. The network device may be, for example, a satellite, a base station, or a satellite base station. The method includes: determining a first region set in which first system information is sent, and/or determining a second region set in which the first system information is not sent; and sending indication information, where the indication information includes information about the first region set and/or information about the second region set.

In a possible implementation, the first region set and the second region set belong to a first cell.

In a possible implementation, the method further includes: sending the first system information in the first region set.

In a possible implementation, before sending the first system information in the first region set, the method further includes: sending second information, where the second information indicates that system information changes.

In a possible implementation, the first region set and the second region set correspond to a same SIB1 or SIB1bis.

In a possible implementation, the indication information is carried in one of the following information: a first SIB1; a first SIB1bis; a first MIB; or a first DCI.

In a possible implementation, the first SIB1, the first SIB1bis, the first MIB, or the first DCI is associated with the first cell, and both the first region set and the second region set belong to the first cell.

According to a sixth aspect, an embodiment of this application provides a communication method. The method may be performed by a second communication apparatus. The second communication apparatus may be, for example, a network device, a software module or a hardware module (for example, a chip) in the network device, or a component or apparatus that implements a part or all of functions of the network device. The network device may be, for example, a satellite, a base station, or a satellite base station. The method includes: determining a first synchronization signal SSB set, and/or determining a second SSB set, where the first SSB set includes an SSB associated with first system information, and the second SSB set includes an SSB that is not associated with the first system information; and sending indication information, where the indication information includes information about the first SSB set and/or information about the second SSB set.

In a possible implementation, the method further includes: sending the first system information in the first SSB set.

In a possible implementation, the first SSB set and the second SSB set correspond to a same SIB1 and/or SIB1bis.

According to a seventh aspect, an embodiment of this application provides a communication method. The method may be performed by a second communication apparatus. The second communication apparatus may be, for example, a network device, a software module or a hardware module (for example, a chip) in the network device, or a component or apparatus that implements a part or all of functions of the network device. The network device may be, for example, a satellite, a base station, or a satellite base station. The method includes: sending first data in a first region, where the first data includes a first system information block 1SIB1 or a first SIB1bis; and sending second data in a second region, where the second data includes a second SIB1 or a second SIB1bis. The first SIB1 is different from the second SIB2, or the first SIB1bis is different from the second SIB1bis. If the first data includes the first SIB1, the second data includes the second SIB1; or the first data includes the first SIB1bis, and the second data includes the second SIB1bis.

In a possible implementation, the first region and the second region belong to a first cell.

In a possible implementation, if one of the first region and the second region belongs to a first region set, and the other of the first region and the second region belongs to a second region set, it is determined that the second data is newly transmitted, where the first region set includes a region in which the first system information is sent, and the second region set includes a region in which the first system information is not sent.

In a possible implementation, the method further includes: sending the first system information in the second region.

In a possible implementation, before sending the first system information in the second region, the method further includes: sending second information in the first region, where the second information indicates that system information changes.

In a possible implementation, the method further includes: sending indication information, where the indication information includes information about the first region set and/or information about the second region set.

In a possible implementation, the first region set and the second region set correspond to different SIB1s or SIB1bis.

In a possible implementation, the indication information is carried in one of the following information: a third SIB1; a third SIB1bis; a first MIB; or a first DCI. The third SIB may be different from the first SIB1, or may be the same as the first SIB1. The third SIB1bis may be different from the first SIB1bis, or may be the same as the first SIB1bis.

In a possible implementation, the third SIB1, the third SIB1bis, the first MIB, or the first DCI is associated with the first cell, and both the first region set and the second region set belong to the first cell.

According to an eighth aspect, an embodiment of this application provides a communication method. The method may be performed by a second communication apparatus. The second communication apparatus may be, for example, a network device, a software module or a hardware module (for example, a chip) in the network device, or a component or apparatus that implements a part or all of functions of the network device. The network device may be, for example, a satellite, a base station, or a satellite base station. The method includes: sending first data for a first SSB, where the first data includes a first SIB1 (or SIB1bis); and sending second data for a second SSB, where the second data includes a second SIB1 (or SIB1bis). The first SIB1 is different from the second SIB2, or the first SIB1bis is different from the second SIB1bis. If the first data includes the first SIB1, the second data includes the second SIB1; or the first data includes the first SIB1bis, and the second data includes the second SIB1bis.

In a possible implementation, the first SSB set and the second SSB set correspond to different SIB1s or SIB1bis.

In a possible implementation, the method further includes: skipping sending first system information for the first SSB; and/or sending the first system information for the second SSB. In this case, the first SSB belongs to the second SSB set, and the second SSB belongs to the first SSB set.

In a possible implementation, the method further includes: obtaining indication information, where the indication information includes information about the first SSB set and/or information about the second SSB set.

In a possible implementation, the indication information is carried in one of the following information: a third SIB1, a first SIB1bis, a first MIB, or a first DCI. The third SIB may be different from the first SIB1, or may be the same as the first SIB1. The third SIB1bis may be different from the first SIB1bis, or may be the same as the first SIB1bis.

In a possible implementation, the third SIB1, the third SIB1bis, the first MIB, or the first DCI is associated with a first cell, and both the first SSB set and the second SSB set correspond to the first cell.

With reference to the first aspect, the third aspect, the fifth aspect, or the seventh aspect, in a possible implementation, the indication information includes N bits, the N bits include a first bit, the first bit indicates whether the first system information is sent or not in a first region, the first region belongs to the first region set or the second region set, and N is a positive integer. In this implementation, optionally, the N bits are used to carry (or indicate or describe) information about the first region set and/or information about the second region set. Optionally, different bits in a part or all of the N bits correspond to different regions. Further, one of the part or all of bits indicates whether the first system information is sent or not in one or more regions.

In the foregoing implementation, one bit may indicate whether the first system information is sent or not sent in a region. The indication manner is simple, and it is also convenient for the first communication apparatus to perform decoding.

With reference to the first aspect, the third aspect, the fifth aspect, or the seventh aspect, in a possible implementation, the indication information includes at least one of the following: first index information, where the first index information indicates a start index and/or an end index of regions in the first region set; second index information, where the second index information indicates a start index and/or an end index of regions in the second region set; first quantity information, where the first quantity information indicates a quantity of regions in the first region set; or second quantity information, where the second quantity information indicates a quantity of regions in the second region set. It should be understood that the first index information and/or the first quantity information may be considered as several examples of the information about the first region set, and the second index information and/or the second quantity information may be considered as several examples of the information about the second region set.

In the foregoing implementation, each region in the first region set and/or the second region set does not need to be separately indicated. This helps reduce bit overheads of the indication information.

With reference to the second aspect, the fourth aspect, the sixth aspect, or the eighth aspect, in a possible implementation, the indication information includes N bits, the N bits include a first bit, the first bit indicates whether the first system information is sent or not for the first SSB, the first SSB belongs to the first SSB set or the second SSB set, and N is a positive integer. In this implementation, optionally, the N bits are used to carry (or indicate or describe) the information about the first SSB set and/or the information about the second SSB set, and different bits in a part or all of the N bits correspond to different SSBs. Further, one of the part or all of bits indicates whether the first system information is sent or not for one or more SSBs.

With reference to the second aspect, the fourth aspect, the sixth aspect, or the eighth aspect, in a possible implementation, the indication information includes at least one of the following: first index information, where the first index information indicates a start index and/or an end index of SSBs in the first SSB set; second index information, where the second index information indicates a start index and/or an end index of SSBs in the second SSB set; first quantity information, where the first quantity information indicates a quantity of SSBs in the first SSB set; or second quantity information, where the second quantity information indicates a quantity of SSBs in the second SSB set. It should be understood that the first index information and/or the first quantity information may be considered as several examples of the information about the first SSB set, and the second index information and/or the second quantity information may be considered as several examples of the information about the second SSB set.

According to a ninth aspect, an embodiment of this application provides a communication apparatus. The communication apparatus may be the first communication apparatus in the first aspect, or a software module or a hardware module (for example, a chip) configured in the first communication apparatus. The communication apparatus includes a corresponding means (means) or module configured to perform the first aspect or any optional implementation. For example, the communication apparatus includes a processing module (sometimes also referred to as a processing unit) and a transceiver module (sometimes also referred to as a transceiver unit).

For example, the transceiver module is configured to obtain (or receive) indication information, where the indication information includes information about a first region set and/or information about a second region set, the first region set includes a region in which first system information is sent, and the second region set includes a region in which the first system information is not sent. The processing module is configured to determine the first region set and/or the second region set.

Optionally, the communication apparatus may further implement any one of the foregoing possible implementations of the first aspect. Details are not described herein again.

According to a tenth aspect, an embodiment of this application provides a communication apparatus. The communication apparatus may be the first communication apparatus in the second aspect, or a software module or a hardware module (for example, a chip) configured in the first communication apparatus. The communication apparatus includes a corresponding means (means) or module configured to perform the second aspect or any optional implementation. For example, the communication apparatus includes a processing module (sometimes also referred to as a processing unit) and a transceiver module (sometimes also referred to as a transceiver unit).

For example, the transceiver module is configured to obtain (or receive) indication information, where the indication information includes information about a first synchronization signal SSB set and/or information about a second SSB set, the first SSB set includes an SSB associated with first system information, and the second SSB set includes an SSB that is not associated with the first system information. The processing module is configured to further determine the first SSB set and/or determine the second SSB set by the first communication apparatus.

Optionally, the communication apparatus may further implement any one of the foregoing possible implementations of the second aspect. Details are not described herein again.

According to an eleventh aspect, an embodiment of this application provides a communication apparatus. The communication apparatus may be the first communication apparatus in the third aspect, or a software module or a hardware module (for example, a chip) configured in the first communication apparatus. The communication apparatus includes a corresponding means (means) or module configured to perform the third aspect or any optional implementation. For example, the communication apparatus includes a processing module (sometimes also referred to as a processing unit) and a transceiver module (sometimes also referred to as a transceiver unit).

For example, the transceiver module is configured to: obtain first data in a first region, where the first data includes a first SIB1 or a first SIB1bis; and obtain second data in a second region, where the second data includes a second SIB1 or a second SIB1bis. The processing module is configured to: if both the first region and the second region belong to a first region set or a second region set, determine that the second data is retransmitted data; or if one of the first region and the second region belongs to a first region set and the other of the first region and the second region belongs to a second region set, determine that the second data is newly transmitted data.

Optionally, the communication apparatus may further implement any one of the foregoing possible implementations of the third aspect. Details are not described herein again.

According to a twelfth aspect, an embodiment of this application provides a communication apparatus. The communication apparatus may be the second communication apparatus in the fourth aspect, or may be a software module or a hardware module (for example, a chip) configured in the second communication apparatus, or may be an apparatus having a function of the second communication apparatus in the fourth aspect. The communication apparatus includes a corresponding means (means) or module configured to perform the fourth aspect or any optional implementation. For example, the communication apparatus includes a processing module (sometimes also referred to as a processing unit) and a transceiver module (sometimes also referred to as a transceiver unit).

For example, the transceiver module is configured to: obtain first data for a first SSB, where the first data includes a first SIB1 (or SIB1bis); and obtain second data for a second SSB, where the second data includes a second SIB1 (or SIB1bis). The processing module is configured to: if both the first SSB and the second SSB are associated with a first SSB set or associated with a second SSB set, determine that the second data is retransmitted data; or if one of the first SSB and the second SSB belongs to a first SSB set, and the other of the first SSB and the second SSB belongs to a second SSB set, determine that the second data is newly transmitted data.

Optionally, the communication apparatus may further implement any one of the possible implementations of the fourth aspect. Details are not described herein again.

According to a thirteenth aspect, an embodiment of this application provides a communication apparatus. The communication apparatus may be the second communication apparatus in the fifth aspect, or may be a software module or a hardware module (for example, a chip) configured in the second communication apparatus, or may be an apparatus having a function of the second communication apparatus in the fifth aspect. The communication apparatus includes a corresponding means (means) or module configured to perform the fifth aspect or any optional implementation. For example, the communication apparatus includes a processing module (sometimes also referred to as a processing unit) and a transceiver module (sometimes also referred to as a transceiver unit).

For example, the processing module is configured to: determine a first region set in which first system information is sent, and/or determine a second region set in which the first system information is not sent. The transceiver module is configured to send indication information, where the indication information includes information about the first region set and/or information about the second region set.

Optionally, the communication apparatus may further implement any one of the possible implementations of the fifth aspect. Details are not described herein again.

According to a fourteenth aspect, an embodiment of this application provides a communication apparatus. The communication apparatus may be the second communication apparatus in the sixth aspect, or may be a software module or a hardware module (for example, a chip) configured in the second communication apparatus, or may be an apparatus having a function of the second communication apparatus in the sixth aspect. The communication apparatus includes a corresponding means (means) or module configured to perform the sixth aspect or any optional implementation. For example, the communication apparatus includes a processing module (sometimes also referred to as a processing unit) and a transceiver module (sometimes also referred to as a transceiver unit).

For example, the processing module is configured to determine a first synchronization signal SSB set, and/or determine a second SSB set, where the first SSB set includes an SSB associated with first system information, and the second SSB set includes an SSB that is not associated with the first system information. The transceiver module is configured to send indication information, where the indication information includes information about the first SSB set and/or information about the second SSB set.

Optionally, the communication apparatus may further implement any one of the foregoing possible implementations of the sixth aspect. Details are not described herein again.

According to a fifteenth aspect, an embodiment of this application provides a communication apparatus. The communication apparatus may be the second communication apparatus in the seventh aspect, or may be a software module or a hardware module (for example, a chip) configured in the second communication apparatus, or may be an apparatus having a function of the second communication apparatus in the seventh aspect. The communication apparatus includes a corresponding means (means) or module configured to perform the seventh aspect or any optional implementation. For example, the communication apparatus includes a processing module (sometimes also referred to as a processing unit) and a transceiver module (sometimes also referred to as a transceiver unit).

For example, the transceiver module is configured to: under processing of the processing module, send first data in a first region, where the first data includes a SIB1 or a first SIB1bis; and send second data in a second region, where the second data includes a second SIB1 or a second SIB1bis. The first SIB1 is different from the second SIB2, or the first SIB1bis is different from the second SIB1bis.

Optionally, the communication apparatus may further implement any one of the foregoing possible implementations of the seventh aspect. Details are not described herein again.

According to a sixteenth aspect, an embodiment of this application provides a communication apparatus. The communication apparatus may be the second communication apparatus in the eighth aspect, or may be a software module or a hardware module (for example, a chip) configured in the second communication apparatus, or may be an apparatus having a function of the second communication apparatus in the eighth aspect. The communication apparatus includes a corresponding means (means) or module configured to perform the eighth aspect or any optional implementation. For example, the communication apparatus includes a processing module (sometimes also referred to as a processing unit) and a transceiver module (sometimes also referred to as a transceiver unit).

The transceiver module is configured to: under control of the processing module, send first data for a first SSB, where the first data includes a first SIB1 (or a SIB1bis); and send second data for a second SSB, where the second data includes a second SIB1 (or a SIB1bis). The first SIB1 is different from the second SIB2, or the first SIB1bis is different from the second SIB1bis. If the first data includes the first SIB1, the second data includes the second SIB1; or the first data includes the first SIB1bis, and the second data includes the second SIB1bis.

Optionally, the communication apparatus may further implement any one of the foregoing possible implementations of the eighth aspect. Details are not described herein again.

According to a seventeenth aspect, an embodiment of this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the communication method according to any one of the first aspect to the eighth aspect and the possible implementations.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station.

In another implementation, the communication apparatus may be a part of devices in the wireless communication device, for example, an integrated circuit product like the system chip or the communication chip. A system chip may also be referred to as a system on chip (system on chip, SoC), or briefly referred to as an SoC chip. A communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, some or all chips of the communication chip may be integrated into the SoC chip. For example, the baseband processing chip is integrated into the SoC chip, but the radio frequency processing chip is not integrated into the SoC chip. The interface circuit may be the radio frequency processing chip in the wireless communication device, and the processor may be the baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

According to an eighteenth aspect, an embodiment of this application provides a communication apparatus. The communication apparatus includes a processor, and the processor is configured to perform the communication method according to any one of the first aspect to the eighth aspect and the possible implementations. Optionally, the communication apparatus further includes a memory. The memory is configured to store one or more computer programs, the one or more computer programs include computer-executable instructions, and when the communication apparatus runs, the processor executes the one or more computer programs stored in the memory, to enable the communication apparatus to perform the communication method according to any one of the first aspect to the eighth aspect and the possible implementations.

According to a nineteenth aspect, an embodiment of this application provides a chip system. The chip system includes a processor and an interface. The processor is configured to: invoke instructions from the interface and run the instructions. When the processor executes the instructions, the communication method according to any one of the first aspect to the eighth aspect and the possible implementations is implemented.

According to a twentieth aspect, an embodiment of this application provides a computer-readable storage medium. The computer-readable storage medium is configured to store a computer program or instructions. When the computer program or the instructions are run, the communication method according to any one of the first aspect to the eighth aspect and the possible implementations is implemented.

According to a twenty-first aspect, an embodiment of this application provides a computer program product including instructions. When the computer program product runs on a computer, the communication method according to any one of the first aspect to the eighth aspect and the possible implementations is implemented.

For beneficial effects of any one of the technical solutions in the second aspect to the twenty-first aspect, refer to the beneficial effects of the corresponding technical solutions in the first aspect, the second aspect, or the third aspect. Repeated parts are not enumerated herein again.

### BRIEF DESCRIPTION OF DRAWINGS

FIG. 1 is a diagram of channel mapping related to system information;
FIG. 2 is a diagram of scheduling a SIB1 and an SI message based on DCI;
FIG. 3 is a diagram of inter-layer transmission in downlink transmission;
FIG. 4 is a diagram of a structure of a MAC PDU;
FIG. 5 is a diagram of an architecture of a communication system to which an embodiment of this application is applicable;
FIG. 6 is a diagram of a network architecture to which an embodiment of this application is applicable;
FIG. 7 is a diagram of another network architecture to which an embodiment of this application is applicable;
FIG. 8 is a diagram of a satellite system in a transparent mode to which an embodiment of this application is applicable;
FIG. 9 is a diagram of a satellite system in another transparent mode to which an embodiment of this application is applicable;
FIG. 10 is a diagram of a satellite system in a regenerative mode to which an embodiment of this application is applicable;
FIG. 11 is a diagram of a satellite system in another regenerative mode to which an embodiment of this application is applicable;
FIG. 12 is a diagram of a communication method according to an embodiment of this application;
FIG. 13 is a diagram of several types of X regions according to an embodiment of this application;
FIG. 14A and FIG. 14B are diagrams of several types of N bits according to an embodiment of this application;
FIG. 15A and FIG. 15B are diagrams of two types of N bits according to an embodiment of this application;
FIG. 16 is a diagram of a first region set and a second region set according to an embodiment of this application;
FIG. 17 is a diagram of another communication method according to an embodiment of this application;
FIG. 18 is a diagram of still another communication method according to an embodiment of this application;
FIG. 19 is a diagram of yet another communication method according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of still another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

To make objectives, technical solution, and advantages of embodiments of this application clearer, the following further describes embodiments of this application in detail with reference to the accompanying drawings. It may be understood that the explanations and descriptions are intended to facilitate understanding of embodiments of this application, but should not be construed as a limitation on the protection scope claimed in embodiments of this application.

### 1. Terminal device.

The terminal device is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

### 2. Network device

The network device may be a device configured to communicate with the terminal device. The network device may be a base station (base transceiver station, BTS) in a global system for mobile communication (global system for mobile communication, GSM) or a code division multiple access (code division multiple access, CDMA) system, may be a NodeB (NodeB, NB) in a wideband code division multiple access (Wideband Code Division Multiple Access, WCDMA) system, may be an evolutional NodeB (evolutional NodeB, eNB or eNodeB) in an LTE system, or may be a network device in a 5^{th} generation (5^{th} generation, 5G) communication system, a network device in a 6G communication system, a base station that is subsequently evolved from 3GPP, or may be a radio controller in a cloud radio access network (cloud radio access network, CRAN) scenario; or the network device may be a relay station, an access point, a vehicle-mounted device, a wearable device, a network device in a future 5G network, a network device in a future evolved public land mobile network (public land mobile network, PLMN), a non-terrestrial network (non-terrestrial network, NTN), or the like. For example, the network device may include an access network device and/or a core network device. The access network device is a device having the wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a base station that is subsequently evolved from 3GPP, and an access node, a wireless relay node, a wireless backhaul node, and the like in a Wi-Fi system. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. The network device may alternatively be a module or a unit that completes a part of functions of a base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all functions of a physical layer. For detailed descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names. However, a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented via a software module, a hardware module, or a combination of a software module and a hardware module. The network device may alternatively be a server, a wearable device, a vehicle-mounted device, or the like. For example, a network device in a V2X technology may be a road side unit (road side unit, RSU). This is not specifically limited in this application. The following is described by using an example in which the access network device is a base station. A plurality of access network devices in the communication system may be base stations of a same type, or may be base stations of different types. The base station may communicate with the terminal device, or may communicate with the terminal device through a relay station. The terminal device may communicate with the plurality of base stations in different access technologies.

### 3. System information (system information, SI)

The SI may include one master information block (master information block, MIB) and several system information blocks (system information blocks, SIBs). The SI may be classified into minimum SI (minimum SI, MSI) and other SI (other SI, OSI).
(1) The MSI includes basic information required for an initial access and information required for obtaining the OSI. The terminal device may access a cell or camp on the cell only after receiving MIB and a SIB1 of the cell. The MSI includes a MIB and a SIB1. The MIB includes cell barring status information and basic physical layer information of the cell required for further receiving system information, for example, includes a control resource set (control resource set, coreset) 0 (which may be referred to as a CORESET #0 for short) configuration.

The MIB may be periodically broadcast on a broadcast channel (broadcast channel, BCH). The SIB1 defines scheduling of other types of system information blocks and includes information required for the initial access. The SIB1 may also be described as remaining minimum SI (remaining MSI, RMSI). The SIB1 may be periodically broadcast on a downlink shared channel (downlink shared channel, DL-SCH) or sent to a terminal device in a connected state in a dedicated signaling manner on the DL-SCH.

(2) The OSI includes SIBs other than the SIB1, for example, a SIB2 to a SIB21, like a positioning SIB, and more SIBs that may be extended subsequently. These SIBs may be periodically broadcast (broadcast) on the DL-SCH, or broadcast on the DL-SCH in an on-demand (on-demand) manner, or sent to the terminal device in the connected state in the dedicated signaling manner on the DL-SCH. It should be noted that, for the OSI, SIBs with a same period may be mapped to one SI message (SI message) for sending. For example, the on-demand manner means that the network device may first not broadcast some SI messages/SIBs, and then the network device starts to broadcast these SI messages/SIBs after the terminal device requests the corresponding SI messages/SIBs from the network device.

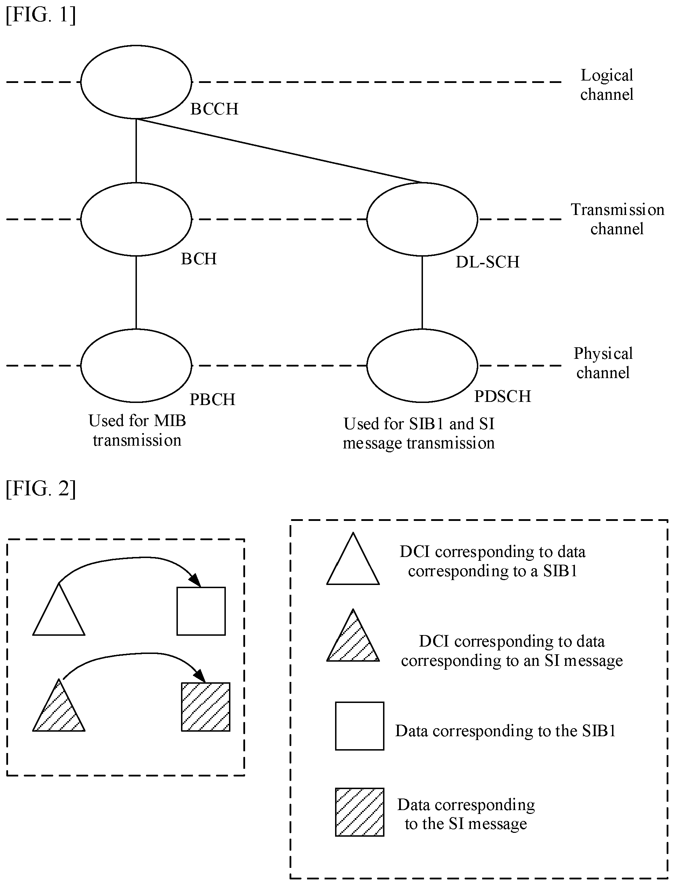

For example, FIG. 1 is a diagram of channel mapping related to system information. As shown in FIG. 1, a logical channel, a transmission channel, and a physical channel that correspond to the MIB are respectively a broadcast control channel (broadcast control channel, BCCH), a broadcast channel (broadcast channel, BCH), and a physical broadcast channel (physical broadcast channel, PBCH). Currently, a logical channel, a transmission channel, and a physical channel that correspond to the SIB1 or the SI message are respectively a BCCH, a DL-SCH, and a physical downlink shared channel (physical downlink shared channel, PDSCH).

### 4. SIB1

Currently, the network device supports only one SIB1. In other words, in one cell, the network device sends only one SIB1. All terminal devices that receive the SIB1 in the cell receive the same SIB1, regardless of whether positions of the terminal devices in the cell are the same. It should be noted that, that the network device sends only one SIB1 does not mean that the SIB1 remains unchanged at any time. The SIB1 may change, but the network device sends only a same SIB1 in a cell within a period of time (for example, a period of the SIB1 or a modification period). For example, the period of the SIB1 is 160 ms.

### 5. Downlink control information (downlink control information, DCI) for scheduling the SIB1

The SIB1 may be transmitted on a PDSCH, and the PDSCH for transmitting the SIB1 is scheduled by using DCI scrambled by using a system information radio network temporary identity (system information radio network temporary identity, SI-RNTI). A format of the DCI for scheduling the SIB1 may be the same as a format of DCI for scheduling the SI message (for example, in a current new radio (new radio, NR) protocol, a DCI format 1_0 is used). Scrambling information of the DCI for scheduling the SIB1 is the same as scrambling information of the DCI for scheduling the SI message (for example, in the current NR protocol, an SI-RNTI is used, only one value of the SI-RNTI is supported, and the value of the SI-RNTI is FFFF). A length of the SI-RNTI is 16 bits.

In addition, in NR, transmission of the SIB1 and transmission of the SI message may conflict in time domain. Specifically, the DCI for scheduling the SIB1 and the DCI for scheduling the SI message may conflict in time domain. For example, from a perspective of a protocol, search spaces of the SIB1 and the SI message (or other system information) are separately configured. That the terminal device determines, based on a configuration of the search space, an occasion on which the terminal device monitors the PDCCH may be understood as: The terminal device determines, based on the configuration of the search space, a time domain resource on which the terminal device may detect the SIB1 or the SI message. It should be noted that the conflict herein may be understood as overlapping. Herein, the DCI scrambled by using the SI-RNTI is used to schedule the SIB1 or the SI message. Optionally, there is one bit in the DCI (for example, a system information indicator (system information indicator) field in the NR protocol indicates whether the DCI is used to schedule the SIB1 or the SI message).

For example, FIG. 2 is a diagram of scheduling a SIB1 and an SI message based on DCI. As shown in FIG. 2, the network device separately schedules the SIB1 and the SI message by using two pieces of DCI. Alternatively, the network device separately schedules, by using two pieces of DCI, data corresponding to the SIB1 and data corresponding to the SI message. Formats of the two pieces of DCI are the same, and scrambling information of the two pieces of DCI is the same, and is an SI-RNTI. After receiving the two pieces of DCI, the terminal device may determine, based on a system information indicator field in the DCI, whether the SIB1 or the SI message is scheduled.

It should be noted that, for receiving of the SIB1 and the SI message, transmission of the SIB1 and transmission of the SI message may conflict in time domain, the DCI corresponding to the SIB1 and the DCI corresponding to the SI message have same scrambling information and same DCI formats, and the DCI for scheduling the SIB1 and the DCI for scheduling the SI message do not include HARQ process ID information. In addition, for receiving of the SIB1 and the SI message, a MAC layer of the terminal device supports HARQ combining and decoding. Therefore, the DCI needs to indicate whether the DCI is used to schedule the SIB1 or the SI message. If there is no such indication, the terminal device may incorrectly perform HARQ combining and decoding on the SIB1 and the SI message that are received in two times, resulting in a decoding error.

In LTE, the SIB1 and the SI message are separately transmitted in time domain. Although a same SI-RNTI is also used to schedule the SIB1 and the SI message in LTE, the terminal device may determine, based on time domain information (for example, a search space) of the DCI, whether the SIB1 or the SI message is received. Therefore, in LTE, whether the DCI is used to schedule the SIB1 or the SI message does not need to be indicated in the DCI.

In NR, for transmission of different SI messages, SI windows of the SI messages are separated in time domain and do not overlap. Therefore, if the terminal device receives two pieces of DCI scrambled by using an SI-RNTI, and both pieces of DCI indicate that the DCI is used to schedule the SI message, the terminal device may determine, based on a time domain resource for monitoring the DCI (for example, whether the two pieces of DCI are located in a same SI window), whether the SI messages scheduled by using the two pieces of DCI are a same SI message. If the two pieces of DCI are used to schedule a same SI message, HARQ combining and decoding may be performed on data corresponding to newly received DCI and previously received data; or if the two pieces of DCI are used to schedule different SI messages, HARQ decoding needs to be separately performed on data corresponding to newly received DCI.

### 6. MAC layer processing and RLC layer processing corresponding to the SIB1

A control plane protocol stack may include a non-access stratum (non-access stratum, NAS) layer, a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (Physical Layer, PHY). A user plane protocol stack may include a service data adaptation (service data adaptation protocol, SDAP) layer, a PDCP layer, an RLC layer, a MAC layer, and a PHY layer.

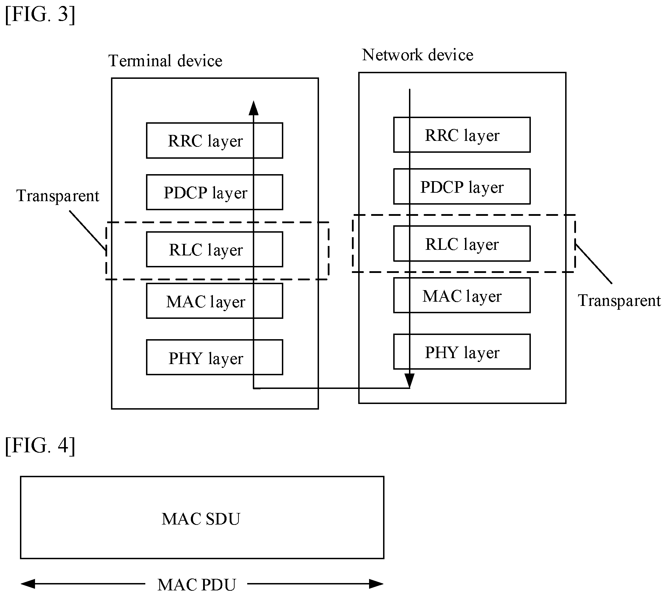

FIG. 3 is a diagram of inter-layer transmission in downlink transmission. In FIG. 3, a downward arrow indicates sending, and an upward arrow indicates receiving. As shown in FIG. 3, after generating to-be-transmitted signaling (for example, an RRC message or an RRC protocol data unit (protocol data unit, PDU)), an RRC layer of a network device may deliver the signaling to a corresponding PDCP entity. For ease of description, the signaling is referred to as/replaced with data below. For data (for example, a PDCP service data unit (service data unit, SDU)) received from the RRC layer, the PDCP entity may perform specific processing or may not perform processing to obtain a PDCP PDU, and then deliver the PDCP PDU to an RLC entity corresponding to the PDCP entity. For data (for example, an RLC SDU) received from the PDCP layer, the RLC entity may perform specific processing or may not perform processing to obtain an RLC PDU, and then deliver the RLC PDU to a corresponding MAC entity. For data (for example, a MAC SDU) received from the RLC layer, the MAC entity may perform specific processing or may not perform processing to obtain a MAC PDU, and then deliver the MAC PDU to a PHY layer. The PHY layer performs air interface transmission.

Correspondingly, after receiving data (for example, a transport block (transport block, TB)), a PHY layer of a terminal device delivers the TB to a MAC layer. For data (for example, a TB or a MAC PDU) received from the PHY layer, a MAC entity may perform specific processing or may not perform processing to obtain a MAC SDU, and then deliver the MAC SDU to a corresponding RLC layer. For data (for example, an RLC PDU) received from the MAC layer, an RLC entity may perform specific processing or may not perform processing to obtain an RLC SDU, and then deliver the RLC SDU to a corresponding PDCP entity. For data (for example, a PDCP PDU) received from the RLC layer, a PDCP entity may perform specific processing or may not perform processing to obtain a PDCP SDU, and then deliver the PDCP SDU to the RRC layer. For data (for example, an RRC message or an RRC PDU) received from the PDCP layer, which may also be referred to as signaling, the RRC layer performs RRC decoding or ASN.1 decoding to determine a meaning of the received data (for example, a bit string, a bit string).

For sending and receiving of data (or signaling), the data may be correspondingly encapsulated/processed at each layer, or may be transparently transmitted. For example, for sending, data received by a layer from an upper layer of the layer is referred to as an SDU, and data delivered by the layer to a lower layer is referred to as a PDU. For the layer, the data received from the upper layer and the data delivered to the lower layer may be the same (for example, in transparent transmission), or may be different (for example, the data received from the upper layer is encapsulated/processed at the layer to obtain the data delivered to the lower layer). For example, data received by the PDCP entity from an upper layer is referred to as a PDCP SDU, and data sent by the PDCP entity to a lower layer is referred to as a PDCP PDU; data received by the RLC entity from an upper layer is referred to as an RLC SDU, and data sent by the RLC entity to a lower layer is referred to as an RLC PDU; and data received by the MAC entity from an upper layer is referred to as a MAC SDU, and data sent by the MAC entity to a lower layer is referred to as a MAC PDU. For example, for receiving, data received by a layer from a lower layer of the layer is referred to as a PDU, and data delivered by the layer to an upper layer is referred to as an SDU. For the layer, the data received from the lower layer and the data delivered to the upper layer may be the same (for example, in transparent transmission), or may be different (for example, the data received from the lower layer is processed at the layer to obtain the data delivered to the upper layer). For example, data received by the PDCP entity from a lower layer is referred to as a PDCP PDU, and data sent by the PDCP entity to an upper layer is referred to as a PDCP SDU; data received by the RLC entity from a lower layer is referred to as an RLC PDU, and data sent by the RLC entity to an upper layer is referred to as an RLC SDU; and data received by the MAC entity from a lower layer is referred to as a MAC PDU, and data sent by the MAC entity to an upper layer is referred to as a MAC SDU.

The upper layer and the lower layer are relative concepts. For example, the RLC layer is used as an example. For the RRC layer, the RLC layer may be a lower layer of the RRC layer, but for the MAC layer, the RLC layer may be an upper layer of the MAC layer. For another example, a lower layer of the RRC layer may include any one or more of the following: a PHY layer, a MAC layer, an RLC layer, and a PDCP layer.

It should be noted that, for sending and receiving of data (or signaling), not all the foregoing layers are necessarily passed through. For example, currently, for transmission of the SIB1 and the SI message, the PDCP layer may not be passed through.

It should be noted that there may be a plurality of transmission modes for the RLC layer, for example, a transparent mode (transparent mode, TM). For example, currently, for transmission of the SIB1 and the SI message, the RLC layer uses the transparent mode.

FIG. 4 is a diagram of a structure of a MAC PDU. As shown in FIG. 4, in this embodiment of this application, a MAC PDU format corresponding to a logical channel (namely, a BCCH) and a transmission channel (namely, a DL-SCH) of the SIB1 is a transparent MAC (transparent MAC). In other words, such a MAC PDU may be used for transmission of the BCCH mapped to the DL-SCH. In other words, transmission at the MAC layer is transparent transmission. In other words, one MAC PDU includes only one MAC SDU, and the MAC SDU is the same as the MAC PDU.

It should be noted that, currently, for transmission of the SIB1 and the SI message, the terminal device processes received data (for example, a TB) by using a HARQ process corresponding to broadcast. If the received data is newly transmitted, the terminal device attempts to decode the received data. If the received data is retransmitted, the terminal device attempts to combine and decode the received data. If the terminal device successfully decodes the received data, the terminal device delivers a decoded MAC PDU or MAC SDU to the RLC layer. Because the MAC PDU format corresponding to the SIB1 is a transparent MAC, and content of the MAC PDU is the same as that of the MAC SDU, disassembling and demultiplexing (disassembling and demultiplexing) may not be performed on the MAC PDU.

Still as shown in FIG. 3, the transmission mode at the RLC layer may be TM. In other words, for BCCH-related transmission, the RLC uses the TM. After receiving a piece of data (an RLC PDU) from the MAC layer of the terminal device, the RLC layer of the terminal device does not perform any processing, and delivers the RLC PDU or the RLC SDU to the RRC layer.

It should be noted that, for data or signaling (for example, data corresponding to the SIB1 or data including the SIB1), names of the data or the signaling at different layers are different in a protocol. For example, the data or the signaling is referred to as a TB at the physical layer, a MAC PDU or a MAC SDU at the MAC layer, an RLC PDU or an RLC SDU at the RLC layer, a PDCP PDU or a PDCP SDU at the PDCP layer, and RRC signaling, an RRC message, or an RRC PDU at the RRC layer.

7. Abstract syntax notation one (abstract syntax notation one, ASN.1) corresponding to the SIB1

Currently, a logical channel (BCCH) and a transmission channel (DL-SCH) that correspond to the SIB1 are the same as those that correspond to the SI message. A message (for example, an RRC message, an RRC PDU, an RRC message set, or an RRC message class) corresponding to the logical channel (BCCH) and the transmission channel (DL-SCH) or a message (for example, an RRC message, an RRC PDU, an RRC message set, or an RRC message class (for example, class)) transmitted on the logical channel (BCCH) and the transmission channel (DL-SCH) may be a broadcast control channel-downlink shared channel-message (broadcast control channel-downlink shared channel-Message, BCCH-DL-SCH-Message). The BCCH-DL-SCH-Message or a message structure (message structure) of the BCCH-DL-SCH-Message may include indication information, to indicate whether the SIB1 or the SI message is included, so that the terminal device can correctly perform RRC decoding/ASN.1 decoding. For example, the terminal device receives DCI scrambled by using an SI-RNTI, where the DCI indicates that data/a PDSCH scheduled by using the DCI is/includes the SIB1. The MAC layer of the terminal device performs decoding (HARQ combining and decoding may be performed). After successfully decoding the data scheduled by using the DCI scrambled by using the SI-RNTI, the MAC layer of the terminal device delivers the data to the RRC layer of the terminal device. The RRC layer of the terminal device determines, based on indication information in a received RRC message or RRC PDU or RRC message set or RRC message class, that the received RRC message or RRC PDU or RRC message set or RRC message class includes the SIB1. The terminal device may obtain correct information from each bit of the RRC message received through ASN.1 decoding of the SIB1. It should be noted that delivering the data to the RRC layer of the terminal device may be understood as that the MAC layer of the terminal device delivers the data to the RLC layer of the terminal device, and the RLC layer of the terminal device delivers the data to the RRC layer of the terminal device.

### 8. SI message

A plurality of SIBs with a same period may be mapped to one SI message. For example, message definitions (message definitions) of a system information message (system information message) may include indication information. The indication information indicates SIBs included in the RRC message, the SI message, or the RRC PDU, so that the terminal device can correctly perform RRC decoding/ASN.1 decoding.

### 9. SI change

If the network device needs to change (some) system information (or system information other than ETWS and/or CMAS), the network device first notifies the terminal device of an SI change in one modification period. It should be understood that the SI change notification may be transmitted a plurality of times in one modification period. Starting from a next modification period, the network device sends updated system information. After the terminal device receives the SI change notification, the terminal device obtains new system information from the starting of the next modification period.

A modification period boundary is defined by a system frame number (system frame number, SFN) value, and SFN mod m=0, where m is a quantity of radio frames that form the modification period. The network device configures the modification period in the SIB1, where m=modificationPeriodCoeff*defaultPagingCycle. The modification period is equal to a quantity of times multiplied by a paging cycle. In other words, there may be a plurality of paging cycles in one modification period. Optionally, a minimum value of the modification period is 2*32 frames (frames)=64 frames=640 ms, and a maximum value is 10.24s, instead of 40.96s. Herein, modificationPeriodCoeff is a coefficient with an optional value of 2, 4, 8, or 16. defaultPagingCycle indicates a default paging cycle, with an optional value of 32 frames, 64 frames, 128 frames, or 256 frames.

A terminal device in an RRC_IDLE (RRC_IDLE) state or an RRC_INACTIVE (RRC_INACTIVE) state monitors an SI change notification on a paging occasion (paging occasion) of the terminal device in each discontinuous reception (discontinuous reception, DRX) cycle. If a common search space used to monitor paging is provided for the terminal device on an active (active) BWP, the terminal device in RRC_CONNECTED monitors the SI change notification at least once on any paging occasion in each modification period.

If the terminal device receives the SI change notification in a modification period, the terminal device may re-obtain the SIB1 starting from a next modification period, and determine, based on information (for example, a valuetag (valuetag) corresponding to a SIB) in the SIB1, whether information about OSI (for example, a SIB) changes.

The SI change notification is included in a short message (short message) transmitted by using DCI scrambled by using a P-RNTI.

For example, the DCI scrambled by using the P-RNTI may include a short message field. For example, the DCI scrambled by using the P-RNTI includes a short message indicator, which indicates whether paging scheduling information exists in the DCI and/or whether a short message exists in the DCI. Table 1 below shows possible values of a short message indicator (short message indicator).

**Table 1**

| Bit field (bit field) | Short message indicator |
|---|---|
| 00 | Reserved (Reserved) |
| 01 | Only scheduling information for paging is present in the DCI (Only scheduling information for Paging is present in the DCI). |
| 10 | Only a short message for paging is present in the DCI (Only short |
| | message is present in the DCI). |
| 11 | Both scheduling information for paging and a short message are present in the DCI (Both scheduling information for Paging and short message are present in the DCI). |

If the short message indicator indicates that the short message is present in the DCI, the SI change notification may be determined based on content in the short message.

Table 2 below shows content of a short message. Bit 1 shown in Table 2 is the most significant bit.

**Table 2**

| Bit | Short message |
|---|---|
| 1 | System information modification (systemInfoModification): if set to 1: indication of a BCCH modification other than SIB6, SIB7, SIB8, and positioning SIB. |
| 2 | etwsAndCmasIndication: if set to 1: indication of an ETWS primary notification, and/or an ETWS secondary notification, and/or a CMAS notification. |
| 3 | Stop paging monitoring (stopPagingMonitoring) |
| | This bit can be used for only operation with a shared spectrum channel access and if nrofPDCCH-MonitoringOccasionPerSSB-InPO is present (This bit can be used for only operation with shared spectrum channel access and if nrofPDCCH-MonitoringOccasionPerSSB-InPO is present). |
| | If set to 1: indication that the UE may stop monitoring PDCCH monitoring occasions for paging in this paging occasion as specified in TS 38.304 [20], clause 7.1. (If set to 1: indication that the UE may stop monitoring PDCCH occasion(s) for paging in this paging occasion as specified in TS 38.304 [20], clause 7.1). |
| 4 | systemInfoModification-eDRX |
| | If set to 1: indication of a BCCH modification other than SIB6, SIB7, SIB8 and posSIBs (If set to 1: indication of a BCCH modification other than SIB6, SIB7, SIB8 and posSIBs). |
| | This indication applies only to UEs using a IDLE eDRX cycle longer than the BCCH modification period (This indication applies only to UEs using IDLE eDRX cycle longer than the BCCH modification period). |
| 5-8 | Not used in this release of the specification, and shall be ignored by the terminal device if received. |

### 10. Scheduling information of the OSI

The scheduling information of the OSI is included in the SIB1. The scheduling information of the OSI may alternatively include/be replaced with the scheduling information of the SI message corresponding to the OSI, or the scheduling information of the SI, or the scheduling information of the SI message.

The scheduling information of the OSI may include any one or more of the following: an SI window length, information about one or more SI messages, and information about a system information region to which a cell belongs (for example, an ID of the system information region to which the cell belongs).

The information about one SI message may include any one or more of the following: SIB mapping information, a period of the SI message, a broadcast status of the SI message, and a window position of the SI message.

The SIB mapping information may include/be replaced with any one or more of the following: information about one or more SIBs (or OSIs) included in the SI message (or information about one or more SIBs (or OSIs) mapped to the SI message), a valuetag of a SIB (or each SIB, or each SIB included in the SI message), and an indication of whether the SIB (or each SIB, or each SIB included in the SI message) is valid in a region.

### 11. Cell (cell)

Optionally, the cell may be understood as a region in which the network device can provide a wireless communication service for the terminal device, and is a constituent unit of a communication network. Alternatively, the cell may be considered as a division unit of communication coverage of the network device. The network device may correspond to one or more cells, or the one or more cells may be considered as one or more cells of the network device.

Optionally, the cell is a cell managed by the network device. For example, the network device is a base station; and one base station may manage one cell, or may manage a plurality of cells. For example, the cell is a coverage region centered on the base station. For example, when one base station manages a plurality of cells, the base station may have antennas in a plurality of directions. One antenna is used to cover a specific geographical region in a corresponding direction, and the geographical region is referred to as a sector. One sector uses one or more wireless carrier frequencies to complete wireless coverage. One wireless carrier frequency uses one carrier frequency. The sector and the carrier frequency constitute a smallest service unit that provides an access for the terminal device, namely, a cell.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or an expression similar to the term indicates any combination of the items, and includes a single item (piece) or any combination of a plurality of items (pieces). For example, at least one of a, b, or c indicates "a", "b", "c", "a and b", "a and c", "b and c", or "a, b, and c", where a, b, and c may be singular or plural.

The following terms "first" and "second" are merely used for description, but should not be understood as indicating or implying relative importance or implying a quantity of indicated technical features, and shall not be understood as "first" and "second" in a time sequence or sequence. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, terms such as "example", "for example", "in a possible design", and "in a possible implementation" indicate giving an example, an illustration, or a description. Any embodiment or design solution described as "example", "for example", "in a possible design", or "in a possible implementation" in embodiments of this application should not be explained as being more preferred or more advantageous than another embodiment or design solution. Exactly, use of the terms such as "example", "for example", "in a possible design", and "in a possible implementation" is intended to present a related concept in a specific manner for ease of understanding.

In embodiments of this application, both "when" and "if" mean that corresponding processing is performed in an objective situation, and are not intended to limit time, do not require a determining action during implementation, and do not mean that there is another limitation.

The communication solutions provided in embodiments of this application may be applied to various types of communication networks (or systems), for example, a long term evolution (long term evolution, LTE) communication network, a 5^{th} generation (5^{th} generation, 5G) mobile communication network (for example, a new radio (new radio, NR) network), an NTN, a space-ground integrated communication network, a 6th generation communication network, or a communication network that emerges in a future communication development (or future evolution) process. The NTN may be a communication network involving a flying object, and the NTN may include a satellite network, a high-altitude platform system (high-altitude platform station, HAPS), an air-to-ground network, or the like. The NTN can be deployed independently or as a supplement to a terrestrial network. The communication solution provided in embodiments of this application may be further applied to a machine to machine (machine to machine, M2M) communication network, a machine type communication (machine type communication, MTC) communication network, another communication network, or the like. This is not limited in embodiments of this application.

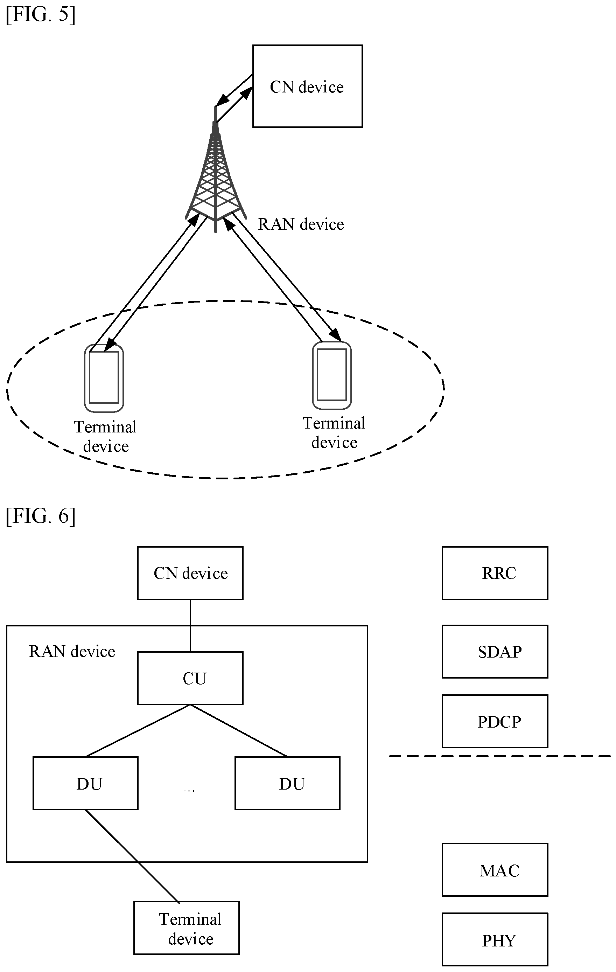

FIG. 5 is a diagram of a communication system to which an embodiment of this application is applicable. As shown in FIG. 5, a terminal device may access a wireless network, to obtain a service of an external network (for example, the internet) by using the wireless network, or communicate with another device by using the wireless network, for example, may communicate with another terminal device. The wireless network includes a radio access network (radio access network, RAN) device and/or a core network (core network, CN) device. The RAN device is configured to connect the terminal device to the wireless network, and the CN device is configured to: manage the terminal device and provide a gateway for communication with an external network.

It should be understood that quantities of devices in the communication system shown in FIG. 5 are merely used as an example. Embodiments of this application are not limited thereto. In an actual application, the communication system may further include more terminal devices and more RAN devices, and may further include another device.

It should be further understood that, when the terminal device communicates with another terminal device, the technical solutions in embodiments of this application are also applicable.

FIG. 6 is a diagram of a network architecture to which an embodiment of this application is applicable. As shown in FIG. 6, the network architecture includes a CN device, a RAN device, and a terminal device. The RAN device includes a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, some functions of the radio frequency apparatus are independently integrated, and some functions of the radio frequency apparatus are integrated into the baseband apparatus. For example, in an LTE communication system, a RAN device (eNB) includes a baseband apparatus and a radio frequency apparatus. The radio frequency apparatus may be remotely disposed relative to the baseband apparatus. For example, a remote radio unit (remote radio unit, RRU) is a remote radio unit disposed relative to a BBU.

Communication between the RAN device and the terminal device complies with a specific protocol layer structure. For example, a control plane protocol layer structure may include functions of protocol layers such as an RRC layer, a PDCP layer, a radio link control (radio link control, RLC) layer, a MAC layer, and a PHY layer. A user plane protocol layer structure may include functions of protocol layers such as a PDCP layer, an RLC layer, a MAC layer, and a physical layer. In a possible implementation, there is further an SDAP layer above the PDCP layer.

The RAN device may implement the functions of the protocol layers such as the RRC layer, the PDCP layer, the RLC layer, and the MAC layer by using one node, or may implement the functions of these protocol layers by using a plurality of nodes. For example, the RAN device may include a central unit (central unit, CU) and/or at least one distributed unit (distributed unit, DU). The at least one DU may be centrally controlled by one CU. As shown in FIG. 6, for the CU and the DU, division may be performed based on a protocol layer of a radio network. For example, functions of the PDCP layer and a protocol layer above the PDCP layer are set on the CU, and functions of protocol layers below the PDCP layer, such as the RLC layer and the MAC layer, are set on the DU.

Division at the protocol layer is merely an example, and division may alternatively be performed at another protocol layer. For example, division is performed at the RLC layer. Functions of the RLC layer and protocol layers above the RLC layer are set on the CU, and functions of the protocol layers below the RLC layer are set on the DU. Alternatively, division is performed at a protocol layer. For example, a part of functions of the RLC layer and functions of the protocol layers above the RLC layer are set on the CU, and a remaining function of the RLC layer and functions of the protocol layers below the RLC layer are set on the DU. In addition, division may alternatively be performed in another manner. For example, division is performed based on a delay. A function whose processing time needs to meet a delay requirement is set on the DU, and a function whose processing time does not need to meet the delay requirement is set on the CU.

In addition, the radio frequency apparatus may be independently integrated and not placed in the DU, or may be integrated in the DU, or may be partially remotely disposed and partially integrated into the DU. This is not limited herein.

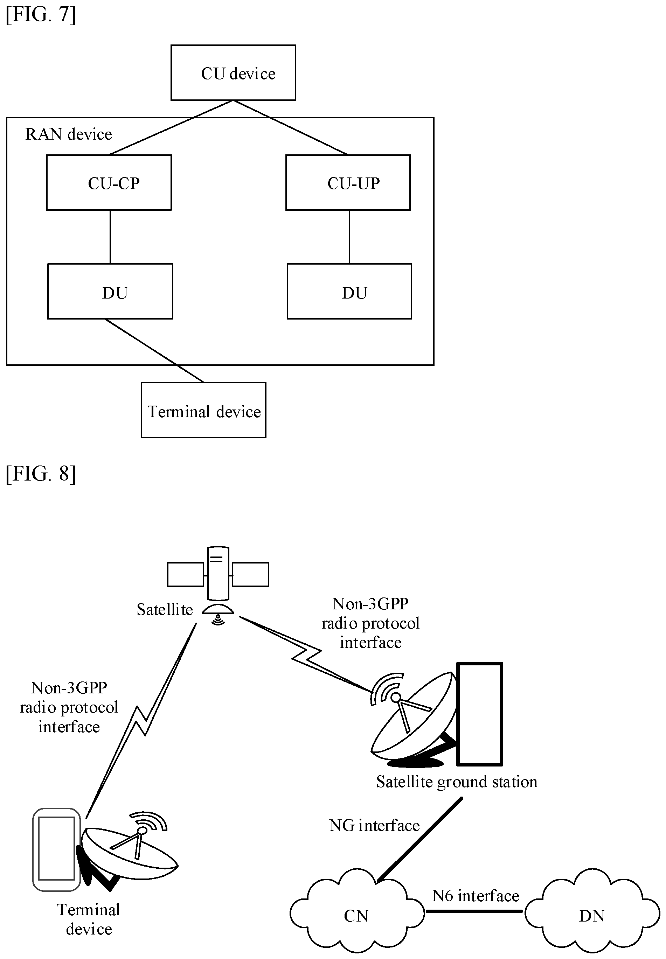

FIG. 7 is a diagram of another network architecture to which an embodiment of this application is applicable. Compared with the network architecture shown in FIG. 6, in FIG. 7, a control plane (CP) and a user plane (UP) of a CU may be further separated and divided into different entities for implementation. The different entities are respectively a control plane (control plane, CP) CU entity (namely, a CU-CP entity) and a user plane (user plane, UP) CU entity (namely, a CU-UP entity).

In the foregoing network architecture, signaling generated by the CU may be sent to a terminal device through a DU, or signaling generated by the terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling of the RRC or PDCP layer is eventually processed as signaling of the PHY layer, to be sent to the terminal device, or is converted from received signaling of the PHY layer. In this architecture, it may also be considered that the signaling of the RRC layer or the PDCP layer is sent by the DU, or sent by the DU and radio frequency loading.

It should be understood that in different systems, the CU (including the CU-CP and the CU-UP) or the DU may alternatively have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

It should be understood that the network architectures shown in FIG. 5 to FIG. 7 are merely examples of the communication system used in this application, and do not constitute any limitation on embodiments of this application. Particularly, embodiments of this application are further applicable to another network architecture, where for example, a base station and a core network are not distinguished, that is, the base station and the core network may belong to a same network device. The network device communicates with the terminal device; or the terminal device communicates with the terminal device.

It should be understood that, in embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the communication method provided in embodiments of this application may be the terminal device or the network device, or a functional module, a chip, or a circuit that can invoke and execute the program in the terminal device or the network device.

In addition to the communication systems shown in FIG. 5 to FIG. 7, the communication solutions provided in embodiments of this application are further applicable to a satellite system. The following describes a satellite system to which the communication solutions provided in embodiments of this application are applicable. Based on a communication mode of a satellite, the satellite system may have a transparent mode and a regenerative (regenerative) mode. The transparent mode may also be referred to as a transparent forwarding mode. In the transparent mode, the satellite may also be referred to as a satellite base station or the like. The satellite is configured to: convert frequencies and forward a signal, and the signal is generated and sent by a satellite ground station. In the regenerative mode, the satellite may carry (or be coupled to) a base station or a DU in the base station. The satellite can parse and process a signal received from the ground, and send the processed signal to the terminal device, thereby implementing signal regeneration.

For example, FIG. 8 is a diagram of a satellite system in a transparent mode to which an embodiment of this application is applicable. In FIG. 8, a satellite and/or a satellite ground station may be used as an example of a network device.

As shown in FIG. 8, the satellite may access a network by using a non-3GPP radio protocol (non-3GPP radio protocol). A communication connection is established between a terminal device and the satellite and between the satellite and the satellite ground station through a non-3GPP radio protocol interface. The satellite ground station may include an access point. The satellite ground station may communicate with a CN through a next generation (next generation, NG) interface (for example, an N2 interface or an N3 interface), and the CN communicates with a data network (data network, DN) through an N6 interface.

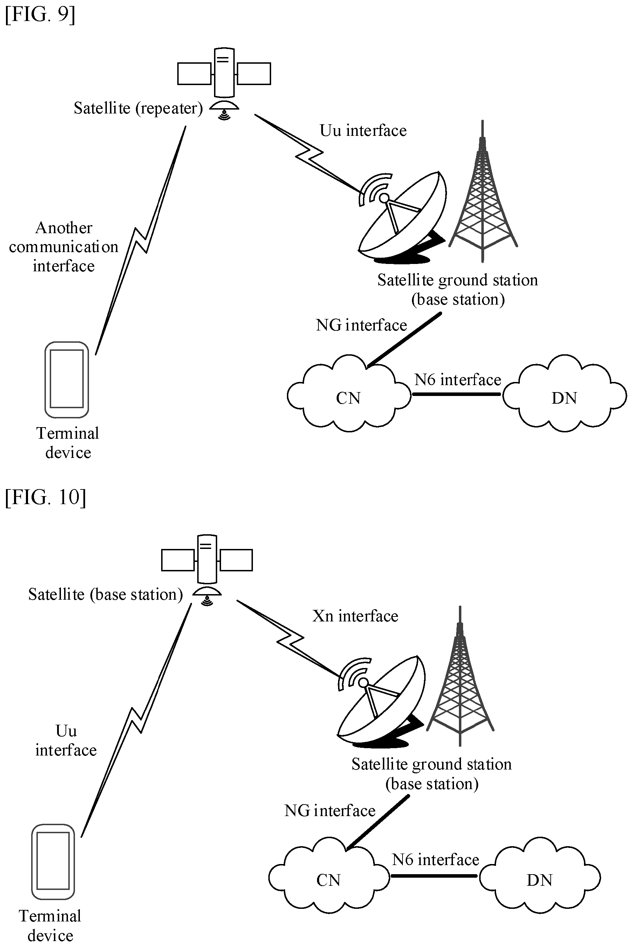

For example, FIG. 9 is a diagram of a satellite system in another transparent mode to which an embodiment of this application is applicable. In FIG. 9, a satellite and/or a satellite ground station may be used as an example of a network device.

Different from FIG. 8, in FIG. 9, the satellite may access a network by using a 3GPP radio protocol. As shown in FIG. 9, the satellite ground station is a base station, and the satellite may be equivalent to a repeater (repeater). A communication connection may be established between the satellite and the satellite ground station through an Uu interface (or referred to as an air interface), and a communication connection may be established between the terminal device and the satellite through another transceiver. Interfaces between the satellite ground station, a CN, and a DN are the same as those in FIG. 8. For similarities, refer to each other. Details are not described herein again.

For example, FIG. 10 is a diagram of a satellite system in a regenerative mode to which an embodiment of this application is applicable. In FIG. 10, a satellite and/or a satellite ground station may be used as an example of a network device.

As shown in FIG. 10, the satellite carries a base station, and the satellite ground station carries a base station. A communication connection may be established between a terminal device and the satellite through an Uu interface, and a communication connection may be established between the satellite and the satellite ground station through an Xn interface. Interfaces between the satellite ground station, a CN, and a DN are the same as those in FIG. 8. For similarities, refer to each other. Details are not described herein again. Optionally, in the satellite system shown in FIG. 10, the satellite ground station may alternatively be a gateway of the satellite, and does not include a base station.

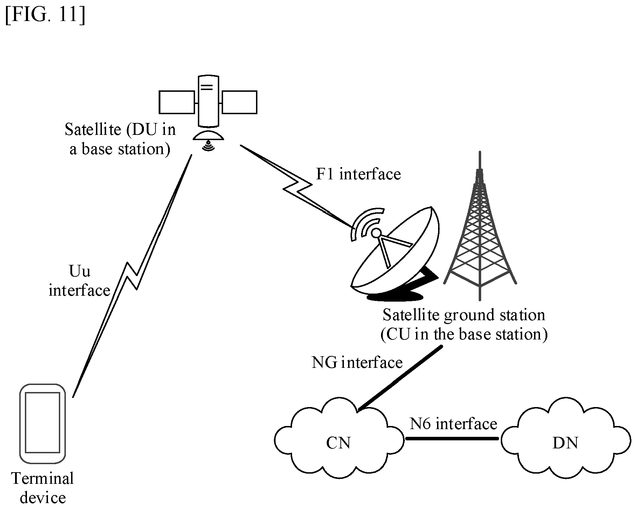

For example, FIG. 11 is a diagram of a satellite system in another regenerative mode to which an embodiment of this application is applicable. In FIG. 11, a satellite and/or a satellite ground station may be used as an example of a network device.

As shown in FIG. 11, the satellite carries a DU in a base station, and the satellite ground station includes a CU in the base station. A communication connection may be established between a terminal device and the satellite through an Uu interface, and a communication connection may be established between the satellite and the satellite ground station through an F1 interface. Interfaces between the satellite ground station, a CN, and a DN are the same as those in FIG. 8. For similarities, refer to each other. Details are not described herein again.

It should be noted that the satellite ground stations in the satellite systems shown in FIG. 8 to FIG. 11 may be configured to connect a satellite to a network. The satellite ground station may also be referred to as a gateway (gateway), a ground station, an earth station, or the like.

In addition, the satellite systems shown in FIG. 8 to FIG. 11 do not constitute any limitation on a communication system to which this embodiment of this application is applicable. In addition, names of devices in a satellite system are not limited in FIG. 8 to FIG. 11. For example, in different communication scenarios, a satellite ground station, a satellite, or the like may have another name. In addition, the satellite in this embodiment of this application may alternatively be replaced with another non-terrestrial network device, for example, a high-altitude platform device or a high-altitude flight device. This is not limited in embodiments of this application.

For example, the network device sends a same SIB1 (or SIB1bis) in a cell. Correspondingly, all terminal devices that receive the SIB1 (or SIB1bis) in the cell receive the same SIB1 (or SIB1bis). It should be noted that, that the terminal device sends the same SIB1 (or SIB1bis) does not mean that the SIB1 (or SIB1bis) remains unchanged at any time, but means that the terminal device, for example, only sends the same SIB1 (or SIB1bis) in the cell within a period of time (for example, within one SIB1 (or SIB1bis) period or one modification period).

The SIB1 (or SIB1bis) carries scheduling information of the OSI. Therefore, after receiving the SIB1 (or SIB1bis), a terminal device in a cell monitors the OSI based on the scheduling information of the OSI in the SIB1 (or SIB1bis). However, in the NTN, a cell has a large coverage region. Therefore, the network device may not send the OSI in any region of the cell. For example, for content of the scheduling information of the OSI, refer to the foregoing scheduling information of the OSI.

Therefore, if the terminal device still monitors the OSI based on the scheduling information of the OSI in the SIB1 (or SIB1bis), but the network device may not actually send the OSI, the terminal device performs OSI monitoring but does not receive the OSI. In other words, the terminal device performs invalid monitoring a plurality of times, and consequently, power consumption of the terminal device is high.

In view of this, an embodiment of this application provides a communication method. In the method, a first communication apparatus may obtain indication information, where the indication information indicates a region (namely, a first region set) in which first system information (for example, OSI, specifically, for example, a SIB19) is sent and/or a region (namely, a second region set) in which the first system information is not sent. In this way, the first communication apparatus may clearly determine regions in which the first system information is sent and regions in which the first system information is not sent. The first communication apparatus may not monitor the first system information in the region in which the first system information is not sent, thereby reducing invalid monitoring of the first communication apparatus, and saving power.

The following describes the method provided in this embodiment of this application with reference to the accompanying drawings. For example, in the accompanying drawings corresponding to embodiments of this application, steps represented by dashed lines are optional steps. For example, the first communication apparatus in embodiments of this application is, for example, any terminal device in FIG. 5 to FIG. 11. For example, a second communication apparatus is, for example, the CN device and/or the network device in FIG. 5 to FIG. 7, or is any satellite and/or satellite ground station in FIG. 8 to FIG. 11. In addition, if the technical solutions provided in embodiments of this application are applied to another communication system, a name, a function, and/or the like of an apparatus may change. This is not limited in embodiments of this application.

An apparatus (for example, the first communication apparatus or the second communication apparatus) in embodiments of this application may be one or more devices, or may be a software module or a hardware module in a device. This is not specifically limited in embodiments of this application. For example, the first communication apparatus in embodiments of this application may be, for example, a terminal device, or a software module or a hardware module (for example, a chip) in a terminal device, or another device, or a software module or a hardware module (for example, a chip) in another device. This is not limited. The second communication apparatus is, for example, an access network device, for example, a satellite and/or a satellite ground station in an NTN. Alternatively, the second communication apparatus may be a software module or a hardware module (for example, a chip) in an access network device, or another device, or a software module or a hardware module (for example, a chip) in another device. This is not limited.

It should be noted that the SIB1 in embodiments of this application may include/be replaced with a SIB1bis, or a SIB1 or a SIB1bis. In addition, an indication in this application may include a direct indication, an indirect indication, an explicit indication, or an implicit indication. In this application, "include" may include: "directly include", "indirectly include", "explicitly include", or "implicitly include". For example, that information A directly indicates information B may be that the information A carries the information B. That information A indirectly indicates information B may be that the information A carries information C and information D, and a receive end determines the information B based on the information C and the information D. In addition, "indication" and "including" in embodiments of this application may be replaced with each other.

It should be noted that the region in embodiments of this application may include/be replaced with any one or more of the following: a range, an SSB, a beam (beam), or a region/range/beam corresponding to the SSB. It should be noted that the association in embodiments of this application may include/be replaced with: corresponding. Corresponding may include/be replaced with: association.

It should be noted that the first system information (or second system information) in embodiments of this application may include/be replaced with: DCI corresponding to (or associated with) the first system information (or the second system information), and/or the first system information (or the second system information). For example, the DCI corresponding to the first system information (or the second system information) may include/be replaced with: DCI for scheduling the first system information (or the second system information), or DCI scrambled by using an SI-RNTI. For example, sending (or receiving) the first system information may include/be replaced with: sending (or receiving) the DCI corresponding to the first system information. For example, skipping sending (or skipping receiving) the first system information may include/be replaced with: skipping sending (or skipping receiving) the DCI corresponding to the first system information.

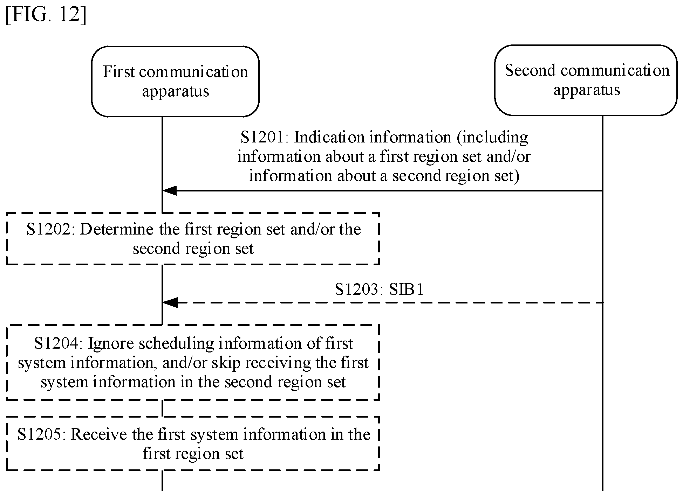

FIG. 12 is a diagram of a communication method according to an embodiment of this application.

S1201: A first communication apparatus obtains indication information.

For example, that the first communication apparatus obtains the indication information may include/be replaced with: The first communication apparatus receives the indication information. For example, correspondingly, a second communication apparatus sends the indication information, or a second communication apparatus sends the indication information to the first communication apparatus.

For example, obtaining may include/be replaced with: obtained, receiving, or received.

Optionally, the second communication apparatus may send the indication information in a broadcast manner or a unicast manner. This is not specifically limited in embodiments of this application.

For example, the indication information may be included in a message broadcast by the second communication apparatus, or the indication information may be included in a message sent by the second communication apparatus by using dedicated signaling, or the indication information may be included in a message sent by the second communication apparatus to the first communication apparatus by using dedicated signaling.

For example, the second communication apparatus broadcasts the indication information, or the second communication apparatus sends the indication information by using dedicated signaling, or the second communication apparatus sends the indication information to the first communication apparatus by using dedicated signaling.

Optionally, the indication information may be carried in a SIB1 (for example, a first SIB1), a SIB1bis (for example, a first SIB1bis), downlink control signaling (downlink control information, DCI) (for example, first DCI), a master information block (master information block, MIB) (for example, a first MIB), or the like. This is not specifically limited in embodiments of this application. For example, the DCI may include/be replaced with paging (paging) DCI. For example, the indication information may be carried in a short message of the paging DCI.

For example, the paging DCI may include/be replaced with paging-related DCI, or DCI scrambled by using a P-RNTI.

For example, the MIB may include system information transmitted on a BCH. For example, the MIB may include any one or more of the following: necessary information for a terminal device/the first communication apparatus to access a network, cell barring status information, or basic physical layer information of a cell required for receiving more system information.

For example, the SIB1 may include any one or more of the following: scheduling information of OSI, information required for an initial access, information related to a cell access (for example, information related to evaluating whether a terminal device is allowed to access a cell), common (or public, or public to all UEs, or common to all UEs) radio resource configuration information, or barring information used for unified access control (unified access control, UAC).

For example, the SIB1bis may include the scheduling information of OSI and/or satellite-related information. For example, the satellite-related information may include information about a satellite of a local cell (or a current cell) and/or information about a satellite of a neighboring cell.

Optionally, the indication information may include/indicate information about a first region set and/or information about a second region set. It should be understood that the first region set and the second region set are merely used to distinguish between two region sets in terms of names, but sizes of the two region sets, quantities of regions included in the two region sets, and the like are not limited.

In a possible implementation, the first region set may include/be a region in which first system information is sent, or a region in which first system information exists. Optionally, the second region set may include/be a region in which the first system information is not sent, or a region in which the first system information does not exist.

For example, the first region set may include/be a region in which the second communication apparatus sends the first system information. For example, the second region set may include/be a region in which the second communication apparatus does not send the first system information.

For example, sending may include/be replaced with one or more of the following: possibly sending, broadcasting, or possibly broadcasting.

For example, sending the first system information may include/be replaced with one or more of the following: possibly sending the first system information, broadcasting the first system information, or possibly broadcasting the first system information.

For example, the second communication apparatus sends/possibly sends the first system information in the first region set.

For example, the first region set may include/be replaced with: a region in the first region set, or a region in/within/of the first region set, or a region in/within/of the first region set.

For example, not sending may include/be replaced with one or more of the following: not possibly sending, not broadcasting, or not possibly broadcasting.

For example, not sending the first system information may include/be replaced with one or more of the following: not possibly sending the first system information, not broadcasting the first system information, or not possibly broadcasting the first system information.

For example, the second communication apparatus does not send/does not possibly send the first system information in the second region set.

For example, the second region set may include/be replaced with: a region in the second region set, or a region in/within/of the second region set, or a region in/within/of the second region set.

In another possible implementation, the first region set may include/be a region in which the first system information is received. Optionally, the second region set may include/be a region in which the first system information is not received.

For example, the first region set may include/be a region in which the first communication apparatus receives the first system information. For example, the second region set may include/be a region in which the first communication apparatus does not receive the first system information.

For example, receiving may include/be replaced with one or more of the following: possibly receiving, obtaining, possibly obtaining, monitoring, or possibly monitoring.

For example, receiving the first system information may include/be replaced with one or more of the following: possibly receiving the first system information, obtaining the first system information, or possibly obtaining the first system information. For example, receiving the first system information may be understood as performing or possibly performing an action of receiving the first system information, but whether the first system information is received is not limited.

For example, the first communication apparatus receives/possibly receives the first system information in the first region set.

For example, not receiving may include/be replaced with one or more of the following: not possibly receiving, not obtaining, not possibly obtaining, not monitoring, or not possibly monitoring.

For example, not receiving the first system information may include/be replaced with one or more of the following: not possibly receiving the first system information, not obtaining the first system information, or not possibly obtaining the first system information. For example, not receiving the first system information may be understood as not performing an action of receiving the first system information.

For example, the first communication apparatus does not receive/does not possibly receive the first system information in the second region set.

In another possible implementation, the first region set may include/be an edge region. Optionally, the second region set may include/be a central region.

For example, the edge region may include/be replaced with a non-central region.

For example, the central region may include/be replaced with a non-edge region.

For example, the edge region may include/be replaced with an edge region of a cell (for example, a first cell).

For example, the central region may include/be replaced with a central region of a cell (for example, a first cell).

For example, the second communication apparatus sends the first system information in the edge region.

For example, the second communication apparatus needs to send/possibly sends/is to send the first system information over/in/within the edge region. Optionally, the second communication apparatus sends the first system information in the edge region, or may send the first system information in the edge region in an on-demand manner. For example, a broadcast status of the first system information/an SI message related to the first system information is: not broadcast, on-demand, or broadcast on demand. For example, the second communication apparatus does not always broadcast the first system information, and broadcasts the first system information when the first communication apparatus or the terminal device requests the first system information.

For example, the second communication apparatus does not send the first system information in the central region.

For example, the second communication apparatus does not send/does not possibly send the first system information over/in/within the central region.

For example, the second communication apparatus needs to send/possibly sends/is to send the first system information over/in/within the first region set. Optionally, the second communication apparatus sends the first system information in the first region set, or may send the first system information in the first region set in an on-demand manner. For example, a broadcast status of the first system information/an SI message related to the first system information is: not broadcast, on-demand, or broadcast on demand. For example, the second communication apparatus does not always broadcast the first system information, and broadcasts the first system information when the first communication apparatus or the terminal device requests the first system information.

Optionally, the first system information may include/includes only information about a neighboring cell of the first cell. For example, the first system information may include one or more pieces of system information, or SIBs, or SI messages. Optionally, the first system information may include any one or more of the following: a SIB19, a SIB2, a SIB3, a SIB4, a SIB5, an SI message corresponding to the SIB19, an SI message corresponding to the SIB2, an SI message corresponding to the SIB3, an SI message corresponding to the SIB4, and an SI message corresponding to the SIB5.

Optionally, it should be understood that, unless otherwise specified, the first system information in embodiments of this application may be considered as a type of information or a piece of information, and is not specific information sent/received/transmitted at a specific time.

Optionally, the first system information or that the first system information includes/is which system information, SIB(s), or SI message (s) may be configured by the second communication apparatus, for example, may be configured by the second communication apparatus by using an RRC message, or may be preconfigured, or may be defined in a protocol. This is not limited herein.

For example, the SIB2 may include cell reselection information. For example, the SIB2 is mainly related to a serving cell. For example, the SIB2 may include common cell reselection information (or applicable to at least one type of cell reselection, but not necessarily all) for intra-frequency, inter-frequency, and/or inter-system cell reselection. For example, the SIB2 may include intra-frequency cell reselection information other than that related to a neighboring cell.

For example, the SIB3 may include/includes only neighboring cell information related/only related to intra-frequency cell reselection. For example, the SIB3 may include a cell having a specific reselection parameter and an exclude-listed cell (exclude-listed cell).

For example, the SIB4 may include/includes only information related/only related to inter-frequency cell reselection. For example, the SIB4 may include information about another cell-reselection-related NR frequency and/or inter-frequency (inter-frequency) neighboring cell. For example, the SIB4 may include information that can be used for NR idle/inactive state measurement. For example, the SIB4 may include a frequency-common cell reselection parameter and a cell-specific reselection parameter.

For example, the SIB5 may include/includes only information related to inter-system (inter-RAT) cell reselection. For example, the SIB5 may include information related to a cell-reselection-related E-UTRA frequency and/or E-UTRA neighboring cell. For example, the SIB5 may include a frequency-common cell reselection parameter.

For example, the SIB19 may include/includes only satellite-assisted information (for example, satellite-assisted information used for or for an NTN access).

Optionally, the first system information and/or the indication information are/is associated with the first cell. For example, the first system information and/or the indication information may be sent by the second communication apparatus in/over/within the first cell. For another example, the first system information and/or the indication information may be obtained by the first communication apparatus in/over/within the first cell.

Optionally, the first system information may not include information about the first cell. For example, the first system information may not include one or more of the following, and/or an SI message corresponding to one or more of the following: a MIB, a SIB1, a SIB1bis, a SIB2, a SIB3, a SIB4, a SIB5, a SIB6, a SIB7, a SIB8, a SIB9, or a SIB related to a public warning system (public warning system, PWS).

For example, the SIB6 may include an earthquake and tsunami warning system (earthquake and tsunami warning system, ETWS) primary notification.

For example, the SIB7 may include an ETWS secondary notification.

For example, the SIB8 may include a commercial mobile alert service (commercial mobile alert service, CMAS) notification.

For example, the SIB related to the PWS may include a SIB related to the ETWS and/or a SIB related to the CMAS.

For example, the SIB9 may include information related to global positioning system (global positioning system, GPS) time and/or coordinated universal time (coordinated universal time, UTC).

It should be understood that, with continuous evolution of standards, or in different communication standards (for example, NR and/or LTE), any one or more of the MIB, the SIB1, the SIB1bis, the SIB2, the SIB3, the SIB4, the SIB5, the SIB6, the SIB7, the SIB8, the SIB related to the PWS, and the SIB9 may be replaced with other names. This is not specifically limited in embodiments of this application. In addition, with continuous evolution of standards, other information may be further introduced into the system information. In this case, the first system information may further include other system information. This is not specifically limited herein.

For example, the first region set may include at least one region.

For example, the second region set may include at least one region.

Optionally, the first region set belongs to the first cell. Optionally, the second region set belongs to the first cell.

For example, the first cell may be a cell in which the first communication apparatus is currently located, or may be any cell of the second communication apparatus. This is not specifically limited herein.

Optionally, the first cell may include/may be divided into X regions. For example, the X regions form the first cell, in other words, the X regions form a complete first cell. For example, X may be an integer greater than or equal to 1. For example, X is 128, 256, 32, or 64.

For example, the first region set may include/be a part of or one or more of the X regions.

For example, the second region set may include/be a part of or one or more of the X regions.

For example, the first region set may include/be a plurality of consecutive regions in the X regions, or may include/be a plurality of inconsecutive regions in the X regions. This is not specifically limited in embodiments of this application.

For example, the second region set may include/be a plurality of consecutive regions in the X regions, or may include/be a plurality of inconsecutive regions in the X regions. This is not specifically limited in embodiments of this application.

For example, the X regions may be configured by the second communication apparatus, for example, may be configured by the second communication apparatus by using an RRC message, or may be preconfigured, or may be defined in a protocol. This is not limited herein. For example, the X regions may be obtained by dividing the first cell according to a specific rule (for example, a first rule). For example, the first rule may be configured by the second communication apparatus, for example, may be configured by the second communication apparatus by using an RRC message, or may be preconfigured, or may be defined in a protocol. This is not limited herein.

For example, the X regions may be obtained by evenly dividing the first cell. For another example, the X regions are obtained through division based on synchronization signals, and any two of the X regions correspond to different synchronization signals. Specifically, for example, indexes of synchronization signals corresponding to any two regions are different. For example, the synchronization signal includes/is replaced with any one or more of the following: a synchronization signal (synchronization signal, SS), a synchronization signal block (synchronization signal block, SSB), or a synchronization signal and PBCH block (synchronization signal block and PBCH block or SS/PBCH block, SSB). Optionally, the region may alternatively be described as a synchronization signal (for example, an SSB), or a region corresponding to a synchronization signal. For example, the index of the region may be an index of a synchronization signal corresponding to the region.

Alternatively, for example, the X regions are obtained through division based on SSBs. For example, one SSB is/corresponds to one region. Optionally, the index of the region may be determined based on an index of the SSB. For example, the index of the region is equal to the index of the SSB. Alternatively, for example, the X regions are obtained through division based on beam positions. For example, one beam position is/corresponds to one region. Optionally, the index of the region may be determined based on an index of the beam position. For example, the index of the region is equal to the index of the beam position. Optionally, one beam position may include four SSBs. For example, the first region set may include/be replaced with any one or more of the following: a region corresponding to the first SSB set, a coverage region of the first SSB set, or a coverage region corresponding to the first SSB set. For example, the first SSB set may include/be replaced with an SSB corresponding to the first region set. The second region set may include/be replaced with any one or more of the following: a region corresponding to the second SSB set, a coverage region of the second SSB set, or a coverage region corresponding to the second SSB set. For example, the second SSB set may include/be replaced with an SSB corresponding to the second region set.

Alternatively, for example, the X regions are obtained through division based on beams. For example, one beam is/corresponds to one region. For example, any two of the X regions correspond to different beams.

For example, the SSB may include any one or more of the following: a primary synchronization signal (primary synchronization signal, PSS), a secondary synchronization signal (secondary synchronization signal, SSS), or a PBCH.

For example, the SSB may be used for synchronization and/or measurement.

Optionally, the region in this embodiment of this application may include/be replaced with a beam.

In a possible design, the X regions may only/all include/belong to the first region set. For example, the first cell is divided into regions (or a first region set) in which the first system information is sent. The region in which the first system information is sent may include/be replaced with: a region in which the second communication apparatus sends the first system information.

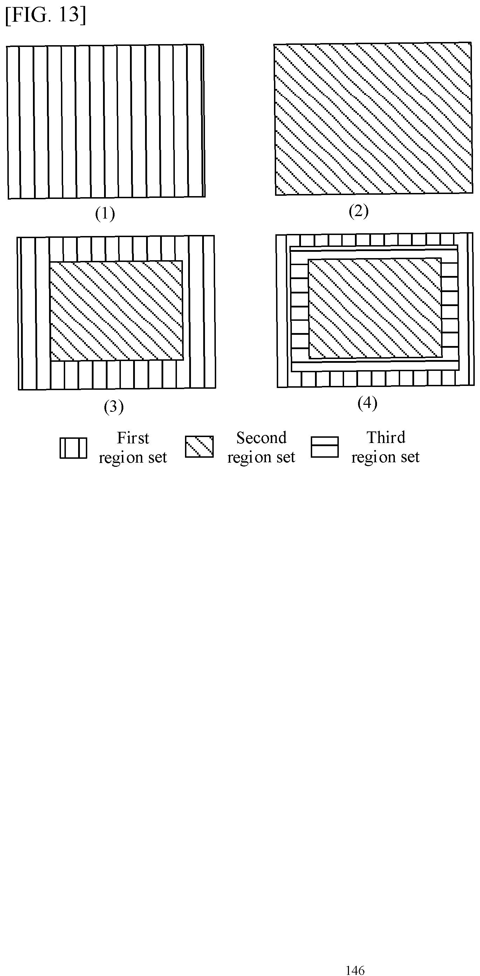

For example, FIG. 13 is a diagram of several types of X regions according to an embodiment of this application. As shown in (1) in FIG. 13, the X regions only/all include/belong to a first region set.

In another possible design, the X regions may only/all include/belong to a second region set. For example, the first cell is divided into regions (or the second region set) in which the first system information is not sent. The region in which the first system information is not sent may include/be replaced with: a region in which the second communication apparatus does not send the first system information.

For example, as shown in (2) in FIG. 13, the X regions only/all include/belong to a second region set.

Optionally, the X regions may only include/include/belong to a first region set and a second region set. For example, one part of the X regions (for example, M regions) include/belong to the first region set, and the other part of the X regions (for example, X-M regions) include/belong to the second region set. For example, the first cell/the entire first cell is divided into a region (or the first region set) in which the first system information is sent and a region (or the second region set) in which the first system information is not sent. For example, X is a positive integer. For example, M is a positive integer. For example, M is less than X.

For example, as shown in (3) in FIG. 13, the X regions only include/include/belong to a first region set and a second region set.

In still another possible design, the X regions may include/belong to a first region set, a second region set, and a third region set. For example, a part of the X regions (for example, M regions) include/belong to the first region set, a part of the X regions (for example, P regions) include/belong to the second region set, and another part of the X regions (for example, Y or X-M-P regions) include/belong to the third region set. For example, the first cell/the entire first cell is divided into a region (or the first region set) in which the first system information is sent, a region (or the second region set) in which the first system information is not sent, and another region set. For example, Y is equal to X-M-P. For example, any one or more of M, P, and Y are positive integers. For example, any one or more of M, P, and Y are less than X.

For example, as shown in (4) in FIG. 13, the X regions include/belong to a first region set, a second region set, and a third region set.

Optionally, the first region set may belong to/be located in a central region of the first cell. Optionally, the second region set may belong to/be located in an edge region of the first cell. The third region set may include at least one region. Optionally, the third region set may be a region in which the first system information is not sent, or may be a region in which the first system information is sent. This is not specifically limited herein. In a possible implementation, the third region set may be a region in which the first system information is not received, or may be a region in which the first system information is received. This is not specifically limited herein. Optionally, the third region set may be an edge region or may be a central region. This is not specifically limited herein. The region in which the first system information is received may include/be replaced with: a region in which the first communication apparatus receives the first system information. The region in which the first system information is not received may include/be replaced with: a region in which the first communication apparatus does not receive the first system information. Optionally, the third region set may be preconfigured or predefined. This is not specifically limited herein.

For example, areas/sizes of different regions mentioned in embodiments of this application may be the same or may be different. This is not limited herein. For example, when a region set (for example, the first region set or the second region set) includes a plurality of regions, areas/sizes of any two regions in the region set may be the same or may be different. This is not limited herein.

The region mentioned in embodiments of this application may be a two-dimensional region, for example, a two-dimensional region on the ground, or may be a three-dimensional or higher-dimensional region, for example, a building. In other words, dimensions of the region are not specifically limited in embodiments of this application.

For example, the information about the first region set may include/indicate/be replaced with any one or more of the following: the first region set, sending the first system information in the first region set (for example, the second communication apparatus sends the first system information in the first region set), or receiving the first system information in the first region set (for example, the first communication apparatus receives the first system information in the first region set).

For example, the information about the second region set may include/indicate/be replaced with any one or more of the following: the second region set, not sending the first system information in the second region set (for example, the second communication apparatus does not send the first system information in the first region set), or not receiving the first system information in the first region set (for example, the first communication apparatus does not receive the first system information in the first region set).

Optionally, the indication information may include/indicate/be replaced with any one or more of the following: sending the first system information in the first region set (for example, the second communication apparatus sends the first system information in the first region set), receiving the first system information in the first region set (for example, the first communication apparatus receives the first system information in the first region set), not sending the first system information in the second region set (for example, the second communication apparatus does not send the first system information in the first region set), and not receiving the first system information in the first region set (for example, the first communication apparatus does not receive the first system information in the first region set), or information indicating whether one or more regions (for example, a first region) belong to/are the first region set or the second region set.

Optionally, the first region set may include one region. For example, the first region set may include/be replaced with a first region.

Optionally, the second region set may include one region. For example, the second region set may include/be replaced with a first region.

Optionally, the indication information may include/indicate the information about the first region set and/or the information about the second region set in any one of the following manners. The following provides descriptions by using examples in combination with A1, A2, and A3.

A1: The indication information indicates the information about the first region set and/or the information about the second region set in a form of bitmap (bitmap).

For example, the indication information includes N bits, where N is a positive integer. A part or all of the N bits may be used to carry the information about the first region set and/or the information about the first region set. For example, N may be equal to a quantity of regions included in the first cell, for example, X. For example, N may alternatively be a quantity of regions included in the first region set, for example, M. For example, N may alternatively be a quantity of regions included in the second region set, for example, P. For example, N may alternatively be a total quantity of regions included in the first region set and the second region set, for example, M+P or X-Y. For example, N is 128, 256, 32, or 64.

Optionally, Y bits in the N bits may be used as reserved bits, or Y bits in the N bits may be used to carry other information (the other information is information other than the indication information), or Y bits in the N bits may be ignored or specific values of the Y bits may be ignored. This is not specifically limited.

Optionally, when N may be equal to the quantity (for example, X) of the regions included in the first cell, and the X regions further include the third region set, Y bits in the N bits may be used as reserved bits, or Y bits in the N bits may be used to carry other information (the other information is information other than the indication information), or Y bits in the N bits may be ignored or specific values of the Y bits may be ignored. This is not specifically limited herein. For example, the first communication apparatus/the second communication apparatus ignores values of Y bits in the N bits or Y bits in the N bits.

Optionally, positions of the Y bits in the N bits and/or a value of Y may be configured by the second communication apparatus, for example, may be configured by the second communication apparatus by using an RRC message, or may be preconfigured, or may be defined in a protocol. This is not limited herein. Optionally, the Y bits in the N bits may be consecutive or may be inconsecutive. This is not limited.

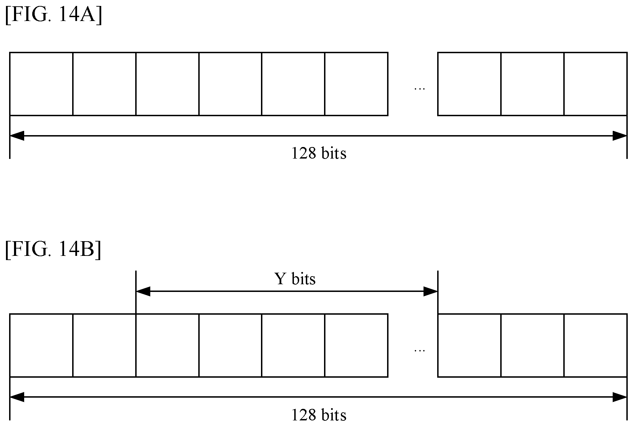

For example, FIG. 14A and FIG. 14B are examples of several types of N bits according to an embodiment of this application. As shown in FIG. 14A, the N bits include 128 bits, and one bit (or each bit) in the 128 bits is used to carry information indicating whether a region (or a region corresponding to the one bit) belongs to the first region set or the second region set. It should be understood that one block in FIG. 14A and FIG. 14B may represent one bit. As shown in FIG. 14B, the N bits include 128 bits, and there are Y bits in the 128 bits. One bit other than the Y bits in the 128 bits (or each bit other than the Y bits in the 128 bits) is used to carry information indicating whether a region (or a region corresponding to the one bit) belongs to the first region set or the second region set.

For example, one bit (for example, any bit or any bit other than the Y bits) in the N bits indicates whether the second communication apparatus sends the first system information or does not send the first system information in a region (or a region corresponding to the one bit), or indicates whether the first communication apparatus receives the first system information or does not receive the first system information in a region (or a region corresponding to the one bit), or indicates whether a region (or a region corresponding to the one bit) belongs to/is the first region set or the second region set. For example, if a value of a first bit is a first value, it indicates that the second communication apparatus sends the first system information in the first region, or indicates that the first communication apparatus receives the first system information in the first region, or indicates that the first region belongs to/is the first region set. If a value of a first bit is a second value, it indicates that the second communication apparatus does not send the first system information in the first region, or indicates that the first communication apparatus does not receive the first system information in the first region, or indicates that the first region belongs to/is the second region set. For example, the first value is 1, and the second value is 0; or the first value is 0, and the second value is 1. This is not limited herein. Optionally, a region is, for example, a region in which the first communication apparatus is currently located. Optionally, the first bit is associated with the first region. It should be understood that the first bit in embodiments of this application may be any one of the N bits, and the first bit is not limited to a bit at a first position in the N bits.

For example, the first bit in the N bits indicates whether the second communication apparatus sends the first system information or does not send the first system information in the first region, or indicates whether the first communication apparatus receives the first system information or does not receive the first system information in the first region, or indicates whether the first region belongs to/is the first region set or the second region set. For example, if the second communication apparatus sends the first system information in the first region, the first region is a region in the first region set; or if the second communication apparatus does not send the first system information in the first region, the first region is a region in the second region set. For example, the first region may be any region in the first region set and the second region set. It should be understood that the first region in embodiments of this application may be any region in the region set, and the first region is not limited to a region at a first position in the region set, or a region whose index is a start index.

For example, if a value of a first bit is a first value, it indicates that the second communication apparatus sends the first system information in the first region, or indicates that the first communication apparatus receives the first system information in the first region, or indicates that the first region belongs to/is the first region set. If a value of a first bit is a second value, it indicates that the second communication apparatus does not send the first system information in the first region, or indicates that the first communication apparatus does not receive the first system information in the first region, or indicates that the first region belongs to/is the second region set.

For example, one of the N bits is associated with one region. For example, different bits in the N bits are associated with different regions. For example, how the bits in the N bits are associated with the regions is not limited in this application.

Optionally, a position of the first bit in the N bits may indicate/be used to determine an index of the first region.

In a possible design, an F^{th} bit at a leftmost/rightmost/least significant/most significant bit (or starting from the leftmost/rightmost/least significant/most significant bit) in the N bits corresponds to a region whose index is F or corresponds to a region related to F (for example, a region whose index is F-1 or F+1).

Optionally, F is an integer, a positive integer, or a non-negative integer.

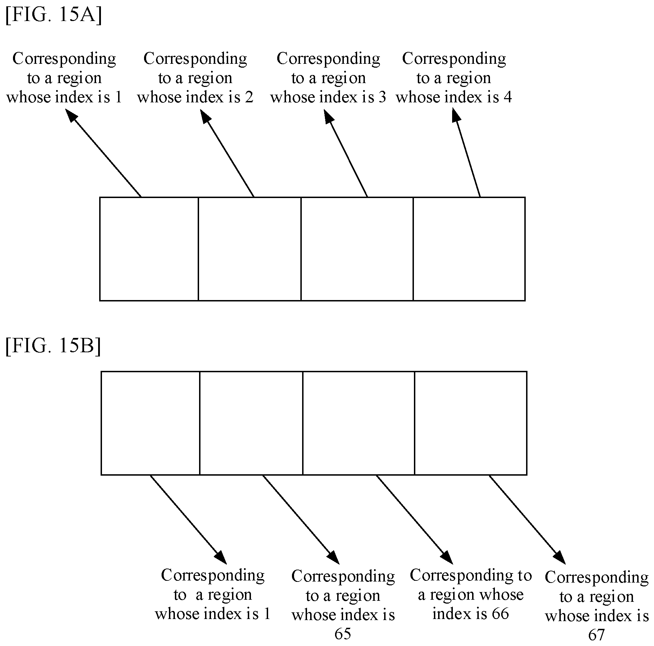

For example, FIG. 15A and FIG. 15B are diagrams of two types of N bits according to an embodiment of this application. As shown in FIG. 15A, there are four regions in the first cell, indexes of the four regions are respectively 1 to 4, and the N bits are specifically four bits. The four bits from left to right or from a most significant bit to a least significant bit respectively correspond to a region whose index is 1, a region whose index is 2, a region whose index is 3, and a region whose index is 4.

In another possible design, an F^{th} bit at a leftmost/rightmost/least significant/most significant bit (or starting from the leftmost/rightmost/least significant/most significant bit) in the N bits corresponds to an F^{th} region in regions other than the third region set that are in ascending or descending order of indexes, or corresponds to a region related to F (for example, an (F+1)^{th} or (F-1)^{th} region in regions other than the third region set that are in ascending or descending order of indexes).

As shown in FIG. 15B, there are 67 regions in the first cell, indexes of the 67 regions are respectively 1 to 67, and regions whose indexes are 2 to 64 belong to the third data set. The N bits are specifically four bits. The four bits from left to right or from a most significant bit to a least significant bit respectively correspond to a region whose index is 1, a region whose index is 65, a region whose index is 66, and a region whose index is 67.

In a possible implementation, each/all of the N bits indicates/indicate sending the first system information in a corresponding region, or belonging to/being the first region set. For example, in this case, it may be considered that the N bits carry the information about the first region set. In this case, optionally, bits in the N bits are in a one-to-one correspondence with regions in the first region set. In other words, each bit in the N bits corresponds to one region in the first region set.

For example, the N bits may be specifically 11111. "0" indicates not sending the first system information or belonging to/being the second region set, and "1" indicates sending the first system information or belonging to/being the first region set. In this case, the N bits indicate sending the first system information in all regions corresponding to the N bits or belonging to/being the first region set. In this case, the first region set includes/is the regions corresponding to the N bits.

In another possible implementation, each/all of the N bits indicates/indicate not sending the first system information in a corresponding region, or belonging to/being the second region set. For example, in this case, it may be considered that the N bits carry the information about the second region set. In this case, optionally, bits in the N bits are in a one-to-one correspondence with regions in the second region set. In other words, each bit in the N bits corresponds to one region in the second region set.

For example, the N bits may be specifically 0000. "0" indicates not sending the first system information or belonging to/being the second region set, and "1" indicates sending the first system information or belonging to/being the first region set. In this case, the N bits indicate not sending the first system information in all regions corresponding to the N bits, or belonging to/being the second region set. In this case, the second region set includes/is the regions corresponding to the N bits.

In another possible implementation, a part of the N bits indicate sending the first system information in a corresponding region, or belonging to/being the first region set, and another part of the N bits indicate not sending the first system information in a corresponding region, or belonging to/being the second region set. For example, in this case, it may be considered that the N bits carry the information about the first region set and the information about the second region set. In this case, optionally, the bits in the N bits are in a one-to-one correspondence with the regions in the first region set and the second region set. In other words, each bit in the N bits corresponds to one region in the first region set and the second region set.

For example, the N bits may be specifically 000000001. "0" indicates not sending the first system information or belonging to/being the second region set, and "1" indicates sending the first system information or belonging to/being the first region set. In this case, the N bits indicate not sending the first system information in all regions corresponding to bits whose values are 0, or belonging to/being the second region set, and sending the first system information in all regions corresponding to the bits whose values are 1, or belonging to/being the first region set. In this case, the first region set includes/is a region corresponding to a bit whose value is 1, and the second region set includes/is a region corresponding to a bit whose value is 0.

A2: The indication information indicates a quantity and/or indexes of the regions in the first region set, or a quantity and/or indexes of the regions in the second region set, or a quantity and/or indexes of the regions in the first region set and a quantity and/or indexes of the regions in the second region set.

Optionally, the indexes of the regions in the first region set are consecutive.

Optionally, the indexes of regions/two regions/two adjacent regions in the first region set satisfy a first relationship. For example, the first relationship may be that indexes of two regions/two adjacent regions are consecutive and increasing, or indexes of two regions/two adjacent regions are consecutive and decreasing, or indexes of two adjacent regions differ by a third value. For example, the first relationship indicates that the indexes of two regions/two adjacent regions are consecutive. In this case, the indexes of the regions in the first region set are consecutive. For example, the third value is 1, 2, 3, or another value. Optionally, the first relationship may be configured by the second communication apparatus, for example, may be configured by the second communication apparatus by using an RRC message, or may be preconfigured, or may be defined in a protocol. This is not limited herein.

Optionally, the indexes of the regions in the second region set are consecutive.

In a possible design, indexes of regions/two regions/two adjacent regions in the second region set satisfy a second relationship. For example, the second relationship may be that indexes of two regions/two adjacent regions are consecutive and increasing, or indexes of two regions/two adjacent regions are consecutive and decreasing, or indexes of two regions/two adjacent regions differ by a fourth value. For example, the second relationship indicates that the indexes of two regions/two adjacent regions are consecutive. In this case, the indexes of regions in the second region set are consecutive. For example, the fourth value is 1, 2, 3, or another value. For example, the fourth value is the same as or different from the third value. Optionally, the second relationship may be configured by the second communication apparatus, for example, may be configured by the second communication apparatus by using an RRC message, or may be preconfigured, or may be defined in a protocol. This is not limited herein.

For example, the indication information may indicate (or include) at least one piece of information in A2-1 to A2-4.

A2-1: First index information. For example, the first index information indicates a start index and/or an end index of regions in the first region set. For example, the first index information may be considered as an example of the information about the first region set. Alternatively, for example, A2-1 may be considered as an example in which the indication information indicates (or includes) the information about the first region set.

For example, the first index information indicates a start index or an end index of regions in the first region set. Alternatively, the first index information indicates a start index and an end index of regions in the first region set.

In a possible implementation, a quantity of regions in the first region set may be preconfigured, or may be defined in a protocol, or may be fixed. Optionally, the quantity of regions in the first region set is 20 or another value. This is not limited herein.

For example, if the first index information indicates that the start index of regions in the first region set is 0 and the quantity of regions in the first region set is 20, it indicates that the first region set includes regions whose indexes are 0 to 19, or all regions whose indexes are 0 to 19 are regions in which the first system information is sent.

For another example, if the first index information indicates that the end index of regions in the first region set is 255, and the quantity of regions in the first region set is 20, it indicates that the first region set includes regions whose indexes are 236 to 255, or all regions whose indexes are 236 to 255 are regions in which the first system information is sent.

In another possible implementation, the start index of regions in the first region set may be preconfigured, or may be defined in a protocol, or may be fixed. For example, the start index of regions in the first region set is 0, 1, or another value.

For example, if the first index information indicates that the end index of regions in the first region set is 19, and the start index of regions in the first region set is 0, it indicates that the first region set includes regions whose indexes are 0 to 19, or all regions whose indexes are 0 to 19 are regions in which the first system information is sent.

In another possible implementation, the end index of regions in the first region set may be preconfigured, or may be defined in a protocol, or may be fixed.

For example, the start index of regions in the first region set is 255, 256, 127, 128, 32, 31, 64, 63, or another value.

For example, if the first index information indicates that the start index of regions in the first region set is 236, and the end index of regions in the first region set is 255, it indicates that the first region set includes regions whose indexes are 236 to 255, or all regions whose indexes are 236 to 255 are regions in which the first system information is sent.

For another example, if the first index information indicates that the start index and the end index of regions in the first region set are 0 and 19 respectively, it indicates that the first region set includes regions whose indexes are 0 to 19, that is, all regions whose indexes are 0 to 19 are regions in which the first system information is sent.

A2-2: Second index information. For example, the second index information indicates a start index and/or an end index of regions in the second region set. For example, the second index information may be considered as an example of the information about the second region set. Alternatively, for example, A2-2 may be considered as an example in which the indication information indicates (or includes) the information about the second region set.

For example, the second index information indicates a start index or an end index of regions in the second region set, or the second index information indicates a start index and an end index of regions in the second region set.

In a possible implementation, a quantity of regions in the second region set may be preconfigured, or may be defined in a protocol, or may be fixed. Optionally, the quantity of regions in the second region set is 20 or another value. This is not limited herein.

For example, if the first index information indicates that the start index of regions in the second region set is 0 and the quantity of regions in the second region set is 20, it indicates that the second region set includes regions whose indexes are 0 to 19, or all regions whose indexes are 0 to 19 are regions in which the first system information is not sent.

For another example, if the first index information indicates that the end index of regions in the second region set is 255 and the quantity of regions in the second region set is 20, it indicates that the second region set includes regions whose indexes are 236 to 255, or all regions whose indexes are 236 to 255 are regions in which the first system information is not sent.

In another possible implementation, the start index of regions in the second region set may be preconfigured, or may be defined in a protocol, or may be fixed. Optionally, the start index of regions in the second region set is 0, 1, or another value.

For example, if the first index information indicates that the end index of regions in the second region set is 19 and the start index of regions in the second region set is 0, it indicates that the second region set includes regions whose indexes are 0 to 19, or all regions whose indexes are 0 to 19 are regions in which the first system information is not sent.

In another possible implementation, the end index of regions in the second region set may be preconfigured, or may be defined in a protocol, or may be fixed.

For example, the start index of regions in the second region set is 255, 256, 127, 128, 32, 31, 64, 63, or another value.

For example, if the first index information indicates that the start index of regions in the second region set is 236 and the end index of regions in the second region set is 255, it indicates that the second region set includes regions whose indexes are 236 to 255, or all regions whose indexes are 236 to 255 are regions in which the first system information is not sent.

For another example, if the first index information indicates that the start index and the end index of regions in the second region set are 0 and 19 respectively, it indicates that the second region set includes regions whose indexes are 0 to 19, or all regions whose indexes are 0 to 19 are regions in which the first system information is not sent.

A2-3: First quantity information. For example, the first quantity information indicates a quantity of regions in the first region set. For example, the first quantity information may be considered as an example of the information about the first region set. Alternatively, for example, A2-3 may be considered as an example in which the indication information indicates (or includes) the information about the first region set.

In a possible implementation, a start index of regions in the first region set may be preconfigured, or may be defined in a protocol, or may be fixed.

For example, the start index of regions in the first region set is 0, 1, or another value.

For example, if the first quantity information indicates that the quantity of regions in the first region set is 20, and the start index of regions in the first region set is 0, it indicates that the first region set includes regions whose indexes are 0 to 19, or all regions whose indexes are 0 to 19 are regions in which the first system information is sent.

In another possible implementation, an end index of regions in the first region set may be preconfigured, or may be defined in a protocol, or may be fixed.

For example, the start index of regions in the first region set is 255, 256, 127, 128, 32, 31, 64, 63, or another value.

For example, if the first quantity information indicates that the quantity of regions in the first region set is 236, and the end index of regions in the first region set is 255, it indicates that the first region set includes regions whose indexes are 236 to 255, or all regions whose indexes are 236 to 255 are regions in which the first system information is sent.

A2-4: Second quantity information. For example, the first quantity information indicates a quantity of regions in the second region set. For example, the second quantity information may be considered as an example of the information about the second region set. Alternatively, for example, A2-4 may be considered as an example in which the indication information indicates (or includes) the information about the second region set.

In a possible implementation, a start index of regions in the second region set may be preconfigured, or may be defined in a protocol, or may be fixed.

For example, the start index of regions in the second region set is 0, 1, or another value.

For example, if the first quantity information indicates that the quantity of regions in the second region set is 20, and the start index of regions in the second region set is 0, it indicates that the second region set includes regions whose indexes are 0 to 19, or all regions whose indexes are 0 to 19 are regions in which the first system information is not sent.

In another possible implementation, an end index of regions in the second region set may be preconfigured, or may be defined in a protocol, or may be fixed.

For example, the start index of regions in the second region set is 255, 256, 127, 128, 32, 31, 64, 63, or another value.

For example, if the first quantity information indicates that the quantity of regions in the second region set is 236, and the end index of regions in the second region set is 255, it indicates that the second region set includes regions whose indexes are 236 to 255, or all regions whose indexes are 236 to 255 are regions in which the first system information is not sent.

Optionally, the indication information includes at least two of A2-1 to A2-4. The following provides descriptions in combination with cases of A2-5 to A2-13. For example, the first communication apparatus may correspondingly obtain the information about the first region set and/or the information about the second region set based on at least two of A2-1 to A2-4.

For example, the indication information may indicate (or include) any one of A2-5 to A2-13.

A2-5, A2-1, and A2-3 are the first index information and the first quantity information. For example, the first index information and the first quantity information may be considered as an example of the information about the first region set. Alternatively, for example, A2-5 may be considered as an example in which the indication information indicates (or includes) the information about the first region set.

For example, if the first index information indicates that the start index of regions in the first region set is 0, and the first quantity information indicates that the quantity of regions in the first region set is 21, it indicates that the first region set includes regions whose indexes are 0 to 20, or all regions whose indexes are 0 to 20 are regions in which the first system information is sent.

A2-6, A2-2, and A2-4 are the second index information and the second quantity information. For example, the second index information and the second quantity information may be considered as an example of information about the second region set. Alternatively, for example, A2-6 may be considered as an example in which the indication information indicates (or includes) the second region set.

For example, if the second index information indicates that the start index of regions in the second region set is 60, and the second quantity information indicates that the quantity of regions in the second region set is 20, it indicates that the second region set includes regions whose indexes are 60 to 79, or all regions whose indexes are 60 to 79 are regions in which the first system information is not sent.

A2-7, A2-1, and A2-4 are the first index information and the second quantity information. For example, the first index information may be considered as an example of the information about the first region set, and the second quantity information may be considered as an example of the information about the second region set. Alternatively, for example, A2-7 may be considered as an example in which the indication information indicates (or includes) the information about the first region set and the information about the second region set.

In a possible implementation, the quantity of regions in the first region set may be preconfigured, or may be defined in a protocol, or may be fixed.

In a possible implementation, the start index of regions in the second region set may be preconfigured, or may be defined in a protocol, or may be fixed; and/or the end index of regions in the second region set may be preconfigured, or may be defined in a protocol, or may be fixed.

For example, if the first index information indicates that the start index of regions in the first region set is 1 and the quantity of regions in the first region set is 10, it indicates that the first region set includes regions whose indexes are 1 to 9, or all regions whose indexes are 1 to 9 are regions in which the first system information is sent. For example, if the second quantity information indicates that the quantity of regions in the second region set is 10, and the start index of regions in the second region set is 60, it indicates that the second region set includes regions whose indexes are 60 to 69, or all regions whose indexes are 60 to 69 are regions in which the first system information is not sent.

A2-8, A2-2, and A2-3 are the first quantity information and the second index information. For example, the first quantity information may be considered as an example of the information about the first region set, and the second index information may be considered as an example of the information about the second region set. Alternatively, for example, A2-8 may be considered as an example in which the indication information indicates (or includes) the information about the first region set and the information about the second region set.

In a possible implementation, the start index of regions in the first region set may be preconfigured, or may be defined in a protocol, or may be fixed; and/or the end index of regions in the first region set may be preconfigured, or may be defined in a protocol, or may be fixed.

In a possible implementation, the quantity of regions in the second region set may be preconfigured, or may be defined in a protocol, or may be fixed.

For example, if the first quantity information indicates that the quantity of regions in the first region set is 10, and the start index of regions in the first region set is 1, it indicates that the first region set includes regions whose indexes are 1 to 9, or all regions whose indexes are 1 to 9 are regions in which the first system information is sent. For example, if the second index information indicates that the start index in the second region set is 60 and the end index is 62, it indicates that the second region set includes regions whose indexes are 60 to 62, or all regions whose indexes are 60 to 62 are regions in which the first system information is not sent.

A2-9, A2-1, and A2-2 are the first index information and the second index information. For example, the first index information may be considered as an example of the information about the first region set, and the second index information may be considered as an example of the information about the second region set. Alternatively, for example, A2-9 may be considered as an example in which the indication information indicates (or includes) the information about the first region set and the information about the second region set.

In a possible implementation, the quantity of regions in the first region set may be preconfigured, or may be defined in a protocol, or may be fixed. In another possible implementation, the start index of regions in the first region set may be preconfigured, or may be defined in a protocol, or may be fixed; and/or the end index of regions in the first region set may be preconfigured, or may be defined in a protocol, or may be fixed.

In a possible implementation, the quantity of regions in the second region set may be preconfigured, or may be defined in a protocol, or may be fixed. In another possible implementation, the start index of regions in the second region set may be preconfigured, or may be defined in a protocol, or may be fixed; and/or the end index of regions in the second region set may be preconfigured, or may be defined in a protocol, or may be fixed.

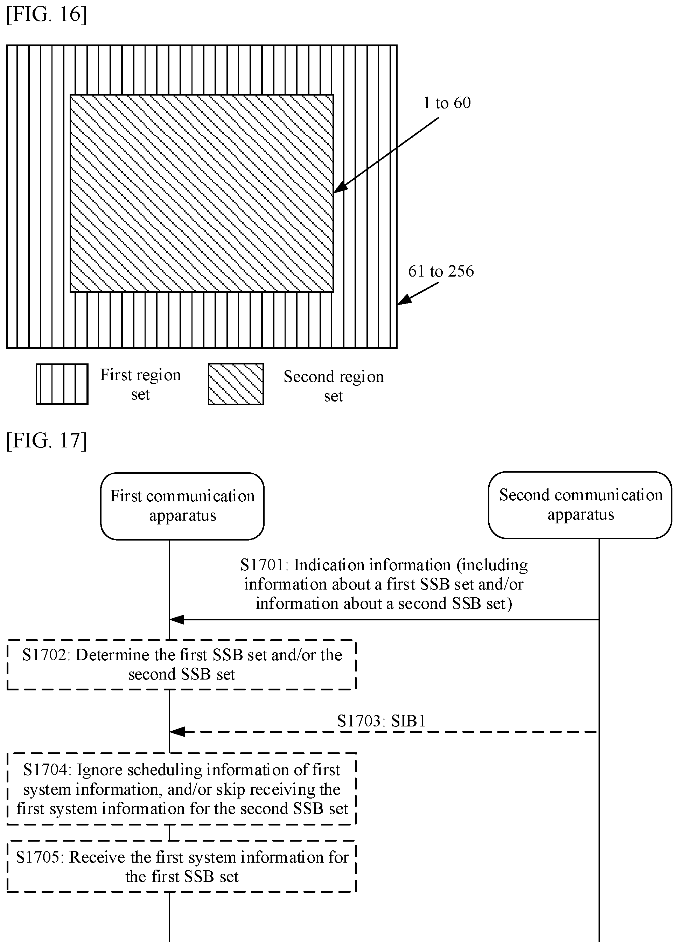

For example, FIG. 16 is a diagram of the first region set and the second region set according to an embodiment of this application. As shown in FIG. 16, the indication information includes information shown in A2-1 and A2-2. The first index information indicates that a start index of regions in the first region set is 61 and an end index is 256, and the second index information indicates that a start index of regions in the second region set is 1 and an end index is 60. Alternatively, the indication information indicates that the first region set includes regions whose indexes are 61 to 256, and the second region set includes regions whose indexes are 1 to 60.

A2-10, A2-3, and A2-4 are the first quantity information and the second quantity information. For example, the first quantity information may be considered as an example of the information about the first region set, and the second quantity information may be considered as an example of the information about the second region set. Alternatively, for example, A2-10 may be considered as an example in which the indication information indicates (or includes) the information about the first region set and the information about the second region set.

In a possible implementation, the start index of regions in the first region set may be preconfigured, or may be defined in a protocol, or may be fixed; and/or the end index of regions in the first region set may be preconfigured, or may be defined in a protocol, or may be fixed.

In a possible implementation, the start index of regions in the second region set may be preconfigured, or may be defined in a protocol, or may be fixed; and/or the end index of regions in the second region set may be preconfigured, or may be defined in a protocol, or may be fixed.

For example, if the first quantity information indicates that the quantity of regions in the first region set is 10, and the start index of regions in the first region set is 10, it indicates that the first region set includes regions whose indexes are 10 to 19, or all regions whose indexes are 10 to 19 are regions in which the first system information is sent. For example, if the second quantity information indicates that the quantity of regions in the second region set is 10, and the end index of regions in the second region set is 80, it indicates that the second region set includes regions whose indexes are 71 to 80, or all regions whose indexes are 71 to 80 are regions in which the first system information is not sent.

A2-11, A2-1, A2-3, and A2-4 are the first index information, the first quantity information, and the second quantity information. For example, the first quantity information and the first index information may be considered as an example of the information about the first region set, and the second quantity information may be considered as an example of the information about the second region set. Alternatively, for example, A2-11 may be considered as an example in which the indication information indicates (or includes) the information about the first region set and the information about the second region set.

In a possible implementation, the start index of regions in the second region set may be preconfigured, or may be defined in a protocol, or may be fixed; and/or the end index of regions in the second region set may be preconfigured, or may be defined in a protocol, or may be fixed.

For example, if the first quantity information indicates that the quantity of regions in the first region set is 10, and the first index information indicates that the start index of regions in the first region set is 10, it indicates that the first region set includes regions whose indexes are 10 to 19, or all regions whose indexes are 10 to 19 are regions in which the first system information is sent. For example, if the second quantity information indicates that the quantity of regions in the second region set is 10, and the end index of regions in the second region set is 80, it indicates that the second region set includes regions whose indexes are 71 to 80, or all regions whose indexes are 71 to 80 are regions in which the first system information is not sent.

A2-12, A2-2, A2-3, and A2-4 are the second index information, the first quantity information, and the second quantity information. For example, the first quantity information may be considered as an example of the information about the first region set, and the second quantity information and the second index information may be considered as an example of the information about the second region set. Alternatively, for example, A2-12 may be considered as an example in which the indication information indicates (or includes) the information about the first region set and the information about the second region set.

In a possible implementation, the start index of regions in the first region set may be preconfigured, or may be defined in a protocol, or may be fixed; and/or the end index of regions in the first region set may be preconfigured, or may be defined in a protocol, or may be fixed.

For example, if the first quantity information indicates that the quantity of regions in the first region set is 10, and the start index of regions in the first region set is 10, it indicates that the first region set includes regions whose indexes are 10 to 19, or all regions whose indexes are 10 to 19 are regions in which the first system information is sent. For example, if the second quantity information indicates that the quantity of regions in the second region set is 10, and the second index information indicates that the end index of regions in the second region set is 80, it indicates that the second region set includes regions whose indexes are 71 to 80, or all regions whose indexes are 71 to 80 are regions in which the first system information is not sent.

A2-13, and A2-1 to A2-4 are the first index information, the second index information, the first quantity information, and the second quantity information. For example, the first quantity information and the first index information may be considered as an example of the information about the first region set, and the second quantity information and the second index information may be considered as an example of the information about the second region set. Alternatively, for example, A2-13 may be considered as an example in which the indication information indicates (or includes) the information about the first region set and the information about the second region set.

For example, if the first quantity information indicates that the quantity of regions in the first region set is 10, and the first index information indicates that the start index of regions in the first region set is 10, it indicates that the first region set includes regions whose indexes are 10 to 19, or all regions whose indexes are 10 to 19 are regions in which the first system information is sent. For example, if the second quantity information indicates that the quantity of regions in the second region set is 10, and the second index information indicates that the end index of regions in the second region set is 80, it indicates that the second region set includes regions whose indexes are 71 to 80, or all regions whose indexes are 71 to 80 are regions in which the first system information is not sent.

A3: The indication information indicates information about an index of a region in the first region set and/or information about an index of a region in the second region set. For example, the information about the index of the region in the first region set may be considered as an example of the information about the first region set. For example, the information about the index of the region in the second region set may be considered as an example of the information about the second region set.

For example, the indication information indicates information about indexes of one or more or all regions in the first region set and/or information about indexes of one or more or all regions in the second region set.

Optionally, the indication information may include/indicate whether the second communication apparatus sends the first system information or does not send the first system information in a region (for example, the first region), or the first communication apparatus receives the first system information or does not receive the first system information in a region (for example, the first region), or a region (for example, the first region) belongs to/is the first region set or the second region set.

Optionally, the indication information is associated with the first region. For example, the second communication apparatus sends the indication information in the first region. For example, the first communication apparatus obtains the indication information in the first region.

Optionally, the indication information may be carried in DCI or the like. This is not specifically limited in embodiments of this application. For example, the indication information is carried in paging (paging) DCI or a short message of paging DCI. Optionally, the indication information occupies 1 bit. For example, the first communication apparatus receives paging DCI in the first region, where the paging DCI includes the indication information indicating that the second communication apparatus sends the first system information in the first region, or the first communication apparatus receives the first system information in the first region, or the first region belongs to/is the first region set.

Optionally, the first region may be a region in which the first communication apparatus is currently located, or a region in which the first communication apparatus obtains the indication information.

For example, if a value of the indication information is a first value, it indicates that the second communication apparatus sends the first system information in the first region, or indicates that the first communication apparatus receives the first system information in the first region, or indicates that the first region belongs to/is the first region set. If a value of the indication information is a second value, it indicates that the second communication apparatus does not send the first system information in the first region, or indicates that the first communication apparatus does not receive the first system information in the first region, or indicates that the first region belongs to/is the second region set. For example, the first value is 1, and the second value is 0; or the first value is 0, and the second value is 1. This is not limited herein.

In a possible implementation, in addition to the information about the first region set and/or the information about the second region set, the indication information may further include information about a fourth region set and/or information about a fifth region set.

Optionally, for how the indication information indicates the information about the fourth region set and/or the information about the fifth region set, refer to the foregoing description of indicating the information about the first region set and/or the information about the second region set. Details are not described herein again.

In a possible implementation, the fourth region set belongs to a second cell. Optionally, the fifth region set also belongs to the second cell.

Optionally, the fourth region set may be a region set in which the first system information is sent. Optionally, the fifth region set may be a region set in which the first system information is not sent. For example, the second cell is different from the first cell. For example, in this possible implementation, the indication information not only indicates related information of the region set of the first cell, but also indicates related information of a region set related to another cell (including but not limited to the second cell).

Optionally, S1202: The first communication apparatus determines the first region set and/or the second region set.

For example, determining the first region set may include/be replaced with any one or more of the following: determining a region in which the first system information is sent, determining a region set in which the first system information is sent, determining an edge region, determining a set of edge regions, determining that the second communication apparatus sends the first system information in the first region set, or determining that the first communication apparatus receives the first system information in the first region set.

For example, determining the second region set may include/be replaced with any one or more of the following: determining a region in which the first system information is not sent, determining a region set in which the first system information is not sent, determining a central region, determining a set of central regions, determining that the second communication apparatus does not send the first system information in the second region set, or determining that the first communication apparatus does not receive the first system information in the first region set.

Optionally, if the indication information indicates the information about the first region set and/or the information about the second region set in different manners, the first communication apparatus performs S1202 in different manners. The following provides descriptions by using examples.

C1: The information about the first region set and/or the information about the second region set is indicated in the manner A1, that is, the indication information indicates the information about the first region set and/or the information about the second region set in a form of bitmap.

For example, if the indication information indicates the information about the first region set, the first communication apparatus may decode the indication information to determine the first region set. Optionally, the first communication apparatus may determine that all regions other than the first region set in the first cell are the second region set, or determine that all regions other than the first region set and the third region set in the first cell are the second region set.

Alternatively, if the indication information indicates the information about the second region set, the first communication apparatus may decode the indication information to determine the second region set. Optionally, the first communication apparatus may determine that all regions other than the second region set in the first cell are the first region set, or determine that all regions other than the second region set and the third region set in the first cell are the first region set.

Alternatively, if the indication information indicates the information about the first region set and the information about the second region set, the first communication apparatus may decode the indication information to determine the first region set and the second region set.

In a possible implementation, when N may be equal to a quantity of regions included in the first cell, and the X regions further include the third region set, Y bits in the N bits may be used as reserved bits, or the Y bits may be used to carry other information. This is not specifically limited herein. In this case, the first communication apparatus may determine the first region set and/or the second region set based on bits other than the Y bits in the N bits. In other words, the first communication apparatus may determine the first region set and/or the second region set without parsing the Y bits, or it may be described as that the first communication apparatus ignores the Y bits.

C2: The information about the first region set and/or the information about the second region set is indicated in the manner A2.

C2-1: It is assumed that the indication information includes the first index information shown in A2-1.

For example, when the first index information indicates the start index or the end index of regions in the first region set, the first communication apparatus may determine the first region set based on the quantity of regions included in the first region set, the first relationship, and the first index information. The quantity of regions included in the first region set and the first relationship may be preconfigured or predefined in the second communication apparatus and the first communication apparatus, or may be indicated by the second communication apparatus to the first communication apparatus, or may be determined by the first communication apparatus and the second communication apparatus through negotiation.

Alternatively, when the first index information indicates a start index and an end index of regions in the first region set, the first communication apparatus may determine the first region set based on the first relationship and the first index information. For how the first communication apparatus obtains the first relationship, refer to the foregoing content of obtaining the first relationship.

The following describes, by using an example in which the first relationship may be that indexes of two adjacent regions are consecutive and increasing, how the first communication apparatus determines the first region set.

When the first index information indicates the start index and the end index of regions in the first region set, the first communication apparatus may directly determine the first region set based on the first index information.

Alternatively, the first index information includes the start index or the end index of regions in the first region set, and the first communication apparatus may determine the first region set based on the first index information and the quantity of regions in the first region set. The quantity of regions in the first region set may be preconfigured or predefined in the first communication apparatus.

Alternatively, the first index information indicates the start index of regions in the first region set, and the first communication apparatus may determine the first region set based on the first index information and the end index of regions in the first region set. The end index of regions in the first region set may be preconfigured or predefined in the first communication apparatus.

Alternatively, the first index information indicates the end index of regions in the first region set, and the first communication apparatus may determine the first region set based on the first index information and the start index of regions in the first region set. The start index of regions in the first region set may be preconfigured or predefined in the first communication apparatus.

In a possible implementation, the first communication apparatus may determine that all regions other than the first region set in the first cell are the second region set, or determine that all regions other than the first region set and the third region set in the first cell are the second region set.

C2-2: The indication information includes the second index information shown in A2-2.

For example, when the second index information indicates the start index or the end index of regions in the second region set, the first communication apparatus may determine the second region set based on the quantity of regions included in the second region set, the second relationship, and the second index information. The quantity of regions included in the second region set and the second relationship may be preconfigured or predefined in the second communication apparatus and the first communication apparatus, or may be indicated by the second communication apparatus to the first communication apparatus, or may be determined by the first communication apparatus and the second communication apparatus through negotiation. The second relationship is a relationship that indexes of two adjacent regions in the second region set satisfy. For example, the second relationship may be that indexes of two adjacent regions are consecutive and increasing, or indexes of two adjacent regions are consecutive and decreasing. The second relationship may be the same as or different from the first relationship.

Alternatively, when the second index information indicates the start index and the end index of regions in the first region set, the first communication apparatus may determine the second region set based on the second relationship and the second index information. For how the first communication apparatus obtains the second relationship, refer to the foregoing content of obtaining the second relationship.

The following describes, by using an example in which the second relationship may be that indexes of two adjacent regions are consecutive and increasing, how the first communication apparatus determines the second region set.

For example, if the second index information indicates the start index and the end index of regions in the second region set, the first communication apparatus may directly determine the second region set based on the second index information.

Alternatively, the second index information includes the start index or the end index of regions in the second region set, and the first communication apparatus may determine the second region set based on the first index information and the quantity of regions in the second region set. A quantity of regions in the second region set may be preconfigured or predefined in the first communication apparatus.

Alternatively, the second index information indicates the start index of regions in the second region set, and the first communication apparatus may determine the second region set based on the second index information and the end index of regions in the second region set. The end index of regions in the second region set may be preconfigured or predefined in the first communication apparatus.

Alternatively, the second index information indicates the end index of regions in the second region set, and the first communication apparatus may determine the second region set based on the second index information and the start index of regions in the second region set. The start index of regions in the second region set may be preconfigured or predefined in the first communication apparatus.

In a possible implementation, the first communication apparatus may determine that all regions other than the second region set in the first cell are the first region set, or determine that all regions other than the second region set and the third region set in the first cell are the first region set.

C2-3: The indication information includes the first quantity information shown in A2-3.

For example, when the indication information indicates the quantity of regions in the first region set, the first communication apparatus may determine the first region set based on the first quantity information, the first relationship, and the start index of regions in the first region set. The start index of regions in the first region set and the first relationship may be preconfigured or predefined in the second communication apparatus and the first communication apparatus, or may be indicated by the second communication apparatus to the first communication apparatus, or may be determined by the first communication apparatus and the second communication apparatus through negotiation. For content of the first relationship, refer to the foregoing content of the first relationship. Details are not described herein again.

Alternatively, the first communication apparatus may determine the first region set based on the first quantity information, the first relationship, and the end index of regions in the first region set. The end index of regions in the first region set may be preconfigured or predefined in the second communication apparatus and the first communication apparatus, or may be indicated by the second communication apparatus to the first communication apparatus, or may be determined by the first communication apparatus and the second communication apparatus through negotiation. For content of the first relationship, refer to the foregoing content of the first relationship. Details are not described herein again.

The following describes, by using an example in which the first relationship may be that indexes of two adjacent regions are consecutive and increasing, how the first communication apparatus determines the first region set.

For example, the first communication apparatus may determine the first region set based on the first quantity information and the start index of regions in the first region set. Alternatively, the first communication apparatus may determine the first region set based on the first quantity information and the end index of regions in the first region set.

C2-4: The indication information includes the second quantity information shown in A2-4.

For example, when the indication information indicates the quantity of regions in the second region set, the first communication apparatus may determine the second region set based on the second quantity information, the second relationship, and the start index of regions in the second region set.

Optionally, the start index of regions in the second region set and the second relationship may be preconfigured or predefined in the second communication apparatus and the first communication apparatus, or may be indicated by the second communication apparatus to the first communication apparatus, or may be determined by the first communication apparatus and the second communication apparatus through negotiation. For content of the second relationship, refer to the foregoing content of the first relationship. Details are not described herein again.

Alternatively, the first communication apparatus may determine the first region set based on the second quantity information, the second relationship, and the end index of regions in the second region set.

The start index of regions in the second region set and the second relationship may be preconfigured or predefined in the second communication apparatus and the first communication apparatus, or may be indicated by the second communication apparatus to the first communication apparatus, or may be determined by the first communication apparatus and the second communication apparatus through negotiation. For content of the second relationship, refer to the foregoing content of the first relationship. Details are not described herein again.

The following describes, by using an example in which the second relationship may be that indexes of two adjacent regions are consecutive and increasing, how the first communication apparatus determines the second region set.

For example, the first communication apparatus may determine the second region set based on the second quantity information and the start index of regions in the second region set. Alternatively, the first communication apparatus may determine the second region set based on the second quantity information and the end index of regions in the second region set.

When the indication information includes at least two of A2-1 to A2-4, the first communication apparatus may alternatively determine the first region set and/or the second region set in combination with the foregoing manners corresponding to at least two of A2-1 to A2-4 in C2-1 to C2-4. The following provides descriptions by using content shown in C2-5 to C2-13.

C2-5: If the indication information includes the first index information shown in A2-1 and the first quantity information shown in A2-3 (or it may be considered that the indication information is the information shown in A2-5), the first communication apparatus may directly determine the first region set based on the first index information and the first quantity information. Optionally, the first communication apparatus may further determine the second region set.

C2-6: If the indication information includes the second index information shown in A2-2 and the second quantity information shown in A2-4 (or it may be considered that the indication information is the information shown in A2-6), the first communication apparatus may directly determine the second region set based on the second index information and the second quantity information. Optionally, the first communication apparatus may further determine the first region set.

C2-7: The indication information includes the first index information shown in A2-1 and the second quantity information shown in A2-4 (or it may be considered that the indication information is the information shown in A2-7).

In this case, the first communication apparatus may determine the first region set in combination with the content in C2-1, and determine the second region set in combination with the content in C2-3. No repeated description is provided.

C2-8: The indication information includes the second index information shown in A2-2 and the first quantity information shown in A2-3 (or it may be considered that the indication information is the information shown in A2-8).

In this case, the first communication apparatus may determine the second region set in combination with the content in C2-2, and determine the first region set in combination with the content in C2-3. No repeated description is provided.

C2-9: The indication information includes content in A2-1 and A2-2, that is, the indication information includes the first index information and the second index information (it may be considered that the indication information is the information shown in A2-9).

In this case, the first communication apparatus may determine the first region set in combination with the content in C2-1, and determine the second region set in combination with the content in C2-2. No repeated description is provided.

C2-10: The indication information includes content in A2-3 and A2-4, that is, the indication information includes the first quantity information and the second quantity information (it may be considered that the indication information is the information shown in A2-10).

In this case, the first communication apparatus may determine the first region set in combination with the content in C2-3, and determine the second region set in combination with the content in C2-4. No repeated description is provided.

C2-11: The indication information includes content in A2-1, A2-3, and A2-4, that is, the indication information includes the first index information, the first quantity information, and the second quantity information (it may be considered that the indication information is the information shown in A2-11).

In this case, the first communication apparatus may determine the first region set based on the first index information and the first quantity information, and determine the second region set in combination with the content in C2-4. No repeated description is provided.

C2-12: The indication information includes content in A2-2, A2-3, and A2-4, that is, the indication information includes the second index information, the first quantity information, and the second quantity information (it may be considered that the indication information is the information shown in A2-12).

In this case, the first communication apparatus may determine the second region set based on the second index information and the second quantity information, and determine the first region set in combination with the content in C2-3. No repeated description is provided.

C2-13: The indication information includes content in A2-1 to A2-4, that is, the indication information includes the first index information, the second index information, the first quantity information, and the second quantity information (or it may be considered that the indication information is the information shown in A2-13).

In this case, the first communication apparatus may determine the first region set based on the first index information and the first quantity information, and determine the second region set based on the second index information and the second quantity information.

C3: The information about the first region set and/or the information about the second region set is indicated in the manner A3.

For example, if the indication information indicates the information about the index of the region in the first region set, the first communication apparatus may determine the first region set based on the information about the first region set, that is, determine a region in which the first system information is sent. Optionally, the first communication apparatus may further determine the second region set based on the first region set.

Alternatively, if the indication information indicates the information about the index of the region in the second region set, the first communication apparatus may determine the second region set based on the information about the index of the region in the second region set, that is, determine a region in which the first system information is not sent. Optionally, the first communication apparatus may further determine the first region set based on the second region set.

Alternatively, if the indication information indicates the information about the index of the region in the first region set and the information about the index of the region in the second region set, the first communication apparatus may determine the first region set and the second region set based on the information about the index of the region in the first region set and the information about the index of the region in the second region set.

In a possible implementation, if the first region set or the second region set includes only the first region, the first communication apparatus may determine, based on the indication information, to send the first system information or not send the first system information in the first region.

Optionally, S1202 or that the first communication apparatus determines the first region set and/or the second region set may include/be replaced with: The first communication apparatus determines that the second communication apparatus sends the first system information or does not send the first system information in a region (for example, the first region), or the first communication apparatus receives the first system information or does not receive the first system information in a region (for example, the first region), or a region (for example, the first region) belongs to/is the first region set or the second region set.

In a possible implementation, if the indication information further includes information about the fourth region set and/or information about the fifth region set, the first communication apparatus may determine the fourth region set and the fifth region set. Optionally, for a manner of determining the fourth region set and a manner of determining the fifth region set, refer to the foregoing manner in which the first communication apparatus determines the first region set and/or the second region set. Details are not described herein again.

Optionally, S1203: The first communication apparatus obtains a SIB1 (or SIB1bis).

For example, that the first communication apparatus obtains the SIB1 (or SIB1bis) may include/be replaced with: The first communication apparatus receives the SIB1 (or SIB1bis). For example, correspondingly, the second communication apparatus sends the SIB1 (or SIB1bis).

For example, the second communication apparatus may send the SIB1 (or SIB1bis) in a broadcast manner, or may send the SIB1 (or SIB1bis) to the first communication apparatus by using dedicated signaling.

Optionally, a logical channel, a transmission channel, and a physical channel that correspond to the SIB1 (or SIB1bis) may be respectively a broadcast control channel (broadcast control channel, BCCH), a downlink shared channel (downlink shared channel, DL-SCH), and a physical downlink control information (physical downlink control channel, PDSCH).

Optionally, S1203 may include S1203a and/or S1203b. For example, S1203a is that the second communication apparatus sends a SIB1 (or SIB1bis) (or may be referred to as a SIB1 (or SIB1bis) corresponding to the first region set) in the first region set. For example, S1203b is that the second communication apparatus sends a SIB1 (or may be referred to as a SIB1 (or SIB1bis) corresponding to the second region set) in the second region set.

Optionally, that the first communication apparatus obtains the SIB1 (or the SIB1bis) may include/be replaced with: The first communication apparatus obtains scheduling information of the first system information.

For example, the scheduling information of the first system information may be included in the SIB1 (or the SIB1bis). For example, the scheduling information of the first system information may alternatively include/be replaced with: scheduling information of an SI message corresponding to the first system information.

For example, the scheduling information of the first system information may include one or more of the following: an SI window length, information about one or more SI messages, information about one or more SI messages corresponding to the first system information, and information about a system information region to which a cell belongs (for example, an ID of the system information region to which the cell belongs).

For example, the information about one SI message may include one or more of the following: SIB mapping information, a period of the SI message, a broadcast status of the SI message, and a window position of the SI message.

For example, the SIB mapping information may include/be replaced with any one or more of the following: information about one or more SIBs (or the first system information) included in the SI message (or information about one or more SIBs (or the first system information) mapped to the SI message), a valuetag of a SIB (or each SIB, or each SIB included in the SI message), and an indication of whether the SIB (or each SIB, or each SIB included in the SI message) is valid in a region.

In a possible design, the first region set and the second region set correspond to a same SIB1 (or SIB1bis), or a SIB1 (or SIB1bis) corresponding to the first region set is the same as a SIB1 (or SIB1bis) corresponding to the second region set.

Optionally, that the first region set and the second region set correspond to a same SIB1 (or SIB1bis) may include/be understood as that: In a period of time (for example, in a period of time of one SIB1/SIB1bis or one modification period), the first region set and the second region set correspond to a same SIB1 (or SIB1bis). Optionally, the period of the SIB1bis is 640 ms, or 1280 ms, or an integer multiple of 640 ms, or another value. Optionally, the period of the SIB1bis is greater than or equal to 640 ms.

For example, the SIB1 (or SIB1bis) corresponding to the first region set is the same as the SIB1 (or SIB1bis) corresponding to the second region set. For example, content of the SIB1 (or SIB1bis) corresponding to the first region set is the same as content of the SIB1 (or SIB1bis) corresponding to the second region set. For example, both the SIB1 (or SIB1bis) corresponding to the first region set and the SIB1 (or SIB1bis) corresponding to the second region set include the scheduling information of the first system information (or same scheduling information of the first system information). For example, an information item included in the SIB1 (or SIB1bis) corresponding to the first region set is the same as an information item included in the SIB1 (or SIB1bis) corresponding to the second region set.

It should be understood that, in different time periods, the SIB1 (or SIB1bis) corresponding to the first region set may be the same as or different from the SIB1 (or SIB1bis) corresponding to the second region set. This is not specifically limited herein.

In a possible implementation, the SIB1s (or SIB1bis) of the first cell include/each includes the scheduling information of the first system information. For example, the SIB1 (or SIB1bis) corresponding to the first region set and the SIB1 (or SIB1bis) corresponding to the second region set include/both include the scheduling information of the first system information.

It should be noted that this application does not limit whether the first communication apparatus obtains the SIB1 (or SIB1bis) corresponding to the first region set and the SIB1 (or SIB1bis) corresponding to the second region set, and also does not limit a relationship between a quantity of SIB1s (or SIB1bis) obtained in the first region set and a quantity of SIB1s (or SIB1bis) obtained in the second region set. Optionally, the first communication apparatus possibly obtains one or more of the SIB1 (or SIB1bis) corresponding to the first region set and the SIB1 (or SIB1bis) corresponding to the second region set.

For example, if the indication information is carried in the SIB1 (or SIB1bis), the first communication apparatus obtains the SIB1 (or SIB1bis), and therefore obtains the indication information. In this case, S1201 and S1203 may be implemented by using one step.

Alternatively, if the indication information is not carried in the SIB1 (or the SIB1bis), S1201 and S1203 may be performed in any sequence. For example, S1201 is performed first, and then S1203 is performed; or S1201 and S1203 are performed at the same time; or S1203 is performed first, and then S1201 is performed. Certainly, S1202 and S1203 may also be performed in any sequence. For example, S1202 is performed first, and then S1203 is performed; or S1202 and S1203 are performed at the same time; or S1203 is performed first, and then S1202 is performed.

Optionally, S1204: The first communication apparatus ignores the scheduling information of the first system information in the second region set, and/or the first communication apparatus does not receive the first system information in the second region set.

Optionally, the second communication apparatus does not send the first system information in the second region set.

For example, the first communication apparatus determines the first region set or the second region set, and may determine that the second communication apparatus does not send the first system information for the second region set. But when the SIB1 (or the SIB1bis) obtained by the first communication apparatus (SIB1 (or SIB1bis) received in the first region set (for example, SIB1 (or SIB1bis) corresponding to the first region set) and/or SIB1 (or SIB1bis) received in the second region set (for example, SIB1 (or SIB1bis) corresponding to the second region set)) includes the scheduling information of the first system information, the first communication apparatus may ignore the scheduling information of the first system information.

For example, ignoring the scheduling information of the first system information may be/include/be replaced with any one or more of the following: not decoding the scheduling information of the first system information in the SIB1 (or the SIB1bis); discarding the scheduling information of the first system information; not monitoring the first system information; or discarding the scheduling information of the first system information after the scheduling information of the first system information in the SIB1 (or the SIB1bis) is obtained through decoding, or not monitoring the first system information after the scheduling information of the first system information in the SIB1 (or the SIB1bis) is obtained through decoding.

Alternatively, after entering the second region set, the first communication apparatus does not need to monitor the first system information.

For example, skipping monitoring the first system information may include/be replaced with: skipping monitoring the first system information based on the scheduling information of the first system information; and skipping monitoring, in an SI window corresponding to the first system information, system information/the first system information/ DCI corresponding to the first system information/DCI scrambled by using an SI-RNTI. For example, skipping monitoring may include/be replaced with: skipping receiving or not obtaining. For example, not monitoring may be understood as not performing a monitoring action.

S1205: The first communication apparatus receives the first system information in the first region set. S1205 is an optional step, and is shown by using a dashed line in FIG. 12.

For example, the second communication apparatus may broadcast the first system information in the first region set in a broadcast manner. The first system information in S1205 may include/be replaced with: second system information, or one or more pieces of system information, or a SIB, or an SI message in the first system information. For example, the second system information may include one or more pieces of system information, or a SIB, or an SI message in the first system information. The receiving may be understood as performing a receiving action, but whether the receiving is performed is not limited. The receiving may include/be replaced with: monitoring. For example, the receiving may be understood as performing a receiving action, but whether the receiving is performed is not limited, and whether the first communication apparatus can correctly decode the first system information is not limited.

For example, monitoring the first system information may include/be replaced with: monitoring the first system information based on the scheduling information of the first system information; and monitoring, in an SI window corresponding to the first system information, system information/the first system information/DCI corresponding to the first system information/DCI scrambled by using an SI-RNTI.

Optionally, S1205 or that the first communication apparatus receives the first system information in the first region set may include/be replaced with: The first communication apparatus receives the first system information for the first SSB set (or one or more SSBs in the first SSB set) in the first region set.

For example, if the first communication apparatus is located in the first region set, the first communication apparatus receives the first system information for the SSB (or one or more SSBs in the SSB corresponding to the first region set) or the first SSB set (or one or more SSBs in the first SSB set) corresponding to the first region set.

In a possible implementation, when the first condition is satisfied, the first communication apparatus receives (or starts to receive) the first system information in the first region set.

For example, that the first condition is satisfied may include/be replaced with: If the first condition is satisfied, it is determined that the first condition is satisfied, or the first communication apparatus satisfies the first condition, or the first communication apparatus determines that the first condition is satisfied.

The following describes an implementation of the first condition. For example, the first condition may include any one of the following D1 to D6.

D1: The first communication apparatus does not obtain the first system information in the first cell.

For example, not obtaining may include/be understood as that: An obtaining action is performed but the obtaining fails, or an obtaining action is not performed and therefore the obtaining fails. For example, not obtaining may include/be replaced with: not obtained, has not yet obtained, or have not obtained yet.

For example, if the first communication apparatus is previously located in a region in the second region set, and the first communication apparatus moves to a region in the first region set, it indicates that the first communication apparatus does not obtain the first system information in the first cell. In this case, the first communication apparatus may start to obtain the first system information.

D2: The first communication apparatus determines that the first system information changes. For example, that the second communication apparatus determines that the first system information changes may include/be replaced with: The scheduling information (for example, the valuetag corresponding to the first system information) of the first system information included in the SIB1 (or SIB1bis) changes. For example, the valuetag corresponding to the first system information may include/be replaced with: a valuetag of a SIB (one or more SIBs) in the first system information.

For example, when the first communication apparatus is located in a region in the second region set, the first communication apparatus determines that the first system information changes. For example, the first communication apparatus may receive the second information and/or the SIB1 (or the SIB1bis) in the region in the second region set, and determine that the first system information changes. Alternatively, the first communication apparatus receives second information and/or the SIB1 (or the SIB1bis) in the first region set, and determines that the first system information changes. In this case, it may be considered that the first communication apparatus is located in the first region set before the first system information changes and after the first system information changes.

For example, that the first communication apparatus determines that the first system information changes may include: The first communication apparatus obtains the second information, the first communication apparatus obtains the SIB1 (or the SIB1bis), and the first communication apparatus determines, based on the SIB1 (or the SIB1bis), that the first system information changes. For example, the second information indicates that the system information changes, and the second information may be, for example, an SI change indication.

For example, the second communication apparatus may send the second information to the first communication apparatus, and after receiving the second information, the first communication apparatus determines that the system information changes. Optionally, the first communication apparatus re-receives the SIB1 (or the SIB1bis), so as to determine, based on the SIB1 (or the SIB1bis), that the first system information changes.

D3: The first communication apparatus does not obtain the first system information in the first cell, and determines that the system information changes.

D4: The first communication apparatus does not have a valid version of the first system information.

For example, that the first communication apparatus does not have a valid version of the first system information may include/be replaced with any one of D1 to D3.

D5: The first communication apparatus needs the first system information.

D6: The first communication apparatus enters a region in the first region set, or the first communication apparatus is located in a region in the first region set.

In a possible implementation, the first communication apparatus may receive the first system information when determining that the first condition is satisfied.

For example, if the first communication apparatus determines that the first system information has not been received in the first cell before, after entering the region in the first region set (which may be considered as a region in which the first system information is sent), the first communication apparatus may start to obtain the first system information. Alternatively, if the first communication apparatus receives the second information in the first cell, and after updating the SIB1 (or the SIB1bis), the first communication apparatus determines that the first system information changes, and therefore receives the first system information. Alternatively, the first communication apparatus is currently located in the region in the second region set (which may be considered as a region in which the first system information is not sent), and the first communication apparatus may receive the first system information after the first communication apparatus enters the region in the first region set. Alternatively, if the first communication apparatus is currently located in the region in the first region set, the first communication apparatus may directly obtain the first system information.

In another possible implementation, the first communication apparatus may receive the first system information after determining the first region set.

For example, after the first communication apparatus obtains the SIB1 (or the SIB1bis) of the first cell, if there is no valid version of one or more SIBs, and the one or more SIBs/system information is associated with the first system information or the indication information or is the first system information, the first communication apparatus starts to obtain the one or more SIBs/system information (or an SI message corresponding to the SIBs/system information) only after entering the region in the first region set.

Alternatively, after the first communication apparatus obtains the SIB1 (or the SIB1bis) of the first cell, if there is no valid version of one or more SIBs, and the one or more SIBs/system information is associated with the first system information or the indication information or is the first system information, and if a broadcast status of the one or more SIBs/system information is broadcasting, the first communication apparatus starts to obtain the one or more SIBs/system information (or an SI message corresponding to the SIBs/system information) only after entering the region in the first region set.

Optionally, this application may further include: After the first communication apparatus obtains the SIB1 (or the SIB1bis) of the first cell, if there is no valid version of one or more SIBs, and the one or more SIBs/system information is not associated with the first system information or indication information or is not the first system information, the first communication apparatus may start to obtain the one or more SIBs/system information (or an SI message corresponding to the SIBs/system information).

For example, after the first communication apparatus obtains the SIB1 (or the SIB1bis) of the first cell, if there is no valid version of one or more SIBs, and the one or more SIBs/system information is not associated with the first system information or indication information or is not the first system information, and if the broadcast status of the one or more SIBs/system information is broadcasting, the first communication apparatus may start to obtain the one or more SIBs/system information (or the SI message corresponding to the SIBs/system information) only after entering the region in the first region set.

Optionally, this application may further include: After the first communication apparatus obtains the SIB1 (or the SIB1bis) of the first cell, if there is no valid version of one or more SIBs, and the one or more SIBs/system information is associated with the first system information or indication information or is the first system information, the first communication apparatus starts to request (or request the one or more SIBs/system information from the second communication apparatus) the one or more SIBs/system information (or an SI message corresponding to the SIBs/system information) only after entering the region in the first region set.

For example, after the first communication apparatus obtains the SIB1 (or the SIB1bis) of the first cell, if there is no valid version of one or more SIBs, and the one or more SIBs/system information is associated with the first system information or indication information or is the first system information, and if the broadcast status of the one or more SIBs/system information is not broadcasting, the first communication apparatus starts to request (or request the one or more SIBs/system information from the second communication apparatus) the one or more SIBs/system information (or the SI message corresponding to the SIBs/system information) only after entering the region in the first region set.

Optionally, this application may further include: After the first communication apparatus obtains the SIB1 (or the SIB1bis) of the first cell, if there is no valid version of one or more SIBs, and the one or more SIBs/system information is not associated with the first system information or indication information or is not the first system information, the first communication apparatus may start to request (or request from the second communication apparatus) the one or more SIBs/system information (or an SI message corresponding to the SIBs/system information).

For example, after the first communication apparatus obtains the SIB1 (or the SIB1bis) of the first cell, if there is no valid version of one or more SIBs, and the one or more SIBs/system information is not associated with the first system information or indication information or is not the first system information, and if the broadcast status of the one or more SIBs/system information is not broadcasting, the first communication apparatus may start to request (or request from the second communication apparatus) the one or more SIBs/system information (or the SI message corresponding to the SIBs/system information) until the first communication apparatus enters the region in the first region set.

It should be understood that S1204 may be used as an independent embodiment, and does not depend on other steps.

It should be understood that S1205 may be used as an independent embodiment, and does not depend on other steps.

It should be understood that S1204 and S1205 may be used as an independent embodiment, and do not depend on other steps.

It should be understood that S1204 and S1205 may be performed in any sequence. For example, S1204 is performed first, and then S1205 is performed; or S1205 is performed first, and then S1204 is performed. This is not limited in embodiments of this application.

In this embodiment of this application, the second communication apparatus may notify the region in which the first system information is sent and/or the region in which the first system information is not sent (or the edge region and/or the central region), so that the first communication apparatus can monitor the first system information based on a specific case in which the second communication apparatus sends the first system information, to avoid invalid monitoring and save energy. In addition, in this embodiment of this application, the second communication apparatus may selectively send the first system information in some regions of a cell, thereby reducing resource overheads and saving power of the second communication apparatus. In addition, the first communication apparatus may selectively receive the first system information based on a region in which the first communication apparatus is currently located, whether the system information changes, and the like, thereby helping save power of the first communication apparatus.

To save power, an embodiment of this application further provides a communication method. In the method, a first communication apparatus may obtain indication information, where the indication information indicates information about a first SSB set and/or information about a second SSB set, the first SSB set is associated with first system information, and the second SSB is not associated with the first system information. In this way, the first communication apparatus may clearly determine an SSB in which the first system information is sent and an SSB in which the first system information is not sent correspondingly. The first communication apparatus may not monitor the first system information in the SSB in which the first system information is not sent, thereby reducing invalid monitoring of the first communication apparatus and saving power.

FIG. 17 is a diagram of a communication method according to an embodiment of this application.

S1701: A first communication apparatus obtains indication information.

The indication information may include/indicate information about a first SSB set and/or information about a second SSB set. For example, the first SSB set may include at least one SSB. For example, the second SSB set may include at least one SSB. In a possible implementation, the first SSB set may include/be an SSB associated with first system information. Optionally, the second SSB set may include/be an SSB that is not associated with the first system information.

Optionally, the SSB associated with the first system information may include/be replaced with one or more of the following: an SSB in which a PDCCH monitoring occasion corresponding to the SSB is associated with the first system information, an SSB in which a PDCCH monitoring occasion corresponding to the SSB is used to send the first system information, an SSB in which a PDCCH monitoring occasion corresponding to the SSB is used to receive the first system information, an SSB in which a PDCCH monitoring occasion corresponding to the SSB is used for sending of the first system information, an SSB in which a PDCCH monitoring occasion corresponding to the SSB is used for receiving of the first system information, an SSB in which a PDCCH monitoring occasion corresponding to the SSB is used for sending the first system information, an SSB in which a PDCCH monitoring occasion corresponding to the SSB has the first system information, an SSB corresponding to a PDCCH monitoring occasion associated with sending of the first system information, an SSB corresponding to a PDCCH monitoring occasion associated with existence of the first system information, an SSB used to send the first system information, an SSB used to receive the first system information, an SSB used for sending of the first system information, an SSB used for receiving of the first system information, an SSB used to send the first system information, an SSB having the first system information, an SSB associated with sending of the first system information, or an SSB associated with existence of the first system information. It should be understood that, the SSB used to send the first system information does not mean that the SSB includes the first system information, but means that the first system information is sent on a physical downlink control channel (physical downlink control channel, PDCCH) monitoring occasion (monitoring occasion) corresponding to the SSB, or the first system information is sent in a region corresponding to the SSB. Similarly, the SSB used to receive the first system information does not mean that the SSB includes the first system information, but means that the first system information is received on a PDCCH monitoring occasion corresponding to the SSB, or the first system information is received in a region corresponding to the SSB.

For example, PDCCH monitoring occasions for an SI message are sequentially numbered starting from 1 in an SI window. For example, an [x*N+K]^{th} PDCCH monitoring occasion for the SI message in the SI window corresponds to a K^{th} SSB (or transmitted SSB). For example, x=0, 1, ..., X-1. For example, K=1, 2, ..., N. For example, N is a quantity of SSBs (or transmitted SSBs) or a quantity of actually transmitted SSBs determined based on ssb-PositionsInBurst in a SIB1. For example, X is equal to CEIL (a quantity of PDCCH monitoring occasions in the SI window/N).

For example, the SSB that is not associated with the first system information may include/be replaced with one or more of the following: an SSB in which a PDCCH monitoring occasion corresponding to the SSB is not associated with the first system information, an SSB in which a PDCCH monitoring occasion corresponding to the SSB is not used to send the first system information, an SSB in which a PDCCH monitoring occasion corresponding to the SSB is not used to receive the first system information, an SSB in which a PDCCH monitoring occasion corresponding to the SSB is not used for sending of the first system information, an SSB in which a PDCCH monitoring occasion corresponding to the SSB is not used for receiving of the first system information, an SSB in which a PDCCH monitoring occasion corresponding to the SSB is not used for sending of the first system information, an SSB in which a PDCCH monitoring occasion corresponding to the SSB does not have the first system information, an SSB corresponding to a PDCCH monitoring occasion associated with not sending of the first system information, an SSB corresponding to a PDCCH monitoring occasion associated with absence of the first system information, an SSB not used to send the first system information, an SSB not used to receive the first system information, an SSB not used for sending of the first system information, an SSB not used for receiving of the first system information, an SSB for not sending the first system information, an SSB without the first system information, an SSB associated with not sending of the first system information, or an SSB associated with absence of the first system information.

In a possible design, the first SSB set may include/be/be replaced with an SSB in which the second communication apparatus sends the first system information. Alternatively, the first SSB set may include/be replaced with: an SSB in which the first communication apparatus receives the first system information. For example, the SSB in which the first system information is sent may include/be replaced with: an SSB in which the second communication apparatus sends the first system information. For example, the SSB in which the first system information is received may include/be replaced with: an SSB in which the first communication apparatus receives the first system information.

For example, the second communication apparatus sends/possibly sends the first system information in the first SSB set, or for the first SSB set, the second communication apparatus sends/possibly sends the first system information, or the first communication apparatus receives/possibly receives the first system information in the first SSB set, or for the first SSB set, the first communication apparatus receives/possibly receives the first system information. For example, that the second communication apparatus sends/possibly sends the first system information in the first SSB set may be understood as that the second communication apparatus sends or possibly sends the first system information on a PDCCH monitoring occasion corresponding to the first SSB set, or sends or possibly sends the first system information in a region/beam corresponding to the first SSB set.

For example, "for the first SSB set" may include/be replaced with: "for a PDCCH monitoring occasion corresponding to the first SSB set". The PDCCH monitoring occasion may include/be replaced with a PDCCH monitoring occasion. For example, the first SSB set may include/be replaced with an SSB in the first SSB set, may be an SSB in/within/of the first SSB set, or may be an SSB in/within/of the first SSB set.

In a possible design, the second SSB set may include/be/be replaced with an SSB in which the second communication apparatus does not send the first system information. Alternatively, the second SSB set may include/be replaced with an SSB in which the first communication apparatus does not receive the first system information. The second SSB set may include/be replaced with an SSB in which the second communication apparatus does not send the first system information. For example, the SSB in which the first system information is not sent may include/be replaced with: an SSB in which the second communication apparatus does not send the first system information. For example, the SSB in which the first system information is not received may include/be replaced with an SSB in which the first communication apparatus does not receive the first system information.

For example, the second communication apparatus does not send/does not possibly send the first system information in the second SSB set, or for the second SSB set, the second communication apparatus does not send/does not possibly send the first system information, or the first communication apparatus does not receive/does not possibly receive the first system information in the second SSB set, or for the second SSB set, the first communication apparatus does not receive/does not possibly receive the first system information. For example, that the second communication apparatus does not send/does not possibly send the first system information in the second SSB set may be understood as that the second communication apparatus does not send or does not possibly send the first system information on a PDCCH monitoring occasion corresponding to the second SSB set, or does not send or does not possibly send the first system information in a region/beam corresponding to the second SSB set.

For example, for the second SSB set may include/be replaced with: for a PDCCH monitoring occasion corresponding to the second SSB set. For example, the second SSB set may include/be replaced with an SSB in the second SSB set, may be in/within/of the second SSB set, or may be an SSB in/within/of the second SSB set.

In a possible implementation, the first SSB set may include/may be an edge SSB, and/or the second SSB set may include/may be a center SSB.

The edge SSB may include/be replaced with: a non-center SSB, and/or an edge SSB of a cell (for example, a first cell). Similarly, the center SSB may include/be replaced with: a non-edge SSB, and/or a center SSB of a cell (for example, the first cell).

In this case, the second communication apparatus sends the first system information in the edge SSB, or the second communication apparatus is to send/possibly sends/will send the first system information in the edge SSB. Optionally, the second communication apparatus sends the first system information in the edge SSB, or may send the first system information in the edge SSB in an on-demand manner. For content of the on-demand manner, refer to the foregoing description. No repeated description is provided.

For example, for the edge SSB, the second communication apparatus sends/possibly sends the first system information, or the second communication apparatus does not send the first system information in the center SSB, or the second communication apparatus does not send/does not possibly send the first system information on/in/within the center SSB, or the second communication apparatus is to send/possibly sends/will send the first system information on/in/within the first SSB set, or for the center SSB, the second communication apparatus does not send/does not possibly send the first system information, or the second communication apparatus sends the first system information in the first SSB set. For example, the second communication apparatus may send the first system information in the first SSB set in an on-demand manner.

For example, for the edge SSB may include/be replaced with: for a PDCCH monitoring occasion corresponding to the edge SSB. For the center SSB may include/be replaced with: for a PDCCH monitoring occasion corresponding to the center SSB.

Optionally, the first SSB set belongs to the first cell. Optionally, the second SSB set belongs to the first cell.

Optionally, in a possible design, the first SSB set is associated with the first cell. Optionally, the second SSB set is associated with the first cell.

For example, that the first SSB set is associated with the first cell includes that the first SSB set belongs to the first cell. For example, that the second SSB set is associated with the first cell includes that the second SSB set belongs to the first cell.

Optionally, the first cell may include/be associated with X SSBs. For example, X is a positive integer. For example, the X SSBs form the first cell, in other words, the X SSBs form a complete first cell. For example, the first SSB set may include/be a part or one or more SSBs in the X SSBs. For example, the second SSB set may include/be a part of or one or more of SSBs in the X SSBs.

For example, the first SSB set may include/be a plurality of consecutive SSBs in the X SSBs, or may include/be a plurality of inconsecutive SSBs in the X SSBs. This is not specifically limited in embodiments of this application. For example, the second SSB set may include/be a plurality of consecutive SSBs in the X SSBs, or may include/be a plurality of inconsecutive SSBs in the X SSBs. This is not specifically limited in embodiments of this application.

For example, the X SSBs may be configured by the second communication apparatus, for example, may be configured by the second communication apparatus by using an RRC message, or may be preconfigured, or may be defined in a protocol. This is not limited herein.

In a possible design, the X SSBs may only/all include/belong to the first SSB set. In another possible design, the X SSBs may only/all include/belong to a second SSB set.

In another possible design, the X SSBs include/only include one SSB set (for example, the first SSB set or the second SSB set).

Optionally, the X SSBs may only include/include/belong to the first SSB set and the second SSB set. For example, a part of SSBs (for example, M SSBs) in the X SSBs include/belong to the first SSB set, and another part of SSBs (for example, (X-M) SSBs) in the X SSBs include/belong to the second SSB set. For example, M is a positive integer.

In still another possible design, the X SSBs may include/belong to a first SSB set, a second SSB set, and a third SSB set. For example, a part of SSBs (for example, M SSBs) in the X SSBs include/belong to the first SSB set, a part of SSBs (for example, P SSBs) in the X SSBs include/belong to the second SSB set, and another part of SSBs (for example, Y or (X-M-P) SSBs) in the X SSBs include/belong to the third SSB set. The third SSB set may include at least one SSB. Both Y and P are positive integers.

It should be understood that the third SSB set may be an SSB that is not associated with the first system information, or may be an SSB that is associated with the first system information. This is not specifically limited herein. Optionally, the third SSB set may be an edge SSB, or may be a center SSB, or may include both an edge SSB and a center SSB. This is not specifically limited herein.

Optionally, the third SSB set may be preconfigured or predefined. This is not specifically limited herein.

Optionally, the first SSB set may belong to/be located in a center SSB of the first cell.

Optionally, the second SSB set may belong to/be located in an edge SSB of the first cell.

For example, information about the first SSB set may include/indicate/be replaced with any one or more of the following: the first SSB set; sending the first system information for the first SSB set (for example, the second communication apparatus sends the first system information for the first SSB set); or receiving the first system information for the first SSB set (for example, the first communication apparatus receives the first system information for the first SSB set).

For example, information about the second SSB set may include/indicate/be replaced with any one or more of the following: the second SSB set; skipping sending the first system information for the second SSB set (for example, the second communication apparatus does not send the first system information for the first SSB set); or skipping receiving the first system information for the first SSB set (for example, the first communication apparatus does not receive the first system information for the first SSB set).

Optionally, the indication information may include/indicate/be replaced with any one or more of the following: sending the first system information for the first SSB set (for example, the second communication apparatus sends the first system information for the first SSB set); receiving the first system information for the first SSB set (for example, the first communication apparatus receives the first system information for the first SSB set); skipping sending the first system information for the second SSB set (for example, the second communication apparatus does not send the first system information for the first SSB set); or skipping receiving the first system information for the first SSB set (for example, the first communication apparatus does not receive the first system information for the first SSB set); or one or more SSBs (for example, the first SSB) belong to/are the first SSB set or the second SSB set.

In a possible implementation, the first SSB set may include one SSB. For example, the first SSB set may include/be replaced with the first SSB. In addition/alternatively, the second SSB set may include one SSB. For example, the second SSB set may include/be replaced with the first SSB.

Optionally, the indication information may include/indicate the information about the first SSB set and/or the information about the second SSB set in at least one of the following manners E1, E2, and E3. Details are separately described below.

E1: The indication information indicates the information about the first SSB set and/or the information about the second SSB set in a form of bitmap.

For example, the indication information includes N bits, where N is a positive integer. A part or all of the N bits may be used to carry the information about the first SSB set and/or the information about the first SSB set. N may be equal to a quantity of SSBs included/associated with the first cell, for example, X. For example, N may alternatively be a quantity of SSBs included in the first SSB set, for example, M. For example, N may alternatively be a quantity of SSBs included in the second SSB set, for example, P. For example, N may alternatively be a total quantity of SSBs included in the first SSB set and the second SSB set, for example, M+P or X-Y. For example, N is 128, 256, 32, or 64.

Optionally, Y bits in the N bits may be used as reserved bits, or Y bits in the N bits may be used to carry other information (the other information is information other than the indication information), or Y bits in the N bits may be ignored or specific values of the Y bits may be ignored. This is not specifically limited.

For content of the information about the first SSB set and/or the information about the second SSB set that is indicated by the N bits, refer to the content of the information about the first region set and/or the information about the second region set that is indicated by the N bits and that is described in FIG. 12. Details are not limited herein one by one.

Optionally, when N may be equal to the quantity (for example, X) of the SSBs included in the first cell, and the X SSBs further include the third SSB set, Y bits in the N bits may be used as reserved bits, or Y bits in the N bits may be used to carry other information (the other information is information other than the indication information), or Y bits in the N bits may be ignored or specific values of the Y bits may be ignored. This is not specifically limited herein. For example, the first communication apparatus/the second communication apparatus ignores values of Y bits in the N bits or Y bits in the N bits.

Optionally, the positions of the Y bits in the N bits and/or the value of Y may be configured by the second communication apparatus, for example, may be configured by the second communication apparatus by using an RRC message, or may be preconfigured, or may be defined in a protocol. This is not limited herein. Optionally, the Y bits in the N bits may be consecutive or may be inconsecutive. This is not limited.

For example, the N bits include 128 bits, and one bit (or each bit) in the 128 bits is used to carry information indicating whether an SSB (or an SSB corresponding to the one bit) belongs to the first SSB set or the second SSB set. Alternatively, the N bits include 128 bits, and there are Y bits in the 128 bits. One bit other than the Y bits in the 128 bits (or each bit other than the Y bits in the 128 bits) is used to carry information indicating whether an SSB (or an SSB corresponding to the one bit) belongs to the first SSB set or the second SSB set.

For example, one bit (for example, any bit or any bit other than the Y bits) in the N bits indicates whether an SSB (or an SSB corresponding to the one bit) is associated with the first system information or is not associated with the first system information, or indicates whether an SSB (or an SSB corresponding to the one bit) belongs to/is the first SSB set or the second SSB set. For example, if a value of a first bit is a first value, it indicates that the first SSB is associated with the first system information, or indicates that the first SSB belongs to/is the first SSB set. If a value of a first bit is a second value, it indicates that the first SSB is not associated with the first system information, or indicates that the first SSB belongs to/is the second SSB set. For example, the first value is 1, and the second value is 0; or the first value is 0, and the second value is 1. This is not limited herein. Optionally, the SSB is, for example, an SSB in which the first communication apparatus is currently located, or an SSB/a strongest SSB corresponding to a current position of the first communication apparatus. Optionally, the first bit is associated with the first SSB.

For example, a first bit in the N bits indicates that the first SSB is associated with the first system information or/and is not associated with the first system information, or indicates that the first SSB belongs to/is the first SSB set or the second SSB set. For example, the first SSB may be any SSB in the first SSB set and the second SSB set.

For example, if a value of a first bit is a first value, it indicates that the first SSB is associated with the first system information, or indicates that the first SSB belongs to/is the first SSB set. If a value of a first bit is a second value, it indicates that the second communication apparatus is not associated with the first system information in the first SSB, or indicates that the first SSB belongs to/is the second SSB set.

For example, one bit in the N bits is associated with one SSB. For example, different bits in the N bits are associated with different SSBs. For example, how the bits in the N bits are associated with the SSBs is not limited in this application.

Optionally, a position of the first bit in the N bits may indicate/be used to determine an index of the first SSB.

In a possible design, an F^{th} bit at a leftmost/rightmost/least significant/most significant bit (or starting from the leftmost/rightmost/least significant/most significant bit) in the N bits corresponds to an SSB whose index is F or corresponds to an SSB related to F (for example, an SSB whose index is F-1 or F+1).

Optionally, F is an integer, a positive integer, or a non-negative integer.

For example, there are four SSBs in the first cell, indexes of the four SSBs are respectively 0 to 3, and the N bits are specifically four bits. The four bits from left to right or from the most significant bit to the least significant bit respectively correspond to an SSB whose index is 0, an SSB whose index is 1, an SSB whose index is 2, and an SSB whose index is 3.

In another possible design, an F^{th} bit at a leftmost/rightmost/least significant/most significant bit (or starting from the leftmost/rightmost/least significant/most significant bit) in the N bits corresponds to an F^{th} SSB in SSBs other than the third SSB set that are in ascending or descending order of indexes, or corresponds to an SSB related to F (for example, an (F+1)^{th} or (F-1)^{th} SSB in SSBs other than the third SSB set that are in ascending or descending order of indexes).

For example, there are 67 SSBs in the first cell, indexes of the 67 SSBs are respectively 1 to 67, and SSBs whose indexes are 2 to 64 belong to the third data set. The N bits are specifically four bits, and the four bits from left to right or from a most significant bit to a least significant bit respectively correspond to: an SSB whose index is 1, an SSB whose index is 65, an SSB whose index is 66, and an SSB whose index is 67.

In a possible implementation, each/all of the N bits indicates/indicate that a corresponding SSB is associated with the first system information, or a corresponding SSB belongs to/is the first SSB set. For example, in this case, it may be considered that the N bits carry the information about the first SSB set. In this case, optionally, it may be considered that the N bits are in a one-to-one correspondence with the first SSB set. In other words, each bit in the N bits corresponds to one SSB in the first SSB set.

In another possible implementation, each/all of the N bits indicates/indicate that a corresponding SSB is not associated with the first system information, or a corresponding SSB belongs to/is the second SSB set. For example, in this case, it may be considered that the N bits carry the information about the second SSB set. In this case, optionally, the N bits are in a one-to-one correspondence with the second SSB set. In other words, each bit in the N bits corresponds to one SSB in the second SSB set.

In still another possible implementation, a part of the N bits indicate that corresponding SSBs are associated with the first system information or belong to/are the first SSB set, and another part of bits in the N bits indicate that corresponding SSBs are not associated with the first system information or belong to/are the second SSB set. For example, in this case, it may be considered that the N bits carry the information about the first SSB set and the information about the second SSB set. In this case, optionally, the N bits are in a one-to-one correspondence with the SSBs in the first SSB set and the second SSB set. In other words, each bit in the N bits corresponds to one SSB in the first SSB set and the second SSB set.

For content of the information about the first SSB set and/or the information about the second SSB set that is indicated by the indication information in the form of bitmap, refer to the information about the first region set and/or the information about the second region set that is indicated by the indication information in the form of bitmap and that is described in FIG. 12. No repeated description is provided.

E2: The indication information indicates a quantity and/or indexes of the SSBs in the first SSB set, or a quantity and/or indexes of the SSBs in the second SSB set, or a quantity and/or indexes of the SSBs in the first SSB set, and a quantity and/or indexes of the SSBs in the second SSB set.

Optionally, the indexes of the SSBs in the first SSB set are consecutive.

In a possible design, indexes of the SSBs/two SSBs/two adjacent SSBs in the first SSB set satisfy a first relationship. For example, the first relationship may be that indexes of two SSBs/two adjacent SSBs are consecutive and increasing, or indexes of two SSBs/two adjacent SSBs are consecutive and decreasing, or indexes of two adjacent SSBs differ by a third value. For example, the first relationship indicates that the indexes of two SSBs/two adjacent SSBs are consecutive. In this case, the indexes of the SSBs in the first SSB set are consecutive. For example, the third value is 1, 2, 3, or another value. Optionally, the first relationship may be configured by the second communication apparatus, for example, may be configured by the second communication apparatus by using an RRC message, or may be preconfigured, or may be defined in a protocol. This is not limited herein.

Optionally, the indexes of the SSBs in the second SSB set are consecutive.

In a possible design, indexes of the SSBs /two SSBs/two adjacent SSBs in the second SSB set satisfy a second relationship. For example, the second relationship may be that indexes of two SSBs/two adjacent SSBs are consecutive and increasing, or indexes of two SSBs/two adjacent SSBs are consecutive and decreasing, or indexes of two SSBs/two adjacent SSBs differ by a fourth value. For example, the second relationship indicates that the indexes of two SSBs/two adjacent SSBs are consecutive. In this case, the indexes of the SSBs in the second SSB set are consecutive. For example, the fourth value is 1, 2, 3, or another value. For example, the fourth value is the same as or different from the third value. Optionally, the second relationship may be configured by the second communication apparatus, for example, may be configured by the second communication apparatus by using an RRC message, or may be preconfigured, or may be defined in a protocol. This is not limited herein.

For example, the indication information may indicate (or include) at least one piece of information in E2-1 to E2-4.

E2-1: First index information. For example, the first index information indicates a start index and/or an end index of SSBs in the first SSB set. For example, the first index information may be considered as an example of the information about the first SSB set. Alternatively, for example, E2-1 may be considered as an example in which the indication information indicates (or includes) the information about the first SSB set.

For example, the first index information indicates a start index or an end index of SSBs in the first SSB set, or the first index information indicates a start index and an end index of SSBs in the first SSB set.

In a possible implementation, a quantity of SSBs in the first SSB set may be preconfigured, or may be defined in a protocol, or may be fixed. Optionally, the quantity of SSBs in the first SSB set is 20 or another value. This is not limited herein.

For example, if the first index information indicates that the start index of SSBs in the first SSB set is 0 and the quantity of SSBs in the first SSB set is 20, it indicates that the first SSB set includes SSBs whose indexes are 0 to 19, or SSBs whose indexes are 0 to 19 are all SSBs associated with the first system information.

In another possible implementation, the start index of SSBs in the first SSB set may be preconfigured, or may be defined in a protocol, or may be fixed.

For example, the start index of SSBs in the first SSB set is 0, 1, or another value.

For example, if the first index information indicates that the end index of SSBs in the first SSB set is 19, and the start index of SSBs in the first SSB set is 0, it indicates that the first SSB set includes SSBs whose indexes are 0 to 19, or SSBs whose indexes are 0 to 19 are all SSBs associated with the first system information.

In another possible implementation, the end index of SSBs in the first SSB set may be preconfigured, or may be defined in a protocol, or may be fixed.

For example, the start index of SSBs in the first SSB set is 255, 256, 127, 128, 32, 31, 64, 63, or another value.

For example, if the first index information indicates that the start index of SSBs in the first SSB set is 236, and the end index of SSBs in the first SSB set is 255, it indicates that the first SSB set includes SSBs whose indexes are 236 to 255, or SSBs whose indexes are 236 to 255 are all SSBs associated with the first system information.

E2-2: Second index information. For example, the second index information indicates a start index and/or an end index of SSBs in the second SSB set. For example, the second index information may be considered as an example of the information about the second SSB set. Alternatively, for example, E2-2 may be considered as an example in which the indication information indicates (or includes) the information about the second SSB set.

For example, the second index information indicates a start index or an end index of SSBs in the second SSB set, or the second index information indicates a start index and an end index of SSBs in the second SSB set.

In a possible implementation, a quantity of SSBs in the second SSB set may be preconfigured, or may be defined in a protocol, or may be fixed. Optionally, the quantity of SSBs in the second SSB set is 20 or another value. This is not limited herein.

For example, if the first index information indicates that the end index of SSBs in the second SSB set is 255, and the quantity of SSBs in the second SSB set is 20, it indicates that the second SSB set includes SSBs whose indexes are 236 to 255, or SSBs whose indexes are 236 to 255 are all SSBs that are not associated with the first system information.

In another possible implementation, the start index of SSBs in the second SSB set may be preconfigured, or may be defined in a protocol, or may be fixed. For example, the start index of SSBs in the second SSB set is 0, 1, or another value.

For example, if the first index information indicates that the end index of SSBs in the second SSB set is 19, and the start index of SSBs in the second SSB set is 0, it indicates that the second SSB set includes SSBs whose indexes are 0 to 19, or SSBs whose indexes are 0 to 19 are all SSBs that are not associated with the first system information.

In another possible implementation, the end index of SSBs in the second SSB set may be preconfigured, or may be defined in a protocol, or may be fixed.

For example, the start index of SSBs in the second SSB set is 255, 256, 127, 128, 32, 31, 64, 63, or another value.

For example, if the first index information indicates that the start index of SSBs in the second SSB set is 236, and the end index of SSBs in the second SSB set is 255, it indicates that the second SSB set includes SSBs whose indexes are 236 to 255, or SSBs whose indexes are 236 to 255 are all SSBs that are not associated with the first system information.

E2-3: First quantity information. For example, the first quantity information indicates a quantity of SSBs in the first SSB set. For example, the first quantity information may be considered as an example of the information about the first SSB set. Alternatively, for example, E2-3 may be considered as an example in which the indication information indicates (or includes) the information about the first SSB set.

In a possible implementation, a start index of SSBs in the first SSB set may be preconfigured, or may be defined in a protocol, or may be fixed. Optionally, the start index of SSBs in the first SSB set is 0, 1, or another value.

For example, if the first quantity information indicates that the quantity of SSBs in the first SSB set is 20, and the start index of SSBs in the first SSB set is 0, it indicates that the first SSB set includes SSBs whose indexes are 0 to 19, or SSBs whose indexes are 0 to 19 are all SSBs associated with the first system information.

In another possible implementation, an end index of SSBs in the first SSB set may be preconfigured, or may be defined in a protocol, or may be fixed.

For example, the start index of SSBs in the first SSB set is 255, 256, 127, 128, 32, 31, 64, 63, or another value.

For example, if the first quantity information indicates that the quantity of SSBs in the first SSB set is 236, and the end index of SSBs in the first SSB set is 255, it indicates that the first SSB set includes SSBs whose indexes are 236 to 255, or SSBs whose indexes are 236 to 255 are all SSBs associated with the first system information.

E2-4: Second quantity information. For example, the first quantity information indicates a quantity of SSBs in the second SSB set. For example, the second quantity information may be considered as an example of the information about the second SSB set. Alternatively, for example, E2-4 may be considered as an example in which the indication information indicates (or includes) the information about the second SSB set.

In a possible implementation, a start index of SSBs in the second SSB set may be preconfigured, or may be defined in a protocol, or may be fixed.

For example, the start index of SSBs in the second SSB set is 0, 1, or another value.

For example, if the first quantity information indicates that the quantity of SSBs in the second SSB set is 20, and the start index of SSBs in the second SSB set is 0, it indicates that the second SSB set includes SSBs whose indexes are 0 to 19, or SSBs whose indexes are 0 to 19 are all SSBs that are not associated with the first system information.

In another possible implementation, an end index of SSBs in the second SSB set may be preconfigured, or may be defined in a protocol, or may be fixed.

For example, the start index of SSBs in the second SSB set is 255, 256, 127, 128, 32, 31, 64, 63, or another value.

For example, if the first quantity information indicates that the quantity of SSBs in the second SSB set is 236, and the end index of SSBs in the second SSB set is 255, it indicates that the second SSB set includes SSBs whose indexes are 236 to 255, or SSBs whose indexes are 236 to 255 are all SSBs that are not associated with the first system information.

Optionally, the indication information includes at least two of E2-1 to E2-4. The following provides descriptions in combination with cases of E2-5 to E2-13. For example, the first communication apparatus may correspondingly obtain the information about the first SSB set and/or the information about the second SSB set based on at least two of E2-1 to E2-4.

For example, the indication information may indicate (or include) any one of E2-5 to E2-13.

E2-5, E2-1, and E2-3 are the first index information and the first quantity information. For example, the first index information and the first quantity information may be considered as an example of the information about the first SSB set. Alternatively, for example, E2-5 may be considered as an example in which the indication information indicates (or includes) the information about the first SSB set.

For example, if the first index information indicates that the start index of SSBs in the first SSB set is 0, and the first quantity information indicates that the quantity of SSBs in the first SSB set is 21, it indicates that the first SSB set includes SSBs whose indexes are 0 to 20, or SSBs whose indexes are 0 to 20 are all SSBs associated with the first system information.

E2-6, E2-2, and E2-4 are the second index information and the second quantity information. For example, the second index information and the second quantity information may be considered as an example of the information about the second SSB set. Alternatively, for example, E2-6 may be considered as an example in which the indication information indicates (or includes) the information about the second SSB set.

For example, if the second index information indicates that the start index of SSBs in the second SSB set is 60, and the second quantity information indicates that the quantity of SSBs in the second SSB set is 20, it indicates that the second SSB set includes SSBs whose indexes are 60 to 79, or SSBs whose indexes are 60 to 79 are SSBs that are not associated with the first system information.

E2-7, E2-1, and E2-4 are the first index information and the second quantity information. For example, the first index information may be considered as an example of information about the first SSB set, and the second quantity information may be considered as an example of information about the second SSB set. Alternatively, for example, E2-7 may be considered as an example in which the indication information indicates (or includes) the information about the first SSB set and the information about the second SSB set.

In a possible implementation, the quantity of SSBs in the first SSB set may be preconfigured, or may be defined in a protocol, or may be fixed.

In a possible implementation, the start index of SSBs in the second SSB set may be preconfigured, or may be defined in a protocol, or may be fixed; and/or the end index of SSBs in the second SSB set may be preconfigured, or may be defined in a protocol, or may be fixed.

For example, if the first index information indicates that the start index of SSBs in the first SSB set is 1 and the quantity of SSBs in the first SSB set is 10, it indicates that the first SSB set includes SSBs whose indexes are 1 to 9, or SSBs whose indexes are 1 to 9 are all SSBs associated with the first system information. For example, if the second quantity information indicates that the quantity of SSBs in the second SSB set is 10, and the start index of SSBs in the second SSB set is 60, it indicates that the second SSB set includes SSBs whose indexes are 60 to 69, or SSBs whose indexes are 60 to 69 are SSBs that are not associated with the first system information.

E2-8, E2-2, and E2-3 are the first quantity information and the second index information. For example, the first quantity information may be considered as an example of the information about the first SSB set, and the second index information may be considered as an example of the information about the second SSB set. Alternatively, for example, E2-8 may be considered as an example in which the indication information indicates (or includes) the information about the first SSB set and the information about the second SSB set.

In a possible implementation, the start index of SSBs in the first SSB set may be preconfigured, or may be defined in a protocol, or may be fixed; and/or the end index of SSBs in the first SSB set may be preconfigured, or may be defined in a protocol, or may be fixed.

In a possible implementation, the quantity of SSBs in the second SSB set may be preconfigured, or may be defined in a protocol, or may be fixed.

E2-9, E2-1, and E2-2 are the first index information and the second index information. For example, the first index information may be considered as an example of the information about the first SSB set, and the second index information may be considered as an example of the information about the second SSB set. Alternatively, for example, E2-9 may be considered as an example in which the indication information indicates (or includes) the information about the first SSB set and the information about the second SSB set.

In a possible implementation, the quantity of SSBs in the first SSB set may be preconfigured, or may be defined in a protocol, or may be fixed. In another possible implementation, the start index of SSBs in the first SSB set may be preconfigured, or may be defined in a protocol, or may be fixed; and/or the end index of SSBs in the first SSB set may be preconfigured, or may be defined in a protocol, or may be fixed.

In a possible implementation, the quantity of SSBs in the second SSB set may be preconfigured, or may be defined in a protocol, or may be fixed. In another possible implementation, the start index of SSBs in the second SSB set may be preconfigured, or may be defined in a protocol, or may be fixed; and/or the end index of SSBs in the second SSB set may be preconfigured, or may be defined in a protocol, or may be fixed.

E2-10, E2-3, and E2-4 are the first quantity information and the second quantity information. For example, the first quantity information may be considered as an example of information about the first SSB set, and the second quantity information may be considered as an example of information about the second SSB set. Alternatively, for example, E2-10 may be considered as an example in which the indication information indicates (or includes) the information about the first SSB set and the information about the second SSB set.

In a possible implementation, the start index of SSBs in the first SSB set may be preconfigured, or may be defined in a protocol, or may be fixed; and/or the end index of SSBs in the first SSB set may be preconfigured, or may be defined in a protocol, or may be fixed.

In a possible implementation, the start index of SSBs in the second SSB set may be preconfigured, or may be defined in a protocol, or may be fixed; and/or the end index of SSBs in the second SSB set may be preconfigured, or may be defined in a protocol, or may be fixed.

For example, if the first quantity information indicates that the quantity of SSBs in the first SSB set is 10, and the start index of SSBs in the first SSB set is 10, it indicates that the first SSB set includes SSBs whose indexes are 10 to 19, or SSBs whose indexes are 10 to 19 are all SSBs associated with the first system information. For example, if the second quantity information indicates that the quantity of SSBs in the second SSB set is 10, and the end index of SSBs in the second SSB set is 80, it indicates that the second SSB set includes SSBs whose indexes are 71 to 80, or SSBs whose indexes are 71 to 80 are SSBs that are not associated with the first system information.

E2-11, E2-1, E2-3, and E2-4 are the first index information, the first quantity information, and the second quantity information. For example, the first quantity information and the first index information may be considered as an example of the information about the first SSB set, and the second quantity information may be considered as an example of the information about the second SSB set. Alternatively, for example, E2-11 may be considered as an example in which the indication information indicates (or includes) the information about the first SSB set and the information about the second SSB set.

In a possible implementation, the start index of SSBs in the second SSB set may be preconfigured, or may be defined in a protocol, or may be fixed; and/or the end index of SSBs in the second SSB set may be preconfigured, or may be defined in a protocol, or may be fixed.

For example, if the first quantity information indicates that the quantity of SSBs in the first SSB set is 10, and the first index information indicates that the start index of SSBs in the first SSB set is 10, it indicates that the first SSB set includes SSBs whose indexes are 10 to 19, or SSBs whose indexes are 10 to 19 are all SSBs associated with the first system information. For example, if the second quantity information indicates that the quantity of SSBs in the second SSB set is 10, and the end index of SSBs in the second SSB set is 80, it indicates that the second SSB set includes SSBs whose indexes are 71 to 80, or SSBs whose indexes are 71 to 80 are SSBs that are not associated with the first system information.

E2-12, E2-2, E2-3, and E2-4 are the second index information, the first quantity information, and the second quantity information. For example, the first quantity information may be considered as an example of the information about the first SSB set, and the second quantity information and the second index information may be considered as an example of the information about the second SSB set. Alternatively, for example, E2-12 may be considered as an example in which the indication information indicates (or includes) the information about the first SSB set and the information about the second SSB set.

In a possible implementation, the start index of SSBs in the first SSB set may be preconfigured, or may be defined in a protocol, or may be fixed; and/or the end index of SSBs in the first SSB set may be preconfigured, or may be defined in a protocol, or may be fixed.

For example, if the first quantity information indicates that the quantity of SSBs in the first SSB set is 10, and the start index of SSBs in the first SSB set is 10, it indicates that the first SSB set includes SSBs whose indexes are 10 to 19, or SSBs whose indexes are 10 to 19 are all SSBs associated with the first system information. For example, if the second quantity information indicates that the quantity of SSBs in the second SSB set is 10, and the second index information indicates that the end index of SSBs in the second SSB set is 80, it indicates that the second SSB set includes SSBs whose indexes are 71 to 80, or SSBs whose indexes are 71 to 80 are all SSBs that are not associated with the first system information.

E2-13, and E2-1 to E2-4 are the first index information, the second index information, the first quantity information, and the second quantity information. For example, the first quantity information and the first index information may be considered as an example of the information about the first SSB set, and the second quantity information and the second index information may be considered as an example of the information about the second SSB set. Alternatively, for example, E2-13 may be considered as an example in which the indication information indicates (or includes) the information about the first SSB set and the information about the second SSB set.

For example, if the first quantity information indicates that the quantity of SSBs in the first SSB set is 10, and the first index information indicates that the start index of SSBs in the first SSB set is 10, it indicates that the first SSB set includes SSBs whose indexes are 10 to 19, or SSBs whose indexes are 10 to 19 are all SSBs associated with the first system information. For example, if the second quantity information indicates that the quantity of SSBs in the second SSB set is 10, and the second index information indicates that the end index of SSBs in the second SSB set is 80, it indicates that the second SSB set includes SSBs whose indexes are 71 to 80, or SSBs whose indexes are 71 to 80 are all SSBs that are not associated with the first system information.

E3: The indication information indicates information about an index of an SSB in the first SSB set and/or information about an index of an SSB in the second SSB set. For example, the information about the index of the SSB in the first SSB set may be considered as an example of the information about the first SSB set. For example, the information about the index of the SSB in the second SSB set may be considered as an example of the information about the second SSB set.

For example, the indication information indicates information about indexes of one or more or all SSBs in the first SSB set and/or information about indexes of one or more or all SSBs in the second SSB set.

Optionally, the indication information may include/indicate that: for one SSB (for example, the first SSB), the second communication apparatus sends the first system information or does not send the first system information; or for one SSB (for example, the first SSB), the first communication apparatus receives the first system information or does not receive the first system information; or one SSB (for example, the first SSB) belongs to/is the first SSB set or the second SSB set.

Optionally, the indication information is associated with the first SSB. For example, for the first SSB, the second communication apparatus sends the indication information. For example, for the first SSB, the first communication apparatus obtains the indication information.

Optionally, the indication information may be carried in DCI or the like. This is not specifically limited in embodiments of this application. For example, the indication information is carried in paging (paging) DCI or a short message of paging DCI. Optionally, the indication information occupies 1 bit. For example, the first communication apparatus receives paging DCI on the first SSB, where the paging DCI includes the indication information, to indicate that the second communication apparatus sends the first system information for the first SSB, or the first SSB is associated with the first system information, or the first SSB belongs to/is the first SSB set.

Optionally, the first SSB may be an SSB in which the first communication apparatus is currently located, or an SSB in which the first communication apparatus obtains the indication information.

For example, if a value of the indication information is a first value, it indicates that the second communication apparatus sends the first system information for the first SSB or indicates that the first SSB belongs to/is the first SSB set. If a value of the indication information is a second value, it indicates that the second communication apparatus does not send the first system information for the first SSB or indicates that the first SSB belongs to/is the second SSB set. For example, the first value is 1, and the second value is 0; or the first value is 0, and the second value is 1. This is not limited herein.

For example, for one SSB may include/be replaced with: for a PDCCH monitoring occasion corresponding to the one SSB.

For example, for the first SSB may include/be replaced with: for a PDCCH monitoring occasion corresponding to the first SSB.

In a possible implementation, in addition to the information about the first SSB set and/or the information about the second SSB set, the indication information may further include information about a fourth SSB set and/or information about a fifth SSB set.

Optionally, for how the indication information indicates the information about the fourth SSB set and/or the information about the fifth SSB set, refer to the foregoing description of indicating the information about the first SSB set and/or the information about the second SSB set. Details are not described herein again.

In a possible implementation, the fourth SSB set belongs to a second cell. Optionally, the fifth SSB set also belongs to the second cell. Alternatively, in a possible implementation, the fourth SSB set is associated with the second cell. Optionally, the fifth SSB set is associated with the second cell.

Optionally, the fourth SSB set may be an SSB set associated with the first system information. Optionally, the fifth SSB set may be an SSB set that is not associated with the first system information. For example, the second cell is different from the first cell. For example, in this possible implementation, the indication information not only indicates related information of the SSB set of the first cell, but also indicates related information of an SSB set related to another cell (including but not limited to the second cell).

Optionally, S1702: The first communication apparatus determines the first SSB set and/or the second SSB set.

For example, determining the first SSB set may include/be replaced with any one or more of the following: determining an SSB associated with the first system information, determining an SSB set associated with the first system information, determining an edge SSB, or determining a set of edge SSBs.

For example, determining the second SSB set may include/be replaced with any one or more of the following: determining an SSB that is not associated with the first system information, determining an SSB set that is not associated with the first system information, determining a center SSB, or determining a set of center SSBs.

Optionally, if the indication information indicates the information about the first SSB set and/or the information about the second SSB set in different manners, the first communication apparatus performs S1702 in different manners. The following provides descriptions by using examples.

F1: The information about the first SSB set and/or the information about the second SSB set is indicated in the manner E1, that is, the indication information indicates the information about the first SSB set and/or the information about the second SSB set in a form of bitmap.

In this case, for content of the first SSB set determined by the first communication apparatus, refer to the foregoing content of the first region set determined by the first communication apparatus in C1, and for content of the second SSB set determined by the first communication apparatus, refer to the foregoing content of the second region set determined by the first communication apparatus in C1. Details are not described one by one herein.

F2: The information about the first SSB set and/or the information about the second SSB set is indicated in the manner E2.

F2-1: It is assumed that the indication information includes the first index information shown in E2-1.

In this case, for content of the first SSB set determined by the first communication apparatus, refer to the foregoing content of the first region set determined by the first communication apparatus in C2-1, and for content of the second SSB set determined by the first communication apparatus, refer to the foregoing content of the second region set determined by the first communication apparatus in C2-1. Details are not described one by one herein.

F2-2: The indication information includes the second index information shown in E2-2.

In this case, for content of the first SSB set determined by the first communication apparatus, refer to the foregoing content of the first region set determined by the first communication apparatus in C2-2, and for content of the second SSB set determined by the first communication apparatus, refer to the foregoing content of the second region set determined by the first communication apparatus in C2-2. Details are not described one by one herein.

F2-3: The indication information includes the first quantity information shown in E2-3.

In this case, for content of the first SSB set determined by the first communication apparatus, refer to the foregoing content of the first region set determined by the first communication apparatus in C2-3, and for content of the second SSB set determined by the first communication apparatus, refer to the foregoing content of the second region set determined by the first communication apparatus in C2-3. Details are not described one by one herein.

F2-4: The indication information includes the second quantity information shown in E2-4.

In this case, for content of the first SSB set determined by the first communication apparatus, refer to the foregoing content of the first region set determined by the first communication apparatus in C2-4, and for content of the second SSB set determined by the first communication apparatus, refer to the foregoing content of the second region set determined by the first communication apparatus in C2-4. Details are not described one by one herein.

When the indication information includes at least two of E2-1 to E2-4, the first communication apparatus may alternatively determine the first SSB set and/or the second SSB set in combination with the foregoing manners corresponding to at least two of E2-1 to E2-4 in F2-1 to F2-4. The following provides descriptions by using content shown in F2-5 to F2-13.

F2-5: If the indication information includes the first index information shown in E2-1 and the first quantity information shown in E2-3 (or it may be considered that the indication information is the information shown in E2-5), the first communication apparatus may directly determine the first SSB set based on the first index information and the first quantity information. Optionally, the first communication apparatus may further determine the second SSB set.

F2-6: If the indication information includes the second index information shown in E2-2 and the second quantity information shown in E2-4 (or it may be considered that the indication information is the information shown in E2-6), the first communication apparatus may directly determine the second SSB set based on the second index information and the second quantity information. Optionally, the first communication apparatus may further determine the first SSB set.

F2-7: The indication information includes the first index information shown in E2-1 and the second quantity information shown in E2-4 (or it may be considered that the indication information is the information shown in E2-7).

In this case, the first communication apparatus may determine the first SSB set in combination with the content in F2-1, and determine the second SSB set in combination with the content in C2-3. No repeated description is provided.

F2-8: The indication information includes the second index information shown in E2-2 and the first quantity information shown in E2-3 (or it may be considered that the indication information is the information shown in E2-8).

In this case, the first communication apparatus may determine the second SSB set in combination with the content in F2-2, and determine the first SSB set in combination with the content in F2-3. No repeated description is provided.

F2-9: The indication information includes content in E2-1 and E2-2, that is, the indication information includes the first index information and the second index information (or it may be considered that the indication information is the information shown in E2-9).

In this case, the first communication apparatus may determine the first SSB set in combination with the content in F2-1, and determine the second SSB set in combination with the content in C2-2. No repeated description is provided.

F2-10: The indication information includes content in E2-3 and E2-4, that is, the indication information includes the first quantity information and the second quantity information (or it may be considered that the indication information is the information shown in E2-10).

In this case, the first communication apparatus may determine the first SSB set in combination with the content in F2-3, and determine the second SSB set in combination with the content in C2-4. No repeated description is provided.

F2-11: The indication information includes content in E2-1, E2-3, and E2-4, that is, the indication information includes the first index information, the first quantity information, and the second quantity information (or it may be considered that the indication information is the information shown in E2-11).

In this case, the first communication apparatus may determine the first SSB set based on the first index information and the first quantity information, and determine the second SSB set in combination with the content in F2-4. No repeated description is provided.

F2-12: The indication information includes content in E2-2, E2-3, and E2-4, that is, the indication information includes the second index information, the first quantity information, and the second quantity information (or it may be considered that the indication information is the information shown in E2-12).

In this case, the first communication apparatus may determine the second SSB set based on the second index information and the second quantity information, and determine the first SSB set in combination with the content in F2-3. No repeated description is provided.

F2-13: The indication information includes content in E2-1 to E2-4, that is, the indication information includes the first index information, the second index information, the first quantity information, and the second quantity information (or it may be considered that the indication information is the information shown in E2-13).

In this case, the first communication apparatus may determine the first SSB set based on the first index information and the first quantity information, and determine the second SSB set based on the second index information and the second quantity information.

F3: The information about the first SSB set and/or the information about the second SSB set is indicated in the manner E3.

In this case, for content of the first SSB set determined by the first communication apparatus, refer to the foregoing content of the first region set determined by the first communication apparatus in C3, and for content of the second SSB set determined by the first communication apparatus, refer to the foregoing content of the second region set determined by the first communication apparatus in C3. Details are not described one by one herein.

In a possible implementation, if the first SSB set or the second SSB set includes only the first SSB, the first communication apparatus may determine, based on the indication information, whether the first SSB is associated with the first system information or is not associated with the first system information.

Optionally, that the first communication apparatus determines the first SSB set and/or the second SSB set in S1702 may include/be replaced with: The first communication apparatus determines whether one SSB (for example, the first SSB) is associated with the first system information or is not associated with the first system information, or whether one SSB (for example, the first SSB) belongs to/is the first SSB set or the second SSB set.

Optionally, in a possible implementation, if the indication information further includes the information about the fourth SSB set and/or the information about the fifth SSB set, the first communication apparatus may determine the fourth SSB set and the fifth SSB set. Optionally, for a manner of determining the fourth SSB set and a manner of determining the fifth SSB set, refer to the foregoing manner in which the first communication apparatus determines the first SSB set and/or the second SSB set. Details are not described herein again.

Optionally, S1703: The first communication apparatus obtains a SIB1 (or SIB1bis).

Optionally, S1703 may include S1703a and/or S1703b. For example, S1703a is that the second communication apparatus sends a SIB1 (or SIB1bis) (or may be referred to as a SIB1 (or the SIB1bis) corresponding to the first SSB set) in the first SSB set. Optionally, S1703a may be understood as that the second communication apparatus sends a SIB1 (or SIB1bis) in a region corresponding to the first SSB set. For example, S1703b is that the second communication apparatus sends the SIB1 (or may be referred to as the SIB1 (or SIB1bis) corresponding to the second SSB set) in the second SSB set. Optionally, S1703b may be understood as that the second communication apparatus sends a SIB1 (or SIB1bis) in a region corresponding to the second SSB set. For example, S1703a is that the first communication apparatus receives the SIB1 (or the SIB1bis) (or may be referred to as the SIB1 (or the SIB1bis) corresponding to the first SSB set) in the first SSB set. Optionally, S1703a may be understood as that the first communication apparatus receives a SIB1 (or SIB1bis) in a region corresponding to the first SSB set. For example, S1703b is that the first communication apparatus receives the SIB1 (or may be referred to as the SIB1 (or the SIB1bis) corresponding to the second SSB set) in the second SSB set. Optionally, S1703b may be understood as that the first communication apparatus receives a SIB1 (or SIB1bis) in a region corresponding to the second SSB set.

Optionally, that the first communication apparatus obtains the SIB1 (or the SIB1bis) may include/be replaced with: The first communication apparatus obtains scheduling information of the first system information.

Optionally, the first SSB set and the second SSB set correspond to a same SIB1 (or SIB1bis), or the first SSB set and the second SSB set correspond to a same SIB1 (or SIB1bis).

Optionally, that the first SSB set and the second SSB set correspond to a same SIB1 (or SIB1bis) may include/be understood as that: In a period of time (for example, in a period of time of one SIB1/SIB1bis or one modification period), the first SSB set and the second SSB set correspond to a same SIB1 (or SIB1bis).

In different time periods, the SIB1 (or SIB1bis) corresponding to the first SSB set may be the same as or different from the SIB1 (or SIB1bis) corresponding to the second SSB set. This is not limited herein.

Optionally, all SSBs (or all SSBs corresponding to one cell/the first cell/all transmitted SSBs) correspond to a same SIB1 (or SIB1bis), or SIB1s (or SIB1bis) corresponding to all SSBs (or all SSBs corresponding to one cell/the first cell/all transmitted SSBs) are the same. For example, all SSBs may include/be all SSBs of the second communication apparatus in the first cell, or all SSBs related to the first cell, or all SSBs configured by the second communication apparatus in signaling (for example, higher layer signaling, system information, or a SIB1). For example, all SSBs may include/be replaced with all transmitted SSBs.

Optionally, that all SSBs (or all SSBs corresponding to one cell/the first cell/all transmitted SSBs) correspond to a same SIB1 (or SIB1bis) may include/be understood as that: In a period of time (for example, in a period of time of one SIB1/SIB1bis or one modification period), SIB1s (or SIB1bis) corresponding to all SSBs (or all SSBs corresponding to one cell/the first cell/all transmitted SSBs) are the same.

In different time periods, SIB1s (or SIB1bis) corresponding to all SSBs (or all SSBs corresponding to one cell/the first cell/all transmitted SSBs) may be the same or may be different. This is not limited herein.

For example, the first communication apparatus assumes/considers/regards that all SSBs (or all SSBs corresponding to one cell/the first cell/all transmitted SSBs) correspond to a same SIB1 (or SIB1bis), or SIB1s (or SIB1bis) corresponding to all SSBs (or all SSBs corresponding to one cell/the first cell/all transmitted SSBs) are the same.

Optionally, the SIB1s (or SIB1bis) of the first cell include/each include scheduling information of the first system information.

Optionally, the SIB1 (or SIB1bis) corresponding to the first SSB set and the SIB1 (or SIB1bis) corresponding to the second SSB set include/both include the scheduling information of the first system information.

For example, the SIB1 (or SIB1bis) corresponding to the first SSB set is the same as the SIB1 (or SIB1bis) corresponding to the second SSB set. For example, content of the SIB1 (or SIB1bis) corresponding to the first SSB set is the same as content of the SIB1 (or SIB1bis) corresponding to the second SSB set. For example, both the SIB1 (or SIB1bis) corresponding to the first SSB set and the SIB1 (or SIB1bis) corresponding to the second SSB set include the scheduling information of the first system information (or same scheduling information of the first system information). For example, an information item included in the SIB1 (or SIB1bis) corresponding to the first SSB set is the same as an information item included in the SIB1 (or SIB1bis) corresponding to the second SSB set.

It should be noted that this application does not limit whether the first communication apparatus obtains the SIB1 (or SIB1bis) corresponding to the first SSB set and the SIB1 (or SIB1bis) corresponding to the second SSB set, and also does not limit a relationship between a quantity of SIB1s (or SIB1bis) obtained in the first SSB set and a quantity of SIB1s (or SIB1bis) obtained in the second SSB set. Optionally, the first communication apparatus possibly obtains one or more of the SIB1 (or SIB1bis) corresponding to the first SSB set and the SIB1 (or SIB1bis) corresponding to the second SSB set.

For example, if the indication information is carried in the SIB1 (or SIB1bis), the first communication apparatus obtains the SIB1 (or SIB1bis), and therefore obtains the indication information. In this case, S1701 and S1703 may be implemented by using one step.

Alternatively, for example, if the indication information is not carried in the SIB1 (or SIB1bis), S1701 and S1703 may be performed in any sequence. For example, S1701 is performed first, and then S1703 is performed; or S1701 and S1703 are performed at the same time; or S1703 is performed first, and then S1701 is performed. Certainly, S1702 and S1703 may also be performed in any sequence. For example, S1702 is performed first, and then S1703 is performed; or S1702 and S1703 are performed at the same time; or S1703 is performed first, and then S1702 is performed.

S1704: The first communication apparatus ignores the scheduling information of the first system information for the second SSB set, and/or the first communication apparatus does not receive the first system information for the second SSB set. S1704 is an optional step, and is shown by using a dashed line in FIG. 17.

Optionally, for the second SSB set, the second communication apparatus does not send the first system information.

For example, the first communication apparatus determines the first SSB set or the second SSB set, and may determine that the second communication apparatus does not send the first system information for the second SSB set. But when the SIB1 (or the SIB1bis) obtained by the first communication apparatus (SIB1 (or SIB1bis) received in the first SSB set (for example, SIB1 (or SIB1bis) corresponding to the first SSB set) and/or SIB1 (or SIB1bis) received in the second SSB set (for example, SIB1 (or SIB1bis) corresponding to the second SSB set)) includes the scheduling information of the first system information, the first communication apparatus may ignore the scheduling information of the first system information for the second SSB set.

For example, for the second SSB set, the first communication apparatus does not need to monitor the first system information.

Optionally, in S1704, that the first communication apparatus ignores the scheduling information of the first system information for the second SSB set, and/or the first communication apparatus does not receive the first system information for the second SSB set may include/be replaced with: The first communication apparatus ignores the scheduling information of the first system information for/in the second region set, and/or the first communication apparatus does not receive the first system information for/in the second region set.

For example, the second region set may include/be replaced with: a region corresponding to the second SSB set, a coverage region of the second SSB set, or a coverage region corresponding to the second SSB set.

Optionally, S1705: The first communication apparatus receives the first system information for the first SSB set (or one or more SSBs in the first SSB set).

Optionally, the first system information in S1705 may include/be replaced with: second system information, or one or more pieces of system information, or a SIB, or an SI message in the first system information.

Optionally, the second communication apparatus sends the first system information for the first SSB set. For example, for the first SSB set, the second communication apparatus broadcasts the first system information.

Optionally, when a first condition is satisfied, the first communication apparatus receives the first system information for the first SSB set (or one or more SSBs in the first SSB set).

For example, that the first condition is satisfied may include/be replaced with: If the first condition is satisfied, it is determined that the first condition is satisfied, or the first communication apparatus satisfies the first condition, or the first communication apparatus determines that the first condition is satisfied.

The following describes an implementation of the first condition. For example, the first condition may include any one of the following G1 to G5.

G1: The first communication apparatus does not obtain the first system information in the first cell.

G2: The first communication apparatus determines that the first system information changes.

G3: The first communication apparatus does not have a valid version of the first system information.

G4: The first communication apparatus needs the first system information.

G5: The first communication apparatus is located in a region corresponding to the first SSB set.

For content of G1 to G5, refer to the content of the first condition in FIG. 12. Repeated content is not described again.

For example, one or more SIBs/system information is associated with or the first system information or the indication information or belongs to the first system information. In an SI window (an SI window corresponding to an SI message corresponding to the one or more SIBs/system information), a PDCCH/DCI corresponding to the SI message corresponding to the one or more SIBs/system information is transmitted (or transmitted by the second communication apparatus) at least once on a PDCCH monitoring occasion corresponding to each SSB in the first SSB set (or each transmitted SSB in the first SSB set). For example, the first communication apparatus assumes/considers/regards that the one or more SIBs/system information is not associated with the first system information or the indication information or is not the first system information. In an SI window (an SI window corresponding to an SI message corresponding to the one or more SIBs/system information), a PDCCH/DCI corresponding to the SI message corresponding to the one or more SIBs/system information is transmitted (or transmitted by the second communication apparatus) at least once on a PDCCH monitoring occasion corresponding to each SSB in the first SSB set (or each transmitted SSB in the first SSB set).

Optionally, this application may further include: The one or more SIBs/system information is not associated with the first system information or the indication information or is not the first system information. In an SI window (an SI window corresponding to an SI message corresponding to the one or more SIBs/system information), a PDCCH/DCI corresponding to the SI message corresponding to the one or more SIBs/system information is transmitted (or transmitted by the second communication apparatus) at least once on a PDCCH monitoring occasion corresponding to each SSB (or each transmitted SSB). For example, the first communication apparatus assumes/considers/regards that the one or more SIBs/system information is not associated with the first system information or the indication information or is not the first system information. In an SI window (an SI window corresponding to an SI message corresponding to the one or more SIBs/system information), a PDCCH/DCI corresponding to the SI message corresponding to the one or more SIBs/system information is transmitted (or transmitted by the second communication apparatus) at least once on a PDCCH monitoring occasion corresponding to each SSB (or each transmitted SSB).

For example, the one or more SIBs/system information is associated with the first system information or the indication information or belongs to the first system information, and the first communication apparatus selects one or more SSBs from the first SSB set for receiving the one or more SIBs/system information (or the SI message corresponding to the SIBs/system information).

For example, after the first communication apparatus obtains the SIB1 (or the SIB1bis) of the first cell, if there is no valid version of one or more SIBs, and the one or more SIBs/system information is associated with the first system information or indication information or is the first system information, the first communication apparatus selects one or more SSBs from the first SSB set for receiving the one or more SIBs/system information (or the SI message corresponding to the SIBs/system information).

Optionally, this application may further include: The one or more SIBs/system information is not associated with the first system information or indication information or is not the first system information, and the first communication apparatus selects one or more SSBs from SSBs (or transmitted SSBs, or all SSBs) for receiving the one or more SIBs/system information (or an SI message corresponding to the SIBs/system information).

Optionally, this application may further include: After the first communication apparatus obtains the SIB1 (or the SIB1bis) of the first cell, if there is no valid version of one or more SIBs, and the one or more SIBs/system information is not associated with the first system information or indication information or is not the first system information, the first communication apparatus selects one or more SSBs from SSBs (or transmitted SSBs, or all SSBs) for receiving the one or more SIBs/system information (or an SI message corresponding to the SIBs/system information).

It should be noted that selection of the SSB is not limited in this application. For example, a strongest SSB may be selected.

Optionally, that the first communication apparatus receives the first system information for the first SSB set (or one or more SSBs in the first SSB set) in S1705 may include/be replaced with: The first communication apparatus receives the first system information for the first SSB set (or one or more SSBs in the first SSB set) in the first region set.

For example, if the first communication apparatus is located in the first region set, the first communication apparatus receives the first system information for the first SSB set (or one or more SSBs in the first SSB set).

It should be understood that S1704 may be used as an independent embodiment, and does not depend on other steps.

It should be understood that S1705 may be used as an independent embodiment, and does not depend on other steps.

It should be understood that S1704 and S1705 may be used as an independent embodiment, and do not depend on other steps.

It should be understood that S1704 and S1705 may be performed in any sequence. For example, S1704 is performed first, and then S1705 is performed; or S1705 is performed first, and then S1704 is performed. This is not limited in embodiments of this application.

In this embodiment of this application, the second communication apparatus may notify the SSB associated with the first system information and/or the SSB (or the edge SSB and/or the center SSB) that is not associated with the first system information, so that the first communication apparatus can monitor the first system information based on a specific case in which the second communication apparatus sends the first system information, to avoid invalid monitoring and save energy. In addition, in this embodiment of this application, the second communication apparatus may selectively send the first system information in a part of SSBs of a cell, thereby reducing resource overheads and saving power of the second communication apparatus. In addition, the first communication apparatus may selectively receive the first system information based on whether the system information changes, thereby helping save power of the first communication apparatus.

It should be noted that the region in the embodiment in FIG. 12 may be replaced with an SSB or a beam or a region corresponding to an SSB or a region corresponding to a beam, to form a new embodiment. Optionally, the new embodiment may alternatively be combined with the embodiment in FIG. 12 and/or FIG. 17 to form another embodiment.

It should be noted that the embodiment described in FIG. 17 may be understood as a new embodiment formed by replacing the region in FIG. 12 with the SSB. Optionally, the embodiment shown in FIG. 17 may also be combined with the embodiment in FIG. 12.

The following describes decoding of the SIB1 (or SIB1bis).

For example, in a cell, SIB1s (or SIB1bis) broadcast by the network device are the same. Therefore, the terminal device may perform hybrid automatic repeat request (hybrid automatic repeat request, HARQ) combining and decoding of the SIB1 (or SIB1bis) at a cell level (or may be described as that the terminal device performs HARQ combining and decoding of the SIB1 (or SIB1bis) at a cell granularity). However, in the NTN, SIB1s (or SIB1bis) sent/associated by the network device in different regions of a cell may be different. Therefore, if this decoding mechanism is still used, the terminal device may fail to decode the SIB1 (or SIB1bis).

In view of this, an embodiment of this application further provides a communication method. In the method, a second communication apparatus may send/associate different SIB1s (or SIB1bis) in different regions of a cell. For example, a SIB1 (or SIB1bis) sent/associated in a part of regions of the cell carries scheduling information of first system information, and a SIB1 (or SIB1bis) sent/associated in another part of regions does not carry the scheduling information of the first system information. The first communication apparatus may accurately identify, based on a relationship between regions in which the SIB1s (or SIB1bis) are received, whether HARQ combining and decoding is performed on the SIB1s (or SIB1bis) sent/associated in different regions, thereby increasing a success rate of decoding the SIB1 (or SIB1bis) by the first communication apparatus. In addition, the first communication apparatus may also determine, based on content of the SIB1 (or SIB1bis), whether the first system information needs to be monitored, thereby reducing a quantity of times of invalid monitoring and saving power.

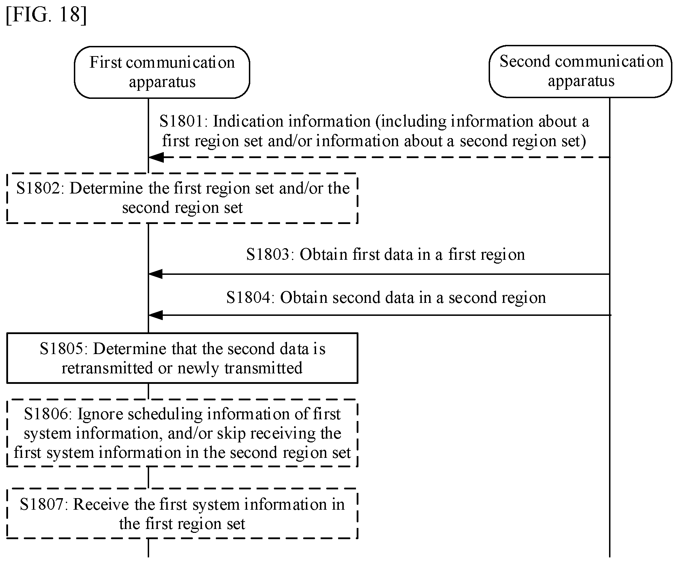

FIG. 18 shows a communication method according to an embodiment of this application.

Optionally, S1801: The first communication apparatus obtains indication information.

For example, for content related to S1801 and/or content related to the indication information, refer to the descriptions in the embodiment in FIG. 12 and/or FIG. 17. Details are not described herein again.

Optionally, S1802: The first communication apparatus determines a first region set and/or a second region set.

For example, in a possible implementation, for any one or more of the content related to S1802, the content related to the first region set, and the content related to the second region set, refer to the descriptions in the embodiment in FIG. 12 and/or FIG. 17. Details are not described herein again. In addition, the first region set in this embodiment of this application may be further understood as a region in which scheduling information of the first system information is sent/received/exists/is indicated, or may be understood as that a SIB1 in the first region set indicates or includes scheduling information of the first system information. The second region set may be further understood as a region in which the scheduling information of the first system information is not sent/not received/does not exist/is not indicated, or may be understood as that a SIB1 in the second region set does not indicate or include the scheduling information of the first system information.

For example, in another possible implementation, the first region set and/or the second region set may be preconfigured, or may be defined in a protocol, or may be fixed. For example, in this case, the second communication apparatus may not need to indicate S1801 and S1802, that is, S1801 and S1802 are optional steps, and are shown by using dashed lines in FIG. 18.

S1803: The first communication apparatus obtains first data in a first region.

For example, that the first communication apparatus obtains the first data in the first region may include/be replaced with: The first communication apparatus receives the indication information in the first region. For example, correspondingly, the second communication apparatus sends the first data in the first region, or the second communication apparatus sends the first data to the first communication apparatus in the first region.

For example, obtaining the first data may include/be replaced with: obtaining first DCI and the first data. For example, the first DCI is used to schedule the first data.

For example, sending the first data may include/be replaced with: sending the first DCI and the first data.

For example, the data may include/be replaced with a TB or a MAC PDU.

For example, the first data includes a first SIB1 (or SIB1bis). For example, the first DCI includes information indicating that the first data includes a SIB1 (or SIB1bis).

For example, when the first communication apparatus obtains the first DCI and/or the first data, the first communication apparatus may be located in the first region. For example, the first region may belong to the first region set, or may belong to the second region set. This is not specifically limited in embodiments of this application.

For example, for content related to the first region set and/or content related to the second region set, refer to the descriptions in the embodiment in FIG. 12 and/or FIG. 17. Details are not described herein again.

Optionally, when a MAC layer of the first communication apparatus performs decoding, the decoding is performed in a form of data. Therefore, this embodiment of this application is described in a form of data. However, in this embodiment of this application, the data may alternatively be replaced with a message, information, or the like for description. This is not specifically limited herein.

Optionally, in the first region may include/be replaced with: for the first region.

Optionally, the first region belongs to a first cell.

S1804: The first communication apparatus obtains second data in a second region. It should be understood that "first data" and "second data" are merely used to distinguish between two pieces of data in terms of names, and do not limit sizes and included content of the two pieces of data, a time sequence relationship of obtaining the data, or the like.

For example, that the first communication apparatus obtains the second data in the second region may include/be replaced with: The first communication apparatus receives the indication information in the second region. For example, correspondingly, the second communication apparatus sends the second data in the second region, or the second communication apparatus sends the second data to the first communication apparatus in the second region.

For example, obtaining the second data may include/be replaced with: obtaining second DCI and the second data. For example, the second DCI is used to schedule the second data.

For example, sending the second data may include/be replaced with: sending the second DCI and the second data.

For example, the second data includes a second SIB1 (or SIB1bis). For example, the second DCI includes information indicating that the second data includes a SIB1 (or SIB1bis). It should be understood that the "first SIB1 (or SIB1bis) "and the "second SIB1 (or SIB1bis)" are merely used to distinguish between the two SIB1s (or SIB1bis) in terms of names, and do not limit sizes, included content, and the like of the two SIB1s (or SIB1bis).

For example, when the first communication apparatus obtains the second DCI and/or the second data, the first communication apparatus may be located in the second region. For example, the first communication apparatus may move from the first region to the second region. For example, the second region may belong to the first region set, or may belong to the second region set. This is not specifically limited in embodiments of this application.

Optionally, in the second region may include/be replaced with: for the second region.

Optionally, the second region belongs to the first cell.

Optionally, S1804 may be performed after S1803.

S1805: The first communication apparatus determines that the second data is retransmitted data or newly transmitted data.

For example, that the second data is retransmitted data or newly transmitted data may include in/be replaced with: whether the second data is retransmitted data or newly transmitted data, or whether transmission (for example, sending) corresponding to the second data is retransmission or new transmission, or whether transmission (for example, sending) corresponding to the second data is retransmission or new transmission.

Optionally, that the first communication apparatus determines that the second data is retransmitted data may include/be replaced with: The first communication apparatus may perform hybrid automatic repeat request (hybrid automatic repeat request, HARQ) combining and decoding on the first data and the second data.

Optionally, that the first communication apparatus determines that the second data is newly transmitted data may include/be replaced with: The first communication apparatus may separately decode the second data, or the first communication apparatus may not perform HARQ combining and decoding on the first data and the second data.

For example, the new transmission may include/be replaced with: initial transmission.

Optionally, that the first communication apparatus determines that the second data is retransmitted data or newly transmitted data may include (1) and/or (2).
(1) If the first data is the same as the second data, the first communication apparatus determines that the second data is retransmitted data.
(2) If the first data is different from the second data, the first communication apparatus determines that the second data is newly transmitted data.

For example, if the first region and the second region belong to a same region set, for example, both belong to the first region set or both belong to the second region set, it may be considered that the first data is the same as the second data.

For example, if the first region and the second region do not belong to a same region set, for example, the first region belongs to the first region set, and the second region belongs to the second region set, or the first region belongs to the second region set, and the second region belongs to the first region set, it may be considered that the first data is different from the second data.

Optionally, that the first communication apparatus determines that the second data is retransmitted data or newly transmitted data may include (3) and/or (4).

(3) If both the first region and the second region belong to the first region set or both belong to the second region set, the first communication apparatus determines that the second data is retransmitted data.

(4) If one of the first region and the second region belongs to the first region set, and the other of the first region and the second region belongs to the second region set, the first communication apparatus determines that the second data is newly transmitted data.

Optionally, the first region set and the second region set correspond to different SIB1s (or SIB1bis).

That the first region set and the second region set correspond to a same SIB1 (or SIB1bis) may be, for example, that the first region set and the second region set have a same SIB SIB1 (or SIB1bis) in a same time period, where the time period is, for example, a period of one or more SIB1s or a modification period.

For example, the SIB1 (or SIB1bis) corresponding to the first region set is different from the SIB1 (or SIB1bis) corresponding to the second region set. For example, content of the SIB1 (or SIB1bis) corresponding to the first region set is different from content of the SIB1 (or SIB1bis) corresponding to the second region set. For example, the SIB1 (or SIB1bis) corresponding to the first region set includes the scheduling information of the first system information, and the SIB1 (or SIB1bis) corresponding to the second region set does not include the scheduling information of the first system information. For example, that the SIB1 (or SIB1bis) corresponding to the first region set is different from the SIB1 (or SIB1bis) corresponding to the second region set may include: In a period of time (for example, in a period of one SIB1/SIB1bis or in a modification period), the SIB1 (or SIB1bis) corresponding to the first region set is different from the SIB1 (or SIB1bis) corresponding to the second region set.

For example, if the first region belongs to the second region set, and the second region belongs to the first region set, the first SIB1 (or SIB1bis) may not include the scheduling information of the first system information, and the second SIB1 (or SIB1bis) may include the scheduling information of the first system information.

Alternatively, an information item included in the SIB1 (or SIB1bis) corresponding to the first region set is different from an information item included in the SIB1 (or SIB1bis) corresponding to the second region set.

Alternatively, both the SIB1 (or SIB1bis) corresponding to the first region set and the SIB1 (or SIB1bis) corresponding to the second region set include the scheduling information of the first system information, but specific content of the scheduling information of the first system information included in the SIB1 (or SIB1bis) corresponding to the first region set is different from that of the scheduling information of the first system information included in the SIB1 (or SIB1bis) corresponding to the second region set.

It should be noted that whether the first communication apparatus obtains the SIB1 (or SIB1bis) corresponding to the first region set and the SIB1 (or SIB1bis) corresponding to the second region set is not limited in this application. Optionally, the first communication apparatus possibly obtains one or more of the SIB1 (or SIB1bis) corresponding to the first region set and the SIB1 (or SIB1bis) corresponding to the second region set.

It should be noted that this application does not limit whether the first communication apparatus obtains the SIB1 (or SIB1bis) corresponding to the first region set and the SIB1 (or SIB1bis) corresponding to the second region set, and also does not limit a relationship between a quantity of SIB1s (or SIB1bis) obtained in the first region set and a quantity of SIB1s (or SIB1bis) obtained in the second region set. Optionally, the first communication apparatus possibly obtains one or more of the SIB1 (or SIB1bis) corresponding to the first region set and the SIB1 (or SIB1bis) corresponding to the second region set.

For example, for content related to the first system information, refer to the descriptions in the embodiment in FIG. 12 and/or FIG. 17. Details are not described herein again.

Optionally, S1806: The first communication apparatus ignores the scheduling information of the first system information in the second region set, and/or the first communication apparatus does not receive the first system information in the second region set.

For example, for content related to S1806, content of ignoring the scheduling information of the first system information in the second region set, and content of not receiving the first system information in the second region set, refer to the descriptions in the embodiment in FIG. 12 and/or FIG. 17. Details are not described herein again.

Optionally, the second communication apparatus does not send the first system information in the second region set.

Optionally, if the SIB1 (or the SIB1bis) obtained by the first communication apparatus includes the scheduling information of the first system information, or if the first communication apparatus obtains the scheduling information of the first system information, the first communication apparatus ignores the scheduling information of the first system information in the second region set, and/or the first communication apparatus does not receive the first system information in the second region set.

For example, the first communication apparatus obtains the SIB1 (or the SIB1bis) in a region in the first region set, where the SIB1 (or the SIB1bis) includes the scheduling information of the first system information. Then, the first communication apparatus moves to a region in the second region set, and the first communication apparatus ignores the scheduling information of the first system information in the second region set, and/or the first communication apparatus does not receive the first system information in the second region set.

For example, the first communication apparatus obtains the SIB1 (or the SIB1bis) in a region in the second region set, and the SIB1 (or the SIB1bis) does not include the scheduling information of the first system information. Naturally, the first communication apparatus does not receive the first system information in the second region set.

Optionally, the second communication apparatus sends the first system information in the first region set. For example, the second communication apparatus may broadcast the first system information in the first region set. Optionally, S1807: The first communication apparatus receives the first system information in the first region set.

Optionally, when a second condition is satisfied, the first communication apparatus receives the first system information.

For example, that the first communication apparatus receives the first system information may include/be replaced with: The first communication apparatus receives (or starts to receive) the first system information in (or in) the first region set.

For example, that the second condition is satisfied may include/be replaced with: If the second condition is satisfied, it is determined that the second condition is satisfied, or the first communication apparatus satisfies the second condition, or the first communication apparatus determines that the second condition is satisfied.

For example, the second condition may include either of R1 and R2.

R1: Determine, based on the first SIB1 (or SIB1bis), that the system information changes.

For example, the first communication apparatus receives second information, and determines that the system information changes. The first communication apparatus may decode the first SIB1 (or SIB1bis), and determine that related content of the first system information changes. The second information may indicate that the system information changes, for example, is an SI change indication.

R2: The first information is not received in the first region, and the first information is received in the second region, where the first information indicates to send the first system information. It should be understood that "first information", "second information", and the like in embodiments of this application are merely used to distinguish information, and do not limit a receiving sequence, a sending sequence, and the like of the information.

The following provides descriptions by using an example in which the first region belongs to the second region set and the second region belongs to the first region set.

In a possible implementation, the first communication apparatus may receive the first system information when determining that the second condition is satisfied.

For example, the first communication apparatus receives the first information, and the first communication apparatus receives the first system information based on the scheduling information of the first system information in the second SIB1 (or SIB1bis).

For example, if the first communication apparatus receives the first information for the first time in a cell (for example, the second region in the first cell), the first communication apparatus immediately starts to obtain the second SIB1 (or SIB1bis), and receives the first system information based on the second SIB1 (or SIB1bis).

Alternatively, if the first communication apparatus receives the second information in a cell (for example, the second region of the first cell), the first communication apparatus may determine the scheduling information of the first system information based on the second SIB1 (or SIB1bis), to determine that the first system information changes.

For example, the first communication apparatus has not received the first information in the first region, and does not receive the first information until the first communication apparatus moves to the second region. In this case, the first communication apparatus may obtain the second SIB1 (or SIB1bis), and receive the first system information based on the second SIB1 (or SIB1bis). Alternatively, if the first communication apparatus has received the second information in the second region, the first communication apparatus may directly start to receive the first system information.

Optionally, S1806 may be performed first, and then S1807 may be performed, or S1807 may be performed first, and then S1806 may be performed. This is not limited herein.

It should be understood that S1807 may be used as an independent embodiment, and does not depend on other steps.

In this embodiment of this application, the second communication apparatus may send/associate different SIB1s (or SIB1bis) in different regions of a cell. The first communication apparatus may accurately identify, based on whether a region in which the SIB1 (or SIB1bis) or data is received belongs to a same region set, whether the received data is newly transmitted or retransmitted, so that the SIB1 (or SIB1bis) can be accurately decoded, and a success rate of decoding the SIB1 (or SIB1bis) is increased. Optionally, SIB1s or SIB1bis in different region sets may be different. In this way, the first communication apparatus may determine, based on whether the SIB1 (or the SIB1bis) carries the scheduling information of the first system information, whether the first system information needs to be monitored, to reduce a quantity of invalid monitoring times and save power.

It should be noted that the region in the embodiment in FIG. 18 may be replaced with an SSB or a beam or a region corresponding to an SSB or a region corresponding to a beam, to form a new embodiment. Optionally, the new embodiment may alternatively be combined with the embodiment in FIG. 18 to form another embodiment.

To increase a decoding success rate of the terminal device, an embodiment of this application further provides a communication method. In the method, a second communication apparatus may send/associate different SIB1s (or SIB1bis) in different SSBs of a cell. A first communication apparatus may accurately identify, based on a relationship between SSBs corresponding to received different SIB1s (or SIB1bis), whether HARQ combining and decoding can be performed on the SIB1s (or SIB1bis) sent/associated in different regions, thereby increasing a success rate of decoding the SIB1s (or SIB1bis) by the first communication apparatus. In addition, the first communication apparatus may also determine, based on content of the SIB1 (or SIB1bis), whether first system information needs to be monitored, thereby reducing a quantity of times of invalid monitoring and saving power.

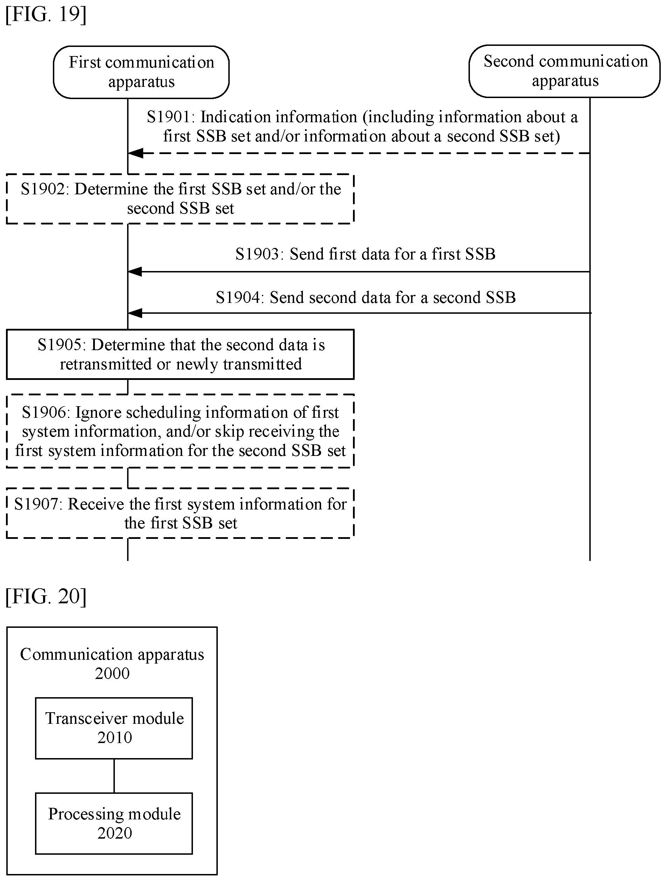

FIG. 19 is a diagram of a communication method according to an embodiment of this application.

Optionally, S1901: The first communication apparatus obtains indication information.

For example, for content related to S1901 and/or content related to the indication information, refer to the descriptions in the embodiment in FIG. 17. Details are not described herein again.

Optionally, S1902: The first communication apparatus determines the first SSB set and/or the second SSB set. It should be understood that "the first SSB set", "the second SSB set", and the like are merely used to distinguish between SSB sets, and do not limit a quantity of SSBs included in the SSB sets, index values of the SSBs, or the like.

For example, in a possible implementation, for any one or more of the content related to S1902, the content related to the first SSB set, and the content related to the second SSB set, refer to the descriptions in the embodiment in FIG. 17. Details are not described herein again. In addition, the first SSB set in this embodiment of this application may be further understood as an SSB in which scheduling information of the first system information is sent/received/exists/is indicated, or may be understood as that a SIB1 corresponding to the first SSB set indicates or includes scheduling information of the first system information. The second SSB set may be further understood as an SSB in which the scheduling information of the first system information is not sent/not received/does not exist/is not indicated, or may be understood as that the scheduling information of the first system information is not indicated or not included in a SIB1 corresponding to the second SSB set.

For example, in another possible implementation, the first SSB set and/or the second SSB set may be preconfigured, or may be defined in a protocol, or may be fixed. For example, in this case, the second communication apparatus may not need to indicate S1901 and S1902, that is, S1901 and S1902 are optional steps, and are shown by using dashed lines in FIG. 19.

S1903: The second communication apparatus sends first data for a first SSB. Correspondingly, the first communication apparatus obtains the first data for the first SSB.

For content of the first data, refer to the content of the first data described in FIG. 18. Sending the first data for the first SSB may be understood as sending the first data on a PDCCH monitoring occasion corresponding to the first SSB. Obtaining the first data for the first SSB may be understood as obtaining/receiving the first data on the PDCCH monitoring occasion corresponding to the first SSB.

S1904: The second communication apparatus sends second data for a second SSB. Correspondingly, the first communication apparatus obtains the second data for the second SSB.

For content of the second data, refer to the content of the second data described in FIG. 18. Sending the first data for the second SSB may be understood as sending the second data on a PDCCH monitoring occasion corresponding to the second SSB. Obtaining the second data for the second SSB may be understood as obtaining/receiving the second data on the PDCCH monitoring occasion corresponding to the second SSB.

Optionally, S1904 may be performed after S1903.

S1905: The first communication apparatus determines that the second data is retransmitted data or newly transmitted data.

For content that the second data is retransmitted data or newly transmitted data, refer to the content that the second data is retransmitted data or newly transmitted data described in FIG. 18. No repeated description is provided.

Optionally, that the first communication apparatus determines that the second data is retransmitted data or newly transmitted data may include (1) and/or (2).
(1) If the first data is the same as the second data, the first communication apparatus determines that the second data is retransmitted data.
(2) If the first data is different from the second data, the first communication apparatus determines that the second data is newly transmitted data.

For example, if the first SSB and the second SSB belong to a same SSB set, for example, both belong to the first SSB set or both belong to the second SSB set, it may be considered that the first data is the same as the second data.

For example, if the first SSB and the second SSB do not belong to a same region set, for example, the first SSB belongs to the first SSB set, and the second SSB belongs to the second SSB set, or the first SSB belongs to the second SSB set, and the second SSB belongs to the first SSB set, it may be considered that the first data is different from the second data.

Optionally, that the first communication apparatus determines that the second data is retransmitted data or newly transmitted data may include (3) and/or (4).

(3) If both the first SSB and the second SSB belong to the first SSB set or both belong to the second SSB set, the first communication apparatus determines that the second data is retransmitted data.

(4) If one of the first SSB and the second SSB belongs to the first SSB set, and the other region of the first SSB and the second SSB belongs to the second SSB set, the first communication apparatus determines that the second data is newly transmitted data.

Optionally, the first SSB set and the second SSB set correspond to different SIB1s (or SIB1bis).

That the first SSB set and the second SSB set correspond to a same SIB1 (or SIB1bis) may be, for example, that the first SSB set and the second SSB set have a same SIB1 (or SIB1bis) in a same time period, where the time period is, for example, a period of one or more SIB1s or a modification period. Alternatively, it may be understood that the first SSB set and the second SSB set have a same SIB1 (or SIB1bis) sent on a PDCCH monitoring occasion in a same time period.

For example, the SIB1 (or SIB1bis) corresponding to the first SSB set is different from the SIB1 (or SIB1bis) corresponding to the second SSB set. For example, content of the SIB1 (or SIB1bis) corresponding to the first SSB set is different from content of the SIB1 (or SIB1bis) corresponding to the second SSB set. For example, the SIB1 (or SIB1bis) corresponding to the first SSB set includes the scheduling information of the first system information, and the SIB1 (or SIB1bis) corresponding to the second SSB set does not include the scheduling information of the first system information. For example, that the SIB1 (or SIB1bis) corresponding to the first SSB is different from the SIB1 (or SIB1bis) corresponding to the second SSB may include: In a period of time (for example, in a period of one SIB1/SIB1bis or in a modification period), the SIB1 (or SIB1bis) corresponding to the first SSB is different from the SIB1 (or SIB1bis) corresponding to the second SSB.

For different content of the SIB1 (or SIB1bis) corresponding to the first SSB set and the SIB1 (or SIB1bis) corresponding to the second SSB set, refer to the foregoing descriptions of different content of the SIB1 (or SIB1bis) corresponding to the first region set and the SIB1 (or SIB1bis) corresponding to the second region set. No repeated description is provided.

For example, for content related to the first system information, refer to the descriptions in the embodiment in FIG. 12, FIG. 17, or FIG. 18. Details are not described herein again.

Optionally, S1906: The first communication apparatus ignores the scheduling information of the first system information for the second SSB set, and/or the first communication apparatus does not receive the first system information for the second SSB set.

For example, for content of ignoring the scheduling information of the first system information and content of not receiving the first system information, refer to the descriptions in the embodiment in FIG. 12, FIG. 17, or FIG. 18. Details are not described herein again. The second SSB set may be understood as a PDCCH monitoring occasion corresponding to the second SSB set.

Optionally, the second communication apparatus does not send the first system information for the second SSB set.

Optionally, S1907: The first communication apparatus receives the first system information for the first SSB set.

Optionally, when a second condition is satisfied, the first communication apparatus receives the first system information. For content of the second condition, refer to the content of the second condition in FIG. 18. No repeated description is provided.

Optionally, S1906 and S1907 may be performed in any sequence. For example, S1906 may be performed first, and then S1907 may be performed, or S1907 may be performed first, and then S1906 may be performed. This is not limited herein.

It should be understood that S1907 may be used as an independent embodiment, and does not depend on other steps.

In this embodiment of this application, the second communication apparatus may send/associate different SIB1s (or SIB1bis) in different SSBs of a cell. The first communication apparatus may accurately identify, based on whether a region in which the SIB1 (or SIB1bis) is received is associated with a same SSB set, whether the received data is newly transmitted or retransmitted, so that the SIB1 (or SIB1bis) can be accurately decoded, and a success rate of decoding the SIB1 (or SIB1bis) is increased. Optionally, SIB1s or SIB1bis in different region sets may be different. In this way, the first communication apparatus may determine, based on whether the SIB1 (or the SIB1bis) carries the scheduling information of the first system information, whether the first system information needs to be monitored, to reduce a quantity of invalid monitoring times and save power.

It should be noted that the SSB in the embodiment in FIG. 19 may be replaced with a beam, a region, a region corresponding to an SSB, or a region corresponding to a beam, to form a new embodiment. Optionally, the new embodiment may alternatively be combined with the embodiment in FIG. 19 to form another embodiment.

It should be understood that the SSB in embodiments of this application may be replaced with a synchronization signal.

It should be noted that different embodiments of this application or some steps (for example, any one or more steps) in different embodiments may be combined with each other to form a new embodiment. It should be noted that, a part of steps or any one or more steps in different embodiments may include an optional step in an embodiment, may include a mandatory step in an embodiment, or may include an optional step and a mandatory step in an embodiment. This is not limited in embodiments of this application.

It should be noted that, unless otherwise specified or there is a logic conflict, terms and/or descriptions in different embodiments are consistent and may be mutually referenced.

It should be noted that a sequence of steps in embodiments of this application is not limited in embodiments of this application. A sequence of determining different conditions in embodiments of this application is not limited in embodiments of this application. In addition, "after" and "when" in embodiments of this application do not strictly limit a time point.

It should be noted that terms, nouns, and the like in embodiments of this application are merely examples. With continuous evolution of standards, the terms, nouns, and the like may have other names. This is not limited in embodiments of this application.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 20 is a diagram of a structure of a communication apparatus according to an embodiment of this application. The communication apparatus may be configured to implement functions of the first communication apparatus or the second communication apparatus in the foregoing method embodiments. Therefore, beneficial effects of the foregoing method embodiments can also be achieved. In embodiments of this application, the communication apparatus may be the terminal device in any one of FIG. 5 to FIG. 11, or a software module or a hardware module in the terminal device. Alternatively, the communication apparatus may be the CN device and/or the network device in FIG. 5 to FIG. 7, or may be any satellite and/or satellite ground station in FIG. 8 to FIG. 11.

As shown in FIG. 20, the communication apparatus 2000 includes a transceiver module 2010 and a processing module 2020. The communication apparatus 2000 is configured to implement functions of the first communication apparatus or the second communication apparatus in any one of the foregoing communication methods, for example, may implement functions of the first communication apparatus or the second communication apparatus in the communication method shown in FIG. 12 or FIG. 9.

In a first embodiment, the communication apparatus 2000 is configured to implement functions of the first communication apparatus in the method embodiment shown in FIG. 12.

For example, the transceiver module 2010 is configured to receive indication information, and the processing module 2020 is configured to determine a first region set and/or a second region set. Optionally, the transceiver module 2010 is further configured to receive a SIB1, first system information, and the like, and the processing module 2020 may be further configured to perform content of S1204 and S1205.

In a second embodiment, the communication apparatus 2000 is configured to implement functions of the second communication apparatus in the method embodiment shown in FIG. 12.

For example, the processing module 2020 is configured to determine a first region set and/or a second region set, and the transceiver module 2010 is configured to send indication information. Optionally, the transceiver module 2010 is further configured to send a SIB1, first system information, and the like.

In a third embodiment, the communication apparatus 2000 is configured to implement functions of the first communication apparatus in the method embodiment shown in FIG. 17.

For example, the transceiver module 2010 is configured to receive indication information, and the processing module 2020 is configured to determine a first SSB set and/or a second SSB set. Optionally, the transceiver module 2010 is further configured to receive a SIB1, first system information, and the like, and the processing module 2020 may be further configured to perform content of S1704 and S1705.

In a fourth embodiment, the communication apparatus 2000 is configured to implement functions of the second communication apparatus in the method embodiment shown in FIG. 17.

For example, the processing module 2020 is configured to determine a first SSB set and/or a second SSB set, and the transceiver module 2010 is configured to send indication information. Optionally, the transceiver module 2010 is further configured to send a SIB1, first system information, and the like.

In a fifth embodiment, the communication apparatus 2000 is configured to implement functions of the first communication apparatus in the method embodiment shown in FIG. 18.

For example, the transceiver module 2010 is configured to receive first data and second data, and the processing module 2020 is configured to determine that the second data is retransmitted or newly transmitted. Optionally, the transceiver module 2010 is further configured to receive indication information, first system information, and the like, and the processing module 2020 may be further configured to perform content of S1802, S1806, and S1807.

In a sixth embodiment, the communication apparatus 2000 is configured to implement functions of the second communication apparatus in the method embodiment shown in FIG. 18.

For example, the transceiver module 2010 may be configured to send first data and second data under control of the processing module 2020. Optionally, the transceiver module 2010 may be further configured to send first system information under control of the processing module 2020.

In a seventh embodiment, the communication apparatus 2000 is configured to implement functions of the first communication apparatus in the method embodiment shown in FIG. 19.

For example, the transceiver module 2010 is configured to receive first data and second data, and the processing module 2020 is configured to determine that the second data is retransmitted or newly transmitted. Optionally, the transceiver module 2010 is further configured to receive indication information, first system information, and the like, and the processing module 2020 may be further configured to perform content of S1902, S1906, and S1907.

In an eighth embodiment, the communication apparatus 2000 is configured to implement functions of the second communication apparatus in the method embodiment shown in FIG. 20.

For example, the transceiver module 2010 may be configured to send first data and second data under control of the processing module 2020. Optionally, the transceiver module 2010 may be further configured to send first system information under control of the processing module 2020.

For more detailed descriptions of the transceiver module 2010 and the processing module 2020, directly refer to related descriptions in the method embodiment shown in FIG. 12, FIG. 17, or FIG. 18. No repeated description is provided.

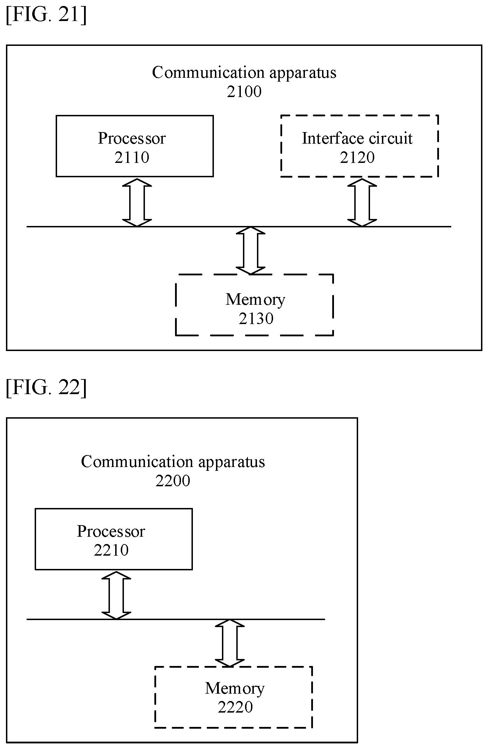

FIG. 21 is a diagram of a structure of a communication apparatus according to an embodiment of this application. The communication apparatus 2100 performs the communication method shown in any one of the foregoing embodiments, specifically, for example, the method performed by the first communication apparatus in FIG. 12, the method performed by the second communication apparatus in FIG. 12, the method performed by the first communication apparatus in FIG. 17, the method performed by the second communication apparatus in FIG. 17, the method performed by the first communication apparatus in FIG. 18, the method performed by the second communication apparatus in FIG. 18, the method performed by the first communication apparatus in FIG. 19, or the method performed by the second communication apparatus in FIG. 19.

As shown in FIG. 21, the communication apparatus 2100 includes a processor 2110. Optionally, the communication apparatus 2100 further includes an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to: store instructions executed by the processor 2110, or store input data required by the processor 2110 to run the instructions, or store data generated after the processor 2110 runs the instructions. The interface circuit 2120 and the memory 2130 are optional components, and are shown in dashed-line boxes in FIG. 21.

When the communication apparatus 2100 is configured to implement the method shown in FIG. 12, FIG. 17, FIG. 18, or FIG. 19, the processor 2110 is configured to implement a function of the processing module 2020, and the interface circuit 2121 is configured to implement a function of the transceiver module 2010.

When the foregoing communication apparatus is a chip used in a terminal, the chip in the terminal implements functions of the first communication apparatus in the foregoing method embodiments. The chip in the terminal receives information from another module (for example, a radio frequency module or an antenna) in the terminal, where the information is sent by a second communication apparatus (for example, a base station) to the terminal. Alternatively, the chip in the terminal sends information to another module (for example, a radio frequency module or an antenna) in the terminal, where the information is sent by the terminal to the second communication apparatus.

When the communication apparatus is a module used in a base station, the module in the base station implements functions of the second communication apparatus in the foregoing method embodiments. The module in the base station receives information from another module (for example, a radio frequency module or an antenna) in the base station, where the information is sent by the first communication apparatus to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

An embodiment of this application provides another example of a communication apparatus. The communication apparatus includes at least one processor. Optionally, the communication apparatus further includes at least one memory. The at least one processor is coupled to the at least one memory, the at least one memory is configured to store instructions, and when the instructions are executed by the at least one processor, the communication apparatus is enabled to perform the method in the foregoing embodiments. For example, the communication apparatus includes one processor and one memory. As shown in FIG. 22, a communication apparatus 2200 includes a processor 2210 and a memory 2220. The processor 2210 is coupled to the memory 2220. The memory 2220 stores instructions. When the instructions stored in the memory 2220 are executed by the processor 2210, the communication apparatus 2200 performs the communication method shown in any one of the foregoing embodiments, specifically, for example, the method performed by the first communication apparatus in FIG. 12, the method performed by the second communication apparatus in FIG. 12, the method performed by the first communication apparatus in FIG. 17, the method performed by the second communication apparatus in FIG. 17, the method performed by the first communication apparatus in FIG. 18, the method performed by the second communication apparatus in FIG. 18, the method performed by the first communication apparatus in FIG. 19, or the method performed by the second communication apparatus in FIG. 19. The memory 2220 is an optional component, and is shown by using a dashed box in FIG. 22.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor. The memory in this embodiment of this application may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in the base station or the terminal as discrete components.

All or a part of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a communication system. The communication system includes a first communication apparatus and a second communication apparatus. For example, the first communication apparatus may implement functions of the first communication apparatus shown in FIG. 12, and the second communication apparatus may implement functions of the second communication apparatus shown in FIG. 12. Alternatively, for example, the first communication apparatus may implement functions of the first communication apparatus shown in FIG. 17, and the second communication apparatus may implement functions of the second communication apparatus shown in FIG. 17. Alternatively, for example, the first communication apparatus may implement functions of the first communication apparatus shown in FIG. 18, and the second communication apparatus may implement functions of the second communication apparatus shown in FIG. 18. Alternatively, for example, the first communication apparatus may implement functions of the first communication apparatus shown in FIG. 19, and the second communication apparatus may implement functions of the second communication apparatus shown in FIG. 19.

An embodiment of this application provides a chip system. The chip system includes a processor and an interface. The processor is configured to: invoke and run instructions from the interface. When the processor executes the instructions, any one of the foregoing communication methods, for example, the communication method in any one of FIG. 12, FIG. 17, FIG. 18, or FIG. 19, is implemented.

An embodiment of this application provides a computer-readable storage medium. The computer-readable storage medium is configured to store a computer program or instructions. When the computer program or instructions are run, any one of the foregoing communication methods, for example, the communication method in any one of FIG. 12, FIG. 17, FIG. 18, or FIG. 19, is implemented.

An embodiment of this application provides a computer program product including instructions. When the computer program product runs on a computer, any one of the foregoing communication methods, for example, the communication method in any one of FIG. 12, FIG. 17, FIG. 18, or FIG. 19, is implemented.

In embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first communication apparatus, wherein the method comprises:
obtaining indication information, wherein the indication information comprises information about a first region set and/or information about a second region set, the first region set comprises a region in which first system information is sent, and the second region set comprises a region in which the first system information is not sent; and
determining the first region set and/or the second region set.

2. The method according to claim 1, wherein
the first region set and the second region set belong to a first cell.

3. The method according to claim 1 or 2, wherein
the indication information comprises N bits, the N bits are used to carry the information about the first region set and/or the information about the second region set, a first bit in the N bits indicates whether the first system information is sent or not in a first region, the first region belongs to the first region set or the second region set, different bits in the N bits correspond to different regions, and N is a positive integer.

4. The method according to claim 1 or 2, wherein the indication information comprises at least one of the following:
first index information, wherein the first index information indicates a start index and/or an end index of regions in the first region set;
second index information, wherein the second index information indicates a start index and/or an end index of regions in the second region set;
first quantity information, wherein the first quantity information indicates a quantity of regions in the first region set; or
second quantity information, wherein the second quantity information indicates a quantity of regions in the second region set.

5. The method according to any one of claims 1 to 4, wherein the method further comprises:
receiving the first system information in the first region set; and/or skipping receiving the first system information in the second region set, or
ignoring scheduling information of the first system information in the second region set.

6. The method according to claim 5, wherein before receiving the first system information in the first region set, the method further comprises:
determining that a first condition is satisfied, wherein the first condition comprises at least one of the following:
the first system information is not obtained in the first cell, and both the first region set and the second region set belong to the first cell;
it is determined that the first system information changes;
the first communication apparatus needs the first system information; or
the first communication apparatus enters the region in the first region set.

7. The method according to any one of claims 1 to 6, wherein
the first region set and the second region set correspond to a same system information block 1SIB1 and/or SIB1bis.

8. The method according to any one of claims 1 to 7, wherein the indication information is carried in one of the following information:
a first SIB1;
a first SIB1bis;
a first master information block MIB; or
first downlink control information DCI.

9. The method according to claim 8, wherein
the first SIB1, the first SIB1bis, the first MIB, or the first DCI is associated with the first cell, and both the first region set and the second region set belong to the first cell.

10. A communication method, applied to a first communication apparatus, wherein the method comprises:
obtaining indication information, wherein the indication information comprises information about a first synchronization signal block SSB set and/or information about a second SSB set, the first SSB set comprises an SSB associated with first system information, and the second SSB set comprises an SSB that is not associated with the first system information; and
determining the first SSB set, and/or determining the second SSB set.

11. The method according to claim 10, wherein the indication information
comprises N bits, the N bits are used to carry the information about the first SSB set and/or the information about the second SSB set, a first bit in the N bits indicates whether the first system information is sent or not for a first SSB, the first SSB belongs to the first SSB set or the second SSB set, different bits in the N bits correspond to different SSBs, and N is a positive integer.

12. The method according to claim 10 or 11, wherein the indication information comprises at least one of the following:
first index information, wherein the first index information indicates a start index and/or an end index of SSBs in the first SSB set;
second index information, wherein the second index information indicates a start index and/or an end index of SSBs in the second SSB set;
first quantity information, wherein the first quantity information indicates a quantity of SSBs in the first SSB set; or
second quantity information, wherein the second quantity information indicates a quantity of SSBs in the second SSB set.

13. The method according to any one of claims 10 to 12, wherein the method further comprises:
receiving the first system information in the first SSB set; and/or
skipping receiving the first system information in the second SSB set, or ignoring scheduling information of the first system information in the second SSB set.

14. The method according to claim 13, wherein before receiving the first system information in the first SSB set, the method further comprises:
determining that a first condition is satisfied, wherein the first condition comprises at least one of the following:
the first system information is not obtained in a first cell, and both the first SSB set and the second SSB set belong to the first cell;
it is determined that system information changes;
the first communication apparatus does not have a valid version of the first system information;
the first communication apparatus needs the first system information; or
the first communication apparatus enters a region corresponding to the first SSB set.

15. The method according to any one of claims 10 to 14, wherein
the first SSB set and the second SSB set correspond to a same SIB1 and/or SIB1bis.

16. A communication method, applied to a second communication apparatus, wherein the method comprises:
determining a first region set in which first system information is sent, and/or
determining a second region set in which the first system information is not sent; and
sending indication information, wherein the indication information comprises information about the first region set and/or information about the second region set.

17. The method according to claim 16, wherein the first region set and the second region set belong to a first cell.

18. The method according to claim 16 or 17, wherein the indication information comprises N bits, the N bits are used to carry the information about the first region set and/or the information about the second region set, a first bit in the N bits indicates whether the first system information is sent or not in a first region, the first region belongs to the first region set or the second region set, and different bits in the N bits correspond to different regions.

19. The method according to claim 16 or 17, wherein the indication information comprises at least one of the following:
first index information, wherein the first index information indicates a start index and/or an end index of regions in the first region set;
second index information, wherein the second index information indicates a start index and/or an end index of regions in the second region set;
first quantity information, wherein the first quantity information indicates a quantity of regions in the first region set; or
second quantity information, wherein the second quantity information indicates a quantity of regions in the second region set.

20. The method according to any one of claims 16 to 19, wherein the method further comprises:
sending the first system information in the first region set.

21. The method according to claim 20, wherein before sending the first system information in the first region set, the method further comprises:
sending second information, wherein the second information indicates that the first system information changes.

22. The method according to any one of claims 16 to 21, wherein the first region set and the second region set correspond to a same system information block 1SIB1 and/or SIB1bis.

23. The method according to any one of claims 16 to 22, wherein the indication information is carried in one of the following information:
a first SIB1;
a first SIB1bis;
a first master information block MIB; or
first downlink control information DCI.

24. The method according to claim 23, wherein the first SIB1, the first SIB1bis, the first MIB, or the first DCI is associated with the first cell, and both the first region set and the second region set belong to the first cell.

25. A communication method, applied to a second communication apparatus, wherein the method comprises:
determining a first synchronization signal SSB set, and/or determining a second SSB set, wherein the first SSB set comprises an SSB associated with first system information, and the second SSB set comprises an SSB that is not associated with the first system information; and
sending indication information, wherein the indication information comprises information about the first SSB set and/or information about the second SSB set.

26. The method according to claim 25, wherein the indication information comprises N bits, the N bits are used to carry the information about the first SSB set and/or the information about the second SSB set, a first bit in the N bits indicates whether the first system information is sent or not in a first SSB, the first SSB belongs to the first SSB set or the second SSB set, different bits in the N bits correspond to different SSBs, and N is a positive integer.

27. The method according to claim 25 or 26, wherein the indication information comprises at least one of the following:
first index information, wherein the first index information indicates a start index and/or an end index of SSBs in the first SSB set;
second index information, wherein the second index information indicates a start index and/or an end index of SSBs in the second SSB set;
first quantity information, wherein the first quantity information indicates a quantity of SSBs in the first SSB set; or
second quantity information, wherein the second quantity information indicates a quantity of SSBs in the second SSB set.

28. The method according to any one of claims 25 to 27, wherein the method further comprises:
sending the first system information in the first SSB set.

29. The method according to any one of claims 25 to 28, wherein
the first SSB set and the second SSB set correspond to a same SIB1 and/or SIB1bis.

30. A communication apparatus, comprising:
a module configured to perform the method according to any one of claims 1 to 9;
a module configured to perform the method according to any one of claims 10 to 15;
a module configured to perform the method according to any one of claims 16 to 24; or
a module configured to perform the method according to any one of claims 25 to 29.

31. A communication apparatus, comprising a processor, wherein the processor is configured to implement the method according to any one of claims 1 to 9, the method according to any one of claims 10 to 15, the method according to any one of claims 16 to 24, or the method according to any one of claims 25 to 29.

32. A computer-readable storage medium, wherein the storage medium stores a computer program or instructions, and when the computer program or the instructions are executed by a communication apparatus, the method according to any one of claims 1 to 9, the method according to any one of claims 10 to 15, the method according to any one of claims 16 to 24, or the method according to any one of claims 25 to 29 is implemented.
